(19) Europäisches Patentamt
European Patent Office
Office européen des brevets

(11) **EP 4 546 169 A1**

(12) **EUROPEAN PATENT APPLICATION**
published in accordance with Art. 153(4) EPC

(43) Date of publication:
30.04.2025 Bulletin 2025/18

(21) Application number: 23826314.9

(22) Date of filing: 17.06.2023

(51) International Patent Classification (IPC):
*G06F 16/9538* (2019.01)     *G06F 16/9535* (2019.01)

(52) Cooperative Patent Classification (CPC):
G06F 3/0483; G06F 3/0488; G06F 16/9535;
G06F 16/9538

(86) International application number:
PCT/CN2023/100894

(87) International publication number:
WO 2023/246666 (28.12.2023 Gazette 2023/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.06.2022 CN 202210724383

(71) Applicant: Huawei Technologies Co., Ltd.
Shenzhen, Guangdong 518129 (CN)

(72) Inventors:
• ZHANG, Baodan
  Shenzhen, Guangdong 518129 (CN)
• SHAO, Rongfang
  Shenzhen, Guangdong 518129 (CN)
• WANG, Junpeng
  Shenzhen, Guangdong 518129 (CN)

(74) Representative: Körber, Martin Hans
Mitscherlich PartmbB
Patent- und Rechtsanwälte
Karlstraße 7
80333 München (DE)

(54) **SEARCH METHOD AND ELECTRONIC DEVICE**

(57)     This application provides a search method and an electronic device. The method is applied to the electronic device. The method includes: obtaining a first key word entered by a user; sending a first search request including the first key word to a network device; receiving a search result set that is sent by the network device based on the first search request; displaying a first interface, where the first interface includes the search result set, the search result set includes a first search result related to a first web page and a second search result related to a second web page; receiving a first user operation; generating a first card set in response to the first user operation, where the first card set includes a first card, the first card includes first content in the first web page and second content in the second web page; and displaying a second interface after the first user operation, where the second interface includes the first card. In this application, a plurality of pieces of content in a plurality of web pages can be integrated together and provided to a user in a form of a card, to reduce a time for obtaining required content by the user, and improve search efficiency.

FIG. 4(A)

EP 4 546 169 A1

420

Xi'an travel route

421

Picture card

Website 111  Source aaa

4211A

4211

CONT.
FROM
FIG. 4(A)

Website 222
Source bbb

4212A

4212

422

Save

Slide left

TO FIG. 4(C)

FIG. 4(B)

(Cont. next page)

430

**Xi'an travel route**

431

**Video card**

Website 222  Source bbb — 4311A

4311

Website 111  Source aaa — 4312A

4312

432

Save

FIG. 4(C)

## Description

This application claims priority to Chinese Patent Application No. 202210724383.1, filed with the China National Intellectual Property Administration on June 24, 2022, and entitled "SEARCH METHOD AND ELECTRONIC DEVICE", which is incorporated herein by reference in its entirety.

## TECHNICAL FIELD

This application relates to the field of computer technologies, and in particular, to a search method and an electronic device.

## BACKGROUND

When a user enters a key word and performs searching by using a search function (for example, a search function provided by a search engine) of a terminal, the terminal returns a web page list including summary information of a plurality of web pages. To obtain required content, the user needs to tap the web pages included in the web page list one by one to view detailed content of the web pages. One web page usually includes a large amount of content, but content displayed by the terminal (especially a terminal such as a mobile phone with a small size) at a time is limited. Therefore, the user needs to spend a large amount of time searching for the required content, search efficiency is low, and user experience is poor.

## SUMMARY

This application discloses a search method and an electronic device, so that a plurality of pieces of content in at least one web page can be integrated and provided for a user, to reduce a time for obtaining required content by the user, and improve search efficiency.

According to a first aspect, this application provides a search method, applied to an electronic device, where the method includes: obtaining a first key word entered by a user; sending a first search request to a network device, where the first search request includes the first key word; receiving a search result set that is sent by the network device based on the first search request; displaying a first interface, where the first interface includes the search result set, the search result set includes a first search result and a second search result, the first search result is related to a first web page, and the second search result is related to a second web page; receiving a first user operation; generating a first card set in response to the first user operation, where the first card set includes a first card, the first card includes first content and second content, the first web page includes the first content, and the second web page includes the second content; and displaying a second interface after the first user operation, where the second interface includes the first card.

In the foregoing method, the electronic device may automatically extract the first content in the first search result, and the second content in the second search result, and display, by using the first card in the first card set, the extracted content, so that the user can quickly obtain, by using the first card set, content that is in the search result and that meets the search intention of the user, and does not need to tap a plurality of web page cards or browse a complete web page, thereby reducing user operations and time spent for sorting out the search result by the user, and greatly improving search efficiency.

In a possible implementation, both the first content and the second content are associated with the first key word.

For example, a similarity between the first content and the first key word is greater than or equal to a preset threshold, and a similarity between the second content and the first key word is greater than or equal to the preset threshold.

In the foregoing method, the content included in the first card in the first card set is related to the first key word entered by the user, so as to avoid a case in which content that is in the search result and that is unrelated to the first key word affects sorting-out of the search result by the user, thereby further improving search efficiency.

In a possible implementation, the method further includes: receiving a second user operation performed on the first search result in the first interface; displaying the first web page; receiving a third user operation; generating a second card set in response to the third user operation, where the second card set includes a second card, the first card includes third content and fourth content, and both the third content and the fourth content are content of the first web page; and displaying a third interface, where the third interface includes the second card.

In a possible implementation, the third content and the fourth content are associated with the first key word. For example, a similarity between the third content and the first key word is greater than or equal to a preset threshold, and a similarity between the fourth content and the first key word is greater than or equal to the preset threshold.

In the foregoing method, after the user opens the first web page, the electronic device may filter, from the first web page, the third content and the fourth content that are associated with the first key word, and display the filtered content by using the second card in the second card set, so that the user can quickly obtain, by using the second card set, content that is in the first web page and that meets the search intention of the user, and does not need to browse the complete first web page, thereby reducing user operations and time spent for sorting out the search result by the user, and improving search efficiency.

In a possible implementation, the method further includes: receiving a selection operation performed by the user on the first web page; obtaining first information based on the selection operation; receiving a fourth user operation; generating a third card in response to the fourth user operation, where the third card is a card in the second card set, the third card includes fifth content and sixth content, both the fifth content and the sixth content are content of the first web page, and both the fifth content and the sixth content are associated with the first information; and displaying a fourth interface, where the fourth interface includes the third card.

In the foregoing method, the user may select the first information in the first web page in a user-defined manner, and the electronic device may filter, from the first web page, the fifth content and the sixth content that are associated with the first information, and display the filtered content by using the third card in the second card set. User-defined selection of the web page content improves search flexibility, and the user does not need to manually search for the fifth content and the sixth content and add the content to a storage position such as a notepad or a note. This reduces user operations and time spent for sorting out the search result by the user, and makes use more convenient and quicker.

In a possible implementation, the first card set further includes a fourth card, the first card includes content of a first type, the fourth card includes content of a second type, and the first type is different from the second type.

For example, the first card includes content of a text type, and the fourth card includes content of a picture type.

In the foregoing method, content of different types may be displayed by using different cards, and the user does not need to manually arrange content of a same type together, so that browsing is more convenient and efficiency of obtaining required content by the user is improved. For example, the user may want to obtain only content of a text type. Therefore, the user may quickly obtain the required content by viewing only a card including the content of the text type.

In a possible implementation, the generating a first card set includes: receiving a fifth user operation; in response to the fifth user operation, selecting the first search result and the second search result from the search result set; and generating the first card set based on the first search result and the second search result.

In the foregoing method, the first search result and the second search result that are used to generate the first card set may be selected in a user-defined manner, so that a personalized requirement of the user can be met, and user experience is better.

In a possible implementation, when a similarity between the first content and the first key word is greater than a similarity between the second content and the first key word, the first content is located before the second content; or when the first search result is located before the second search result, the first content is located before the second content.

In the foregoing method, content that has a relatively high similarity with the first key word may be displayed at a relatively front position, and the user may preferentially see content that is predicted by the electronic device and that better meets the search intention of the user, so as to reduce a time for searching for required content by the user, thereby further improving search efficiency. Alternatively, a display sequence of content in a card may be consistent with a display sequence of a corresponding search result, and display effect of a search result set is unified with display effect of a card set, so that user browsing experience is better.

In a possible implementation, after the displaying a second interface, the method further includes: displaying a fifth interface, where the fifth interface includes a first control, the fifth interface is a desktop of the electronic device, a leftmost screen, or a favorites page of a first application, and the first control is associated with the first card set; receiving a sixth user operation performed on the first control; and displaying a sixth interface, where the sixth interface includes a fifth card in the first card set.

In a possible implementation, after the displaying a second interface, the method further includes: displaying a user interface of a gallery, where the user interface of the gallery includes a first picture, and the first picture is associated with the first card set; receiving a user operation used to recognize the first picture; and displaying the sixth interface.

In the foregoing method, the user may view the first card set again by using the desktop, the leftmost screen, the favorites folder of the first application, or the picture in the gallery. There are various obtaining manners, and flexibility is high. This increases a probability that the user views the first card set again, and function availability is high.

In a possible implementation, the method further includes: receiving a seventh user operation performed on the first content in the second interface; and displaying the first web page.

For example, the seventh user operation is a tap operation or a double-tap operation.

In the foregoing method, the user may operate any content in the first card, to view a web page to which the content belongs, and the user does not need to manually search for a search result corresponding to the content or tap the search result. This is more convenient for the user to use.

In a possible implementation, the method further includes: receiving an eighth user operation performed on the first card in the second interface; and deleting the first card in response to the eighth user operation; or receiving a ninth user operation performed on the first content in the second interface; and deleting the first content in response to the ninth user operation.

For example, the eighth user operation is a user operation of dragging up or down, or the eighth user operation is a tap operation performed on a delete control corresponding to the first card.

For example, the ninth user operation is a tap operation performed on a delete control corresponding to the first content.

In the foregoing method, the user may delete any card in the first card set, or the user may delete any content in the first card, to meet a personalized requirement of the user, thereby improving user experience.

In a possible implementation, the method further includes: receiving a tenth user operation performed on the first content in the second interface; modifying the first content to seventh content in response to the tenth user operation; and displaying the seventh content in the first card.

In the foregoing method, the user may modify any content in the first card, and the user does not need to manually copy the content to a position such as a notepad for modification. This reduces user operations, meets a personalized requirement of the user, and improves user experience.

In a possible implementation, the first content in the first card is located before the second content, and the method further includes: receiving an eleventh user operation performed on the first content in the second interface; adjusting display positions of the first content and the second content in the first card in response to the eleventh user operation; and displaying the adjusted first card, where the first content in the adjusted first card is located after the second content.

For example, the eleventh user operation is a user operation of dragging the first content to a position of the second content.

In the foregoing method, the user may adjust a display sequence of content in the first card, to meet a personalized requirement of the user, thereby improving user experience.

In a possible implementation, the first card set further includes a sixth card; and the method further includes: receiving a twelfth user operation performed on the first content in the second interface; and moving the first content from the first card to the sixth card in response to the twelfth user operation, where in response to the twelfth user operation, the first card does not include the first content, and the sixth card includes the first content.

For example, the twelfth user operation is a user operation of dragging left or right.

In the foregoing method, the user may move the first content in the first card to another card in the first card set, to meet a personalized requirement of the user, thereby improving user experience.

In a possible implementation, the first card set further includes a seventh card; and the method further includes: receiving a thirteenth user operation performed on the first card in the second interface; and combining the first card and the seventh card into an eighth card in response to the thirteenth user operation, where the eighth card includes content in the first card and content in the seventh card.

For example, the thirteenth user operation is a user operation of dragging the first card to a position of the seventh card.

In the foregoing method, the user may combine any two cards in the first card set, to meet a personalized requirement of the user, thereby improving user experience.

In a possible implementation, the method further includes: receiving a fourteenth user operation; displaying a seventh interface, where the seventh interface includes content of a card in the first card set; receiving a fifteenth user operation performed on the seventh interface; obtaining eighth content included in a ninth card in the first card set based on the fifteenth user operation; receiving a sixteenth user operation; generating a tenth card in response to the sixteenth user operation, where the tenth card is a card in the first card set, and the tenth card includes the eighth content; and displaying an eighth interface, where the eighth interface includes the tenth card.

In the foregoing method, the user may select, from the first card set, the eighth content included in the ninth card, and generate the tenth card in the first card set based on the selected content, to meet a personalized requirement of the user. In addition, the user does not need to manually add the eighth content to the tenth card, to reduce user operations, thereby improving user experience.

In a possible implementation, the method further includes: saving information about the first card set, where the information about the first card set includes at least one of the following: the first key word, a quantity of cards included in the first card set, content included in a card in the first card set, a display position of the first card in the first card set, display of the first content in the first card, and information about the first web page to which the first content belongs.

According to a second aspect, this application provides another search method, applied to an electronic device, where the method includes: displaying a first web page; obtaining first information related to the first web page, where the first information is a first key word used for searching for the first web page, or the first information is information obtained based on a selection operation performed by a user on the first web page; receiving a first user operation; generating a first card set in response to the first user operation, where the first card set includes a first card, the first card includes first content and second content, both the first content and the second content are content of the first web page, and both the first content and the second content are associated with the first information; and displaying a first interface after the first user operation, where the first interface includes the first card.

In the foregoing method, the electronic device may obtain the first key word (first information) entered by the user during search or the first information selected by the user in the first web page in a user-defined manner, automatically filter, from the first web page, the first content and second content that are associated with the first information, and display the filtered content by using the first card in the first card set, so that the user can quickly obtain, by using the first card set, content that is in the first web page and that meets the search intention of the user, and does not need to browse the complete first web page, thereby reducing user operations and time spent for sorting out the search result by the user, and improving search efficiency.

In a possible implementation, the displaying a first web page includes: obtaining the first key word entered by the user; sending a first search request to a network device, where the first search request includes the first key word; receiving a search result set that is sent by the network device based on the first search request; displaying a second interface, where the second interface includes the search result set, the search result set includes a first search result and a second search result, the first search result is related to the first web page, and the second search result is related to a second web page; receiving a second user operation performed on the first search result; and displaying the first web page in response to the second user operation.

In a possible implementation, that both the first content and the second content are associated with the first information includes: A similarity between the first content and the first key word is greater than or equal to a preset threshold, and a similarity between the second content and the first key word is greater than or equal to the preset threshold.

In a possible implementation, when the first information is the information obtained based on the selection operation performed by the user on the first web page, the first information includes at least one of a text, a picture, audio, and a video in the first web page.

In the foregoing method, the user may select the first information in the first web page in a user-defined manner, to improve search flexibility. In addition, the user does not need to manually search, in the first web page, for the first content and the second content that are associated with the first information, and add the content to a storage position such as a notepad or a note. This reduces user operations and time spent for sorting out the search result by the user, and makes use more convenient and quicker.

In a possible implementation, when the first information includes the at least one of the text, the picture, the audio, and the video in the first web page, the first card set further includes a second card, the first card includes content of a first type, the second card includes content of a second type, and the first type is different from the second type.

For example, the first card includes content of an audio type, and the second card includes content of a video type.

In the foregoing method, content of different types may be displayed by using different cards, and the user does not need to manually arrange content of a same type together, so that browsing is more convenient and efficiency of obtaining required content by the user is improved. For example, the user may want to obtain only content of a video type. Therefore, the user may quickly obtain the required content by viewing only a card including the content of the video type.

In a possible implementation, when a similarity between the first content and the first information is greater than a similarity between the second content and the first information, the first content in the first card is located before the second content; or when the first content in the first web page is located before the second content, the first content in the first card is located before the second content.

In the foregoing method, content that has a relatively high similarity with the first information may be displayed at a relatively front position, and the user may preferentially see content that is predicted by the electronic device and that better meets the search intention of the user, so as to reduce a time for searching for required content by the user, thereby further improving search efficiency. Alternatively, a display sequence of content in a card may be consistent with a display sequence of the content in a web page, and display effect of web pages is unified with display effect of a card set, so that user browsing experience is better.

In a possible implementation, after the displaying a first interface, the method further includes: displaying a third interface, where the third interface includes a first control, the third interface is a desktop of the electronic device, a leftmost screen, or a favorites page of a first application, and the first control is associated with the first card set; receiving a third user operation performed on the first control; and displaying a fourth interface, where the fourth interface includes a third card in the first card set.

In a possible implementation, after the displaying a first interface, the method further includes: displaying a user interface of a gallery, where the user interface of the gallery includes a first picture, and the first picture is associated with the first card set; receiving a user operation used to recognize the first picture; and displaying the fourth interface.

In the foregoing method, the user may view the first card set again by using the desktop, the leftmost screen, the favorites folder of the first application, or the picture in the gallery. There are various obtaining manners, and flexibility is high. This increases a probability that the user views the first card set again, and function availability is high.

In a possible implementation, the method further includes: receiving a fourth user operation performed on the first content in the first interface; and displaying the first web page.

For example, the fourth user operation is a tap operation or a double-tap operation.

In the foregoing method, the user may operate any content in the first card, to view a web page to which the content belongs, and the user does not need to manually search for a search result corresponding to the content or tap the search result. This is more convenient for the user to use.

In a possible implementation, the method further includes: receiving a fifth user operation performed on the first card in the first interface; and deleting the first card in response to the fifth user operation; or receiving a sixth user operation performed on the first content in the first interface; and deleting the first content in response to the sixth user operation.

For example, the fifth user operation is a user operation of dragging up or down, or the fifth user operation is a tap operation performed on a delete control corresponding to the first card.

For example, the sixth user operation is a tap operation performed on a delete control corresponding to the first content.

In the foregoing method, the user may delete any card in the first card set, or the user may delete any content in the first card, to meet a personalized requirement of the user, thereby improving user experience.

In a possible implementation, the method further includes: receiving a seventh user operation performed on the first content in the first interface; modifying the first content to third content in response to the seventh user operation; and displaying the third content in the first card.

In the foregoing method, the user may modify any content in the first card, and the user does not need to manually copy the content to a position such as a notepad for modification. This reduces user operations, meets a personalized requirement of the user, and improves user experience.

In a possible implementation, the first content in the first card is located before the second content, and the method further includes: receiving an eighth user operation performed on the first content in the first interface; adjusting display positions of the first content and the second content in the first card in response to the eighth user operation; and displaying the adjusted first card, where the first content in the adjusted first card is located after the second content.

For example, the eighth user operation is a user operation of dragging the first content to a position of the second content.

In the foregoing method, the user may adjust a display sequence of content in the first card, to meet a personalized requirement of the user, thereby improving user experience.

In a possible implementation, the first card set further includes a fourth card; and the method further includes: receiving a ninth user operation performed on the first content in the first interface; and moving the first content from the first card to the fourth card in response to the ninth user operation, where in response to the ninth user operation, the first card does not include the first content, and the fourth card includes the first content.

For example, the ninth user operation is a user operation of dragging left or right.

In the foregoing method, the user may move the first content in the first card to another card in the first card set, to meet a personalized requirement of the user, thereby improving user experience.

In a possible implementation, the first card set further includes a fifth card; and the method further includes: receiving a tenth user operation performed on the first card in the first interface; and combining the first card and the fifth card into a sixth card in response to the tenth user operation, where the sixth card includes content in the first card and content in the fifth card.

For example, the tenth user operation is a user operation of dragging the first card to a position of the fifth card.

In the foregoing method, the user may combine any two cards in the first card set, to meet a personalized requirement of the user, thereby improving user experience.

In a possible implementation, the method further includes: receiving an eleventh user operation; displaying a fifth interface, where the fifth interface includes content of a card in the first card set; receiving a twelfth user operation performed on the fifth interface; obtaining fourth content included in a seventh card in the first card set based on the twelfth user operation; receiving a thirteenth user operation; generating an eighth card in response to the thirteenth user operation, where the eighth card is a card in the first card set, and the eighth card includes the fourth content; and displaying a sixth interface, where the sixth interface includes the eighth card.

In the foregoing method, the user may select, from the first card set, the fourth content included in the seventh card, and generate the eighth card in the first card set based on the selected content, to meet a personalized requirement of the user. In addition, the user does not need to manually add the fourth content to the eighth card, to reduce user operations, thereby improving user experience.

In a possible implementation, the method further includes: saving information about the first card set, where the information about the first card set includes at least one of the following: information about the first web page, the first information, a quantity of cards included in the first card set, content included in a card in the first card set, a display position of the first card in the first card set, and display of the first content in the first card.

According to a third aspect, this application provides an electronic device, including a transceiver, a processor, and a memory, where the memory is configured to store a computer program, and the processor invokes the computer program to perform the search method in any possible implementation of any one of the foregoing aspects.

According to a fourth aspect, this application provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the search method in any possible implementation of any one of the foregoing aspects.

According to a fifth aspect, this application provides a computer storage medium, where the computer storage medium stores a computer program, and when the computer program is executed by a processor, the search method in any possible implementation of any one of the foregoing aspects is performed.

According to a sixth aspect, this application provides a computer program product, where when the computer program product is run on an electronic device, the electronic device is enabled to perform the search method in any possible implementation of any one of the foregoing aspects.

According to a seventh aspect, this application provides an electronic device, where the electronic device includes the method or the apparatus described in any implementation of this application. For example, the electronic device is a chip.

## BRIEF DESCRIPTION OF DRAWINGS

The following describes the accompanying drawings used in embodiments of this application.

FIG. 1A is a diagram of an architecture of a search system according to an embodiment of this application;
FIG. 1B is a diagram of interaction of a search system according to an embodiment of this application;
FIG. 2A is a diagram of a hardware structure of an electronic device according to an embodiment of this application;
FIG. 2B is a diagram of a software architecture of an electronic device according to an embodiment of this application;
FIG. 3 is a diagram of a user interface in an implementation according to an embodiment of this application;
FIG. 4(A), FIG. 4(B), and FIG. 4(C) are a diagram of a user interface in another implementation according to an embodiment of this application;
FIG. 5A is a diagram of a user interface in another implementation according to an embodiment of this application;
FIG. 5B is a diagram of a user interface in another implementation according to an embodiment of this application;
FIG. 6 is a diagram of a user interface in another implementation according to an embodiment of this application;
FIG. 7A is a diagram of a user interface in another implementation according to an embodiment of this application;
FIG. 7B is a diagram of a user interface in another implementation according to an embodiment of this application;
FIG. 8 is a diagram of a user interface in another implementation according to an embodiment of this application;
FIG. 9 is a diagram of a user interface in another implementation according to an embodiment of this application;
FIG. 10 is a diagram of a user interface in another implementation according to an embodiment of this application;
FIG. 11 is a diagram of a user interface in another implementation according to an embodiment of this application;
FIG. 12 is a diagram of a user interface in another implementation according to an embodiment of this application;
FIG. 13(A), FIG. 13(B), FIG. 13(C), and FIG. 13(D) are a diagram of a user interface in another implementation according to an embodiment of this application;
FIG. 14 is a diagram of a user interface in another implementation according to an embodiment of this application;
FIG. 15(A) and FIG. 15(B) are a diagram of a user interface in another implementation according to an embodiment of this application;
FIG. 16 is a diagram of a user interface in another implementation according to an embodiment of this application;
FIG. 17A is a diagram of a user interface in another implementation according to an embodiment of this application;
FIG. 17B(A), FIG. 17B(B), and FIG. 17B(C) are a diagram of a user interface in another implementation according to an embodiment of this application;
FIG. 18 is a diagram of a user interface in another implementation according to an embodiment of this application;
FIG. 19A(A), FIG. 19A(B), and FIG. 19A(C) are a diagram of a user interface in another implementation according to an embodiment of this application;
FIG. 19B is a diagram of a user interface in another implementation according to an embodiment of this application;
FIG. 20(A), FIG. 20(B), FIG. 20(C), and FIG. 20(D) are a diagram of a user interface in another implementation according to an embodiment of this application;
FIG. 21(A), FIG. 21(B), and FIG. 21(C) are a diagram of a user interface in another implementation according to an embodiment of this application;
FIG. 22(A), FIG. 22(B), and FIG. 22(C) are a diagram of a user interface in another implementation according to an embodiment of this application;
FIG. 23 is a diagram of a user interface in another implementation according to an embodiment of this application;
FIG. 24(A), FIG. 24(B), and FIG. 24(C) are a diagram of a user interface in another implementation according to an embodiment of this application;
FIG. 25A(A), FIG. 25A(B), and FIG. 25A(C) are a diagram of a user interface in another implementation according to an embodiment of this application;

FIG. 25B is a diagram of a user interface in another implementation according to an embodiment of this application;

FIG. 25C is a diagram of a user interface in another implementation according to an embodiment of this application;

FIG. 26(A), FIG. 26(B), and FIG. 26(C) are a diagram of a user interface in another implementation according to an embodiment of this application;

FIG. 27A is a diagram of a user interface in another implementation according to an embodiment of this application;

FIG. 27B is a diagram of a user interface in another implementation according to an embodiment of this application;

FIG. 28 is a schematic flowchart of a search method according to an embodiment of this application;

FIG. 29A and FIG. 29B are a diagram of a process of obtaining a first content set according to an embodiment of this application; and

FIG. 30 is a schematic flowchart of another search method according to an embodiment of this application.

## DESCRIPTION OF EMBODIMENTS

The following describes the technical solutions in embodiments of this application with reference to the accompanying drawings. In the descriptions of embodiments of this application, unless otherwise stated, "/" represents the meaning of "or". For example, A/B may represent A or B. "And/or" in the text merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

Hereinafter, the terms "first" and "second" are used only for descriptive purposes, and cannot be understood as indicating or implying relative importance or implicitly indicating a quantity of indicated technical features. Therefore, features defined by "first" and "second" may explicitly or implicitly include one or more of the features. In the descriptions of embodiments of this application, "a plurality of" means two or more unless otherwise specified.

When using a search function (for example, a search function provided by a search engine) of a terminal, a user expects to obtain content related to a key word for search (search key word for short), where the content may include a segment of text, a picture, a video, or content of another type in a web page. However, the search function returns a web page list including summary information (which may be referred to as web page cards) of a plurality of web pages, where dynamic effect of key content of the web pages may be output in the web page cards. To obtain web page content that meets a search intention, the user usually needs to tap the plurality of web page cards included in the web page list to view detailed content of a corresponding web page. A web page usually includes a large amount of content, and content displayed by a terminal (especially a terminal such as a small-sized mobile phone) at a time is limited. Although a key word in the web page content may be highlighted (for example, highlighted), the user still needs to browse a complete web page to check whether content such as a text, a picture, or a video that meets the search intention exists. In other words, the user needs to perform operations for a plurality of times and spend a lot of time searching for content that meets the search intention, resulting in low search efficiency and poor user experience.

This application provides a search method and an electronic device. After receiving a key word (which may be referred to as a search key word for short) entered by a user, the electronic device may obtain at least one web page based on the key word, and generate at least one card based on the at least one web page. The at least one card may include content that is related to the search key word and that is in the at least one web page. The at least one card may be provided for the user to view, modify, and save. It may be understood that the electronic device automatically compares and arranges the content of the at least one web page, and integrates a plurality of pieces of content related to the search key word in a form of at least one card (a card set for short), so that the user quickly obtains, by using the card set, content/required content that meets a search intention, thereby reducing time for the user to arrange a search result, improving search efficiency, and improving user experience.

The method may be applied to the field of web page search. The web page search may be searching the Internet for search results (related to web pages) related to the search key word by using a specific algorithm and policy based on the search key word entered by the user, and then sorting the search results and displaying a search result list (which may also be referred to as a search result set, or may also be referred to as a web page list). The search result list may include summary information (which may be referred to as web page cards) of the search results. The user may operate any web page card to view a content page of a corresponding web page (used to display detailed content of the web page). This is not limited thereto. The method may be further applied to another search field. To be specific, the search results may not be related to web pages, for example, related to a commodity. This is not limited in this application. For ease of description, this application is described by using an example in which search results are related to web pages (this may be briefly referred to as that search results are web pages in the following).

A touch operation in this application may include but is not limited to a plurality of forms such as tap, double-tap, touch and hold, touch and hold with a single finger, touch and hold with a plurality of fingers, slide with a single finger, slide with a plurality of fingers, and slide with a knuckle. The touch operation in the slide form may be referred to as a slide operation for short. The slide operation is, for example, but is not limited to, sliding left or right, sliding up or down, or sliding to a first specific position. A track of the slide operation is not limited in this application. In some implementations, the touch operation may be performed on a second specific position on the electronic device. The specific position may be located on a display of an electronic device, for example, a position of a control such as an icon or an edge of the display, or the specific position may be located on another position such as a side or a back of the electronic device, for example, a position of a button such as a volume button or a power button. The specific position is preset by the electronic device, or the specific position is determined by the electronic device in response to a user operation.

A drag operation in this application is a touch operation. A drag operation performed on a control may be an operation of keeping touching the control and sliding the control, for example, but not limited to a plurality of forms such as drag with a single finger, drag with a plurality of fingers, and drag with a knuckle. Similar to the slide operation, the drag operation is, for example, but is not limited to, dragging left or right, dragging up or down, or dragging to a specific position. A track of the drag operation is not limited in this application.

A screen capture operation in this application may be used to select display content in any area on the display of the electronic device, and save the display content into the electronic device in a form of a picture. The display content may include at least one type of content, for example, text content, picture content, and video content. The screen capture operation may be, but is not limited to, a touch operation, a voice input, a motion posture (for example, a gesture), a brain wave, or the like. For example, the screen capture operation is sliding with a knuckle, or the screen capture operation is a touch operation that is performed on both the power button and the volume button of the electronic device.

The card set in this application may include at least one card. The card in this application may be a control displayed in a form of a card. In a specific implementation, the card may alternatively be displayed in another form such as a floating box. A specific display form of the card is not limited in this application. On one hand, the card may be used to display web page content, so as to provide the web page content for a user to browse. On the other hand, the electronic device may receive a user operation on the card, so as to implement a plurality of operations such as viewing an original web page to which the web page content belongs, moving, editing, deleting, and adding.

The web page card in this application may be a control that displays summary information of a search result (a web page) in a form of a card. In a specific implementation, the web page card may alternatively be displayed in another form such as a text box. This is not limited in this application. The summary information of the web page is, for example, but is not limited to, web page content displayed at the top of the web page, and content that includes the search key word and that is in the web page.

The following describes a search system 10 in embodiments of this application.

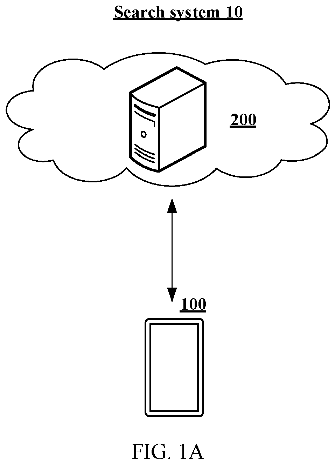

FIG. 1A shows an example of a diagram of an architecture of the search system 10.

As shown in FIG. 1A, the search system 10 may include an electronic device 100 and a network device 200. The electronic device 100 may communicate with the network device 200 in a wired (for example, a universal serial bus (universal serial bus, USB), a twisted pair, a coaxial cable, or an optical fiber) and/or wireless (for example, a wireless local area network (wireless local area networks, WLAN), Bluetooth, or a cellular communication network) manner.

The electronic device 100 may be a mobile phone, a tablet computer, a handheld computer, a desktop computer, a laptop computer, an ultra-mobile personal computer (ultra-mobile personal computer, UMPC), a netbook, a cellular phone, a personal digital assistant (personal digital assistant, PDA), a smart home device such as a smart television or a projector, a wearable device such as a smart band, a smart watch, or smart glasses, an extended reality (extended reality, XR) device such as augmented reality (augmented reality, AR), virtual reality (virtual reality, VR), or mixed reality (mixed reality, MR), or a vehicle-mounted device. A specific type of the electronic device is not specially limited in embodiments of this application. In an implementation, the electronic device 100 may support a plurality of applications, for example, but not limited to: applications such as photographing, image management, image processing, word processing, phone, email, instant messaging, network communication, media playback, positioning, and time management.

The network device 200 may include at least one server. In an implementation, any server may be a hardware server. In an implementation, any server may be a cloud server. In an implementation, the network device 200 may be a Linux server, a Windows server, or another server device that can be accessed by a plurality of devices at the same time. In an implementation, the network device 200 may be a server cluster including a plurality of regions, a plurality of equipment rooms, and a plurality of servers. In an implementation, the network device 200 may support a message storage and distribution function, a multi-user access management function, a large-scale data storage function, a large-scale data processing function, a data redundancy backup function, and the like.

In an implementation, the electronic device 100 may communicate with the network device 200 based on a browser/server (browser/server, B/S) architecture, or may communicate with the network device 200 based on a client/server (client/server, C/S) architecture. The electronic device 100 may receive a key word entered by a user, and request, from the network device 200, to obtain a search result related to the key word. The electronic device 100 may display a search result obtained from the network device 200, for example, display a web page list.

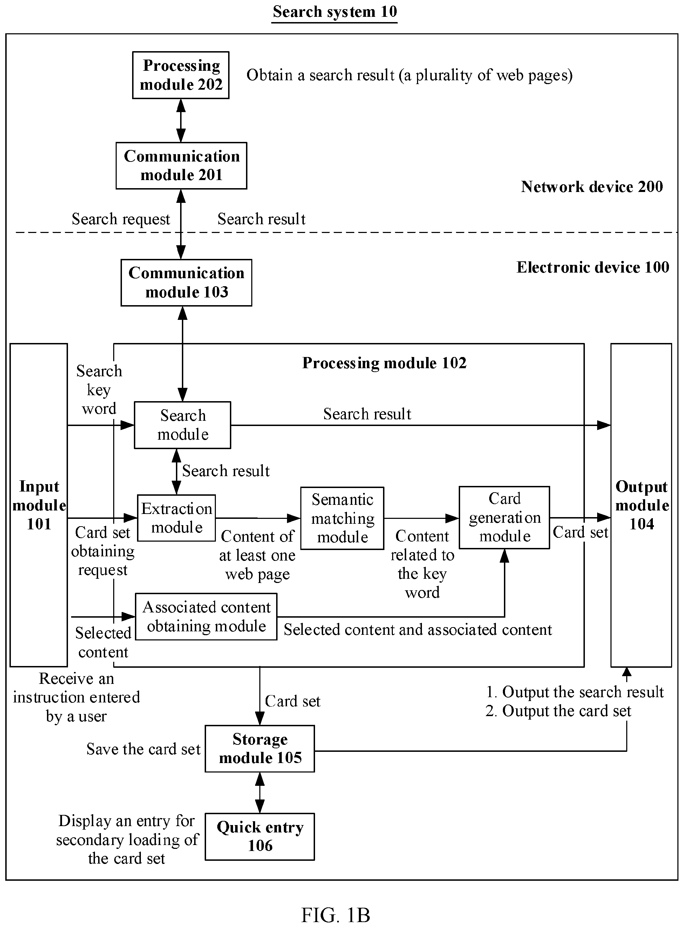

FIG. 1B is an example of a diagram of interaction of a search system 10.

As shown in FIG. 1B, the electronic device 100 in the search system 10 may include an input module 101, a processing module 102, a communication module 103, an output module 104, a storage module 105, and a quick entry 106. The network device 200 in the search system 10 may include a communication module 201 and a processing module 202.

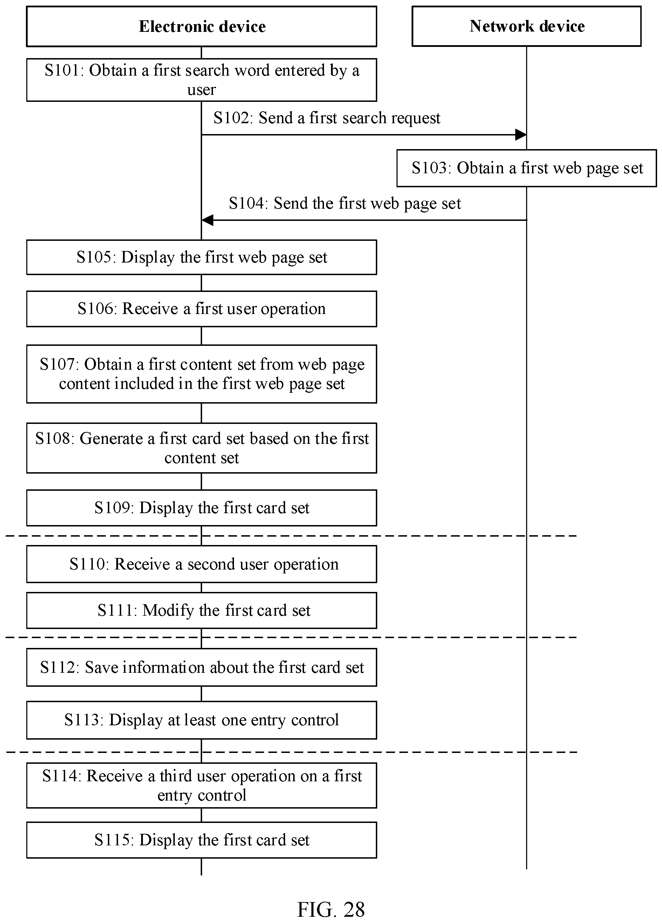

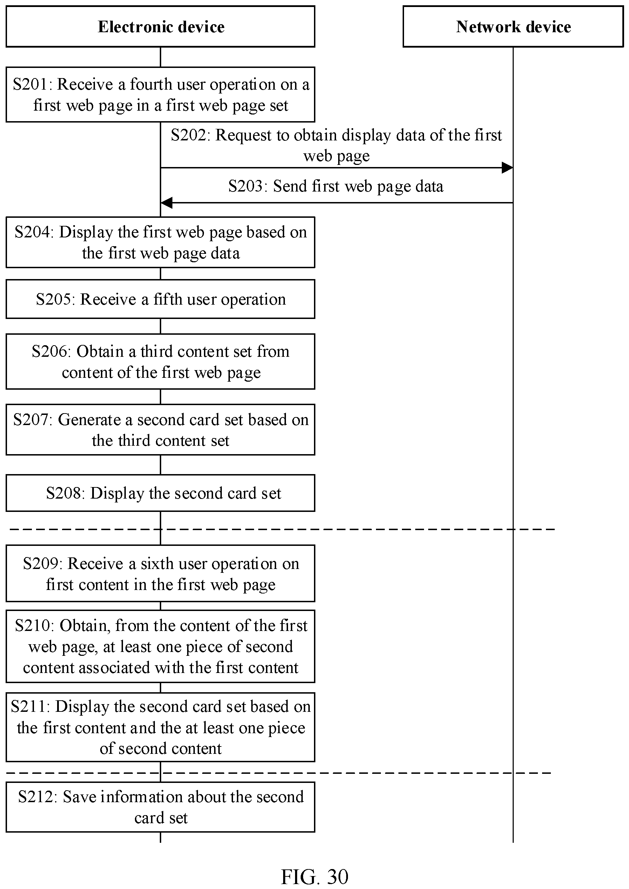

The input module 101 is configured to receive an instruction entered by a user, for example, a search key word entered by the user, a card set obtaining request entered by the user, or content selected by the user in a web page content page (selected content for short). The processing module 102 is used by the electronic device 100 to perform actions such as determining, analysis, and operation, and send an instruction to another module, so as to coordinate the modules to sequentially execute a corresponding program, for example, perform the methods shown in FIG. 28 and FIG. 30. The communication module 103 is configured to transmit information between the electronic device 100 and the network device 200 (implemented by the communication module 201). The output module 104 is configured to output information to the user, for example, display a search result or a card set to the user by using a display.

In an implementation, after receiving the search key word entered by the user, the input module 101 may send the search key word to a search module in the processing module 102, the search module may send the search key word to the communication module 201 of the network device by using the communication module 103, and the communication module 201 may send a search request including the search key word to the processing module 202 of the network device. The processing module 202 may obtain a search result (that is, a plurality of web pages related to the search key word) based on the search request, and send the search result to the communication module 103 by using the communication module 201. The communication module 103 may send the search result to the search module in the processing module 102, and the search module may send the search result to the output module 104. The output module 104 may output the search result, for example, display a web page list.

In an implementation, after receiving the card set obtaining request input by the user, the input module 101 may send the card set obtaining request to an extraction module in the processing module 102. After receiving the card set obtaining request, the extraction module may obtain the foregoing search result from the search module, and extract content of at least one web page from the search result. For example, content of web pages ranking in the first N positions (N is a positive integer) is extracted from a plurality of web pages obtained through searching, or content of a web page selected by the user from the plurality of web pages obtained through searching is extracted. Then, the extraction module may send the content of the at least one web page to a semantic matching module in the processing module 102, and the semantic matching module may select, from the content of the at least one web page, content related to the search key word. The semantic matching module may send the foregoing content related to the search key word to a card generation module in the processing module 102, and the card generation module may generate a card set based on the content. For example, different cards in the card set include different types of content, and specifically include: a card including a text, a card including a static picture, a card including a dynamic picture, a card including a video, a card including audio, and the like. The card generation module may send the generated card set to the output module 104, and the output module 104 may output the card set, for example, display the card set.

In an implementation, after receiving the content selected by the user in the web page content page, the input module 101 may send the selected content to an associated content obtaining module in the processing module 102. The associated content obtaining module may obtain content related to the selected content (which may be referred to as associated content corresponding to the selected content) from the web page content page, and send the selected content and the associated content to the card generation module. The card generation module may generate at least one card based on the selected content and the associated content. For example, the card includes the selected content and the corresponding associated content. The at least one card may belong to the foregoing card set. For example, the output module 104 may add and display the at least one card in the card set.

The card set generated by the processing module 102 may be sent to the storage module 105 for storage. In an implementation, card set information stored in the storage module 105 may include but is not limited to at least one of the following: identification information of the card set, the search key word, a quantity of cards included in the card set, a display position of the card in the card set, a card name, web page content such as a text, a picture, and a video included in the card, a display position of the web page content in the card, address information of a web page to which the web page content in the card set belongs, and the like.

The quick entry 106 may be used to display an entry for secondary loading of the card set. For example, after the output module 104 outputs the card set, the quick entry 106 may display, at a position such as a favorites folder of a search application, a desktop of the electronic device 100, a user interface of a leftmost screen application, or a user interface of a gallery application, the entry for secondary loading of the card set. The search application may provide a search function (receiving a search key word and providing a search result related to the search key word) and a function of displaying the card set. In an implementation, the quick entry 106 may obtain some or all information included in the card set from the storage module 105, and display, based on the obtained information, the entry for secondary loading of the card set. For example, the search key word is displayed at the entry for secondary loading of the card set. In an implementation, after receiving an instruction for loading a card set 1 corresponding to an entry 1, the quick entry 106 may send identification information of the card set 1 to the storage module 105. After receiving the identification information of the card set 1, the storage module 105 may obtain all information of the card set 1 corresponding to the identification information, and send the information to the output module 104. The output module 104 may output the card set 1, for example, display the card set 1, based on the received information of the card set 1.

In an implementation, at least one of the input module 101, the processing module 102, the output module 104, and the storage module 105 may belong to the search application of the electronic device 100. The search application may provide a search function. For example, a user may open the search application in the electronic device 100, and enter a search key word based on a user interface of the search application. The electronic device 100 may display, by using the user interface of the search application, a search result related to the search key word.

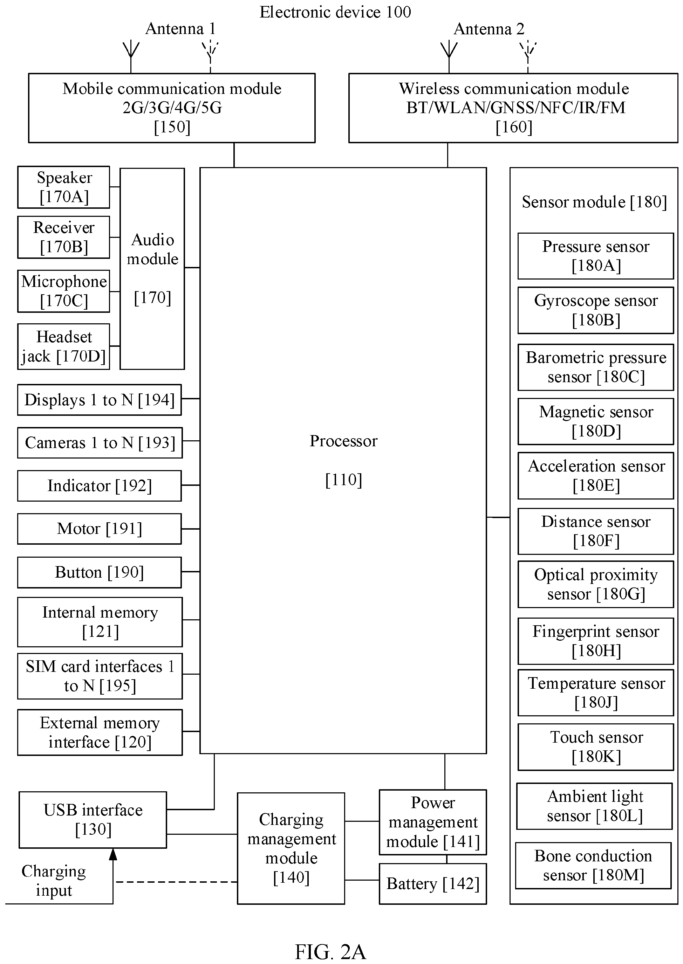

In an implementation, the storage module 105 may be a memory of the electronic device 100, for example, an internal memory 121 shown in FIG. 2A.

In an implementation, the quick entry 106 may be a control such as a widget provided by an application, for example, a widget in a card form provided by the leftmost screen application.

In an implementation, the output module 104 may be a display component provided by an application. For example, the application that provides the output module 104 and an application that provides the quick entry 106 are a same application. After receiving the instruction for loading the card set, the quick entry 106 may output the card set by using the output module 104 belonging to the same application.

The following describes the example electronic device 100 according to an embodiment of this application.

FIG. 2A is an example of a diagram of a hardware structure of an electronic device 100.

It should be understood that the electronic device 100 shown in FIG. 2A is merely an example, and the electronic device 100 may have more or fewer components than those shown in FIG. 2A, or may combine two or more components, or may have different component configurations. The components shown in FIG. 2A may be implemented in hardware including one or more signal processing and/or application-specific integrated circuits, software, or a combination of hardware and software.

As shown in FIG. 2A, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a timing signal, to control instruction fetching and instruction execution.

A memory may be further disposed in the processor 110, and is configured to store instructions and data. In an implementation, the memory in the processor 110 is a cache memory. The memory may store instructions or data that has just been used or cyclically used by the processor 110. If the processor 110 needs to use the instructions or the data again, the processor may directly invoke the instructions or the data from the memory. This avoids repeated access, reduces waiting time of the processor 110, and therefore improves system efficiency.

In an implementation, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In an implementation, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In an implementation, the processor 110 may include a plurality of groups of I2S buses. The processor 110 may be coupled to the audio module 170 through the I2S bus, to implement communication between the processor 110 and the audio module 170. In an implementation, the audio module 170 may transfer an audio signal to the wireless communication module 160 through the I2S interface, to implement a function of answering a call through a Bluetooth headset.

The PCM interface may also be used for audio communication, and analog signal sampling, quantization, and coding. In an implementation, the audio module 170 may be coupled to the wireless communication module 160 through a PCM bus interface. In an implementation, the audio module 170 may also transfer an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In an implementation, the UART interface is usually configured to connect the processor 110 to the wireless communication module 160. For example, the processor 110 communicates with a Bluetooth module in the wireless communication module 160 through the UART interface, to implement a Bluetooth function. In an implementation, the audio module 170 may transfer an audio signal to the wireless communication module 160 through the UART interface, to implement a function of playing music through a Bluetooth headset.

The MIPI interface may be configured to connect the processor 110 to peripheral devices such as the display 194 and the camera 193. The MIPI interface includes a camera serial interface (camera serial interface, CSI), a display serial interface (display serial interface, DSI), and the like. In an implementation, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In an implementation, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, a MIPI interface, or the like.

The USB interface 130 is an interface that conforms to a USB standard specification, and may be specifically a Mini USB interface, a Micro USB interface, a USB Type C interface, or the like. The USB interface 130 may be configured to connect to a charger to charge the electronic device 100, or may be configured to transmit data between the electronic device 100 and a peripheral device, or may be configured to connect to a headset, to play audio by using the headset. The interface may be further configured to connect to another electronic device such as an AR device.

It may be understood that the interface connection relationship between the modules that is shown in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input from a wired charger by using the USB interface 130. In some embodiments of wireless charging, the charging management module 140 may receive a wireless charging input by using a wireless charging coil of the electronic device 100. The charging management module 140 may further supply power to the electronic device by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a quantity of battery cycles, and a battery health status (electric leakage and impedance). In some other embodiments, the power management module 141 may alternatively be disposed in the processor 110. In another implementation, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like. In an implementation, the electronic device 100 may communicate with the network device 200 by using a wireless communication function, for example, send a search request to the network device 200.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave for radiation by using the antenna 1. In an implementation, at least some functional modules of the mobile communication module 150 may be disposed in the processor 110. In an implementation, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In an implementation, the modem processor may be an independent device. In another implementation, the modem processor may be independent of the processor 110, and is disposed in a same device as the mobile communication module 150 or another functional module.

The wireless communication module 160 may provide a solution applied to the electronic device 100 for wireless communication including wireless local area networks (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave by using the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the to-be-sent signal, and convert the signal into an electromagnetic wave for radiation by using the antenna 2.

In an implementation, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, and/or IR technologies, and the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The electronic device 100 implements a display function by using the GPU, the display 194, the application processor, and the like. In an implementation, the electronic device 100 may display a semantic aggregation card set (including web page content that meets a search intention) by using a display function, and an entry control for secondary loading of the semantic aggregation card set.

The GPU is a microprocessor for image processing, and is connected to the display 194 and the application processor. The GPU is configured to: perform mathematical and geometric calculation, and render an image. The processor 110 may include one or more GPUs that execute program instructions to generate or change display information. The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a Mini-led, a Micro-Led, a Micro-oLed, a quantum dot light emitting diode (quantum dot light emitting diodes, QLED), or the like. In an implementation, the electronic device 100 may include one or N displays 194, where N is a positive integer greater than 1.

The electronic device 100 may implement a shooting function by using the ISP, the camera 193, the video codec, the GPU, the display 194, the application processor, and the like.

The ISP is configured to process data fed back by the camera 193. For example, when photographing is performed, a shutter is opened, light is transmitted to a camera photosensitive element through a lens, an optical signal is converted into an electrical signal, and the camera photosensitive element transmits the electrical signal to the ISP for processing, and the electrical signal is converted into an image visible to naked eyes. The ISP may further perform algorithm optimization on noise, brightness, and the like of the image. The ISP may further optimize parameters such as exposure and a color temperature of a photographing scenario. In an implementation, the ISP may be disposed in the camera 193.

The camera 193 is configured to capture a static image or a video. An optical image of an object is generated by using the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts the optical signal into the electrical signal, and then transmits the electrical signal to the ISP for conversion into a digital image signal. The ISP outputs the digital image signal to the DSP for processing. The DSP converts the digital image signal into an image signal in a standard format such as RGB or YUV. In an implementation, the electronic device 100 may include one or N cameras 193, where N is a positive integer greater than 1.

The digital signal processor is configured to process a digital signal, and may process another digital signal in addition to the digital image signal. For example, when the electronic device 100 performs frequency selection, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG) 1, MPEG 2, MPEG 3, and MPEG 4.

The NPU is a neural-network (neural-network, NN) computing processor. By drawing on a structure of a biological neural network, for example, by drawing on a transmission mode between human brain neurons, the NPU quickly processes input information, and may further continuously perform self-learning. An application such as intelligent cognition, for example, image recognition, facial recognition, speech recognition, or text understanding of the electronic device 100 may be implemented by using the NPU.

The external memory interface 120 may be configured to connect to an external memory card, for example, a Micro SD card, to expand a storage capability of the electronic device 100. The external memory card communicates with the processor 110 by using the external memory interface 120, to implement a data storage function. For example, files such as music and a video are stored in the external memory card.

The internal memory 121 may be configured to store computer-executable program code. The executable program code includes instructions. The internal memory 121 may include a program storage area and a data storage area. The program storage area may store an operating system, an application used for at least one function (for example, a sound playing function or an image playing function), and the like. The data storage area may store data (such as audio data and an address book) and the like that are created during use of the electronic device 100. In addition, the internal memory 121 may include a high-speed random access memory, and may further include a non-volatile memory, for example, at least one magnetic disk storage device, a flash memory device, and a universal flash storage (universal flash storage, UFS). The processor 110 executes various functional applications of the electronic device 100 and data processing by running instructions stored in the internal memory 121 and/or instructions stored in the memory disposed in the processor.

The electronic device 100 may implement an audio function by using the audio module 170, the speaker 170A, the receiver 170B, the microphone 170C, the headset jack 170D, and the application processor, for example, play audio content included in the semantic aggregation card set.

The audio module 170 is configured to convert digital audio information into an analog audio signal for output, and is also configured to convert an analog audio input into a digital audio signal. The audio module 170 may be further configured to encode and decode an audio signal. In an implementation, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may listen to music or answer a hands-free call by using the speaker 170A.

The receiver 170B, also referred to as an "earpiece", is configured to convert an audio electrical signal into a sound signal. When the electronic device 100 answers a call or receives voice information, the receiver 170B may be put close to a human ear to listen to voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In another implementation, two microphones 170C may be disposed in the electronic device 100, to collect sound signals and further implement a noise reduction function. In another implementation, three, four, or more microphones 170C may alternatively be disposed in the electronic device 100, to collect a sound signal, implement noise reduction, and identify a sound source, so as to implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In an implementation, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation by using the pressure sensor 180A. The electronic device 100 may also calculate a touch position based on a detection signal of the pressure sensor 180A. In an implementation, touch operations that are performed at a same touch position but have different touch operation intensity may correspond to different operation instructions. For example, when a touch operation whose touch operation intensity is less than a first pressure threshold is performed on an icon of the application Messages, an instruction for viewing a short message service message is executed. When a touch operation whose touch operation intensity is greater than or equal to the first pressure threshold is performed on the icon of the application Messages, an instruction for creating a new short message service message is executed.

The gyroscope sensor 180B may be configured to determine a motion posture of the electronic device 100. In an implementation, an angular velocity of the electronic device 100 around three axes (namely, axes x, y, and z) may be determined by using the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be configured to navigate and sense a game scene.

The barometric pressure sensor 180C is configured to measure barometric pressure. In an implementation, the electronic device 100 calculates an altitude based on a barometric pressure value measured by the barometric pressure sensor 180C, to assist in positioning and navigation.

The magnetic sensor 180D includes a Hall sensor. The electronic device 100 may detect opening and closing of a flip leather case by using the magnetic sensor 180D. In an implementation, when the electronic device 100 is a flip machine, the electronic device 100 may detect opening and closing of a flip based on the magnetic sensor 180D. Further, a feature such as automatic unlocking upon flipping is set based on a detected opening or closing state of the leather case or a detected opening or closing state of the flip.

The acceleration sensor 180E may detect magnitudes of accelerations of the electronic device 100 in various directions (generally three axes). When the electronic device 100 is still, a magnitude and a direction of gravity may be detected. The acceleration sensor 180E may be further configured to recognize a posture of the electronic device, and is used in an application such as switching between a landscape mode and a portrait mode or a pedometer.

The distance sensor 180F is configured to measure a distance. The electronic device 100 may measure a distance in an infrared manner or a laser manner. In an implementation, in a photographing scenario, the electronic device 100 may perform distance measurement by using the distance sensor 180F, to implement fast focusing.

The optical proximity sensor 180G may include, for example, a light emitting diode (LED) and an optical detector, such as a photodiode. The light emitting diode may be an infrared light emitting diode. The electronic device 100 emits infrared light by using the light emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that a user holds the electronic device 100 close to an ear for a call, to automatically perform screen-off for power saving.

The optical proximity sensor 180G may also be used for automatic screen unlocking and locking in a leather case mode or a pocket mode.

The ambient light sensor 180L is configured to sense luminance of ambient light. The electronic device 100 may adaptively adjust luminance of the display 194 based on the sensed luminance of the ambient light. The ambient light sensor 180L may also be configured to automatically adjust white balance during photographing. The ambient light sensor 180L may further cooperate with the optical proximity sensor 180G to detect whether the electronic device 100 is in a pocket, to prevent an accidental touch.

The fingerprint sensor 180H is configured to acquire a fingerprint. The electronic device 100 may implement, by using an acquired fingerprint characteristic, fingerprint unlocking, accessing an application lock, fingerprint photographing, answering an incoming call by using a fingerprint, and the like.

The temperature sensor 180J is configured to detect a temperature. In an implementation, the electronic device 100 executes a temperature processing policy by using the temperature detected by the temperature sensor 180J. For example, when the temperature reported by the temperature sensor 180J exceeds a threshold, the electronic device 100 reduces performance of a processor near the temperature sensor 180J, to reduce power consumption and implement thermal protection. In another implementation, when the temperature is lower than another threshold, the electronic device 100 heats the battery 142, to avoid abnormal shutdown of the electronic device 100 caused by a low temperature. In some other embodiments, when the temperature is less than still another threshold, the electronic device 100 boosts an output voltage of the battery 142, to avoid abnormal shutdown caused by a low temperature.

The touch sensor 180K is also referred to as a "touch component". The touch sensor 180K may be disposed on the display 194, and the touch sensor 180K and the display 194 form a touchscreen, also referred to as a "touch screen". The touch sensor 180K is configured to detect a touch operation acting on or near the touch sensor 180K. The touch sensor may transfer the detected touch operation to the application processor, to determine a touch event type. A visual output related to the touch operation may be provided by using the display 194. In another implementation, the touch sensor 180K may alternatively be disposed on a surface of the electronic device 100, at a position different from that of the display 194.

The bone conduction sensor 180M may obtain a vibration signal. In an implementation, the bone conduction sensor 180M may obtain a vibration signal of a vibration bone of a human vocal-cord part. The bone conduction sensor 180M may also be in contact with a human pulse, and receive a blood pressure beating signal. In an implementation, the bone conduction sensor 180M may also be disposed in the headset, to combine into a bone conduction headset. The audio module 170 may parse out a voice signal based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch key. The electronic device 100 may receive a key input, and generate a key signal input related to user settings and function control of the electronic device 100.

The motor 191 may generate a vibration prompt. The motor 191 may be used for an incoming vibration prompt, or may be used for touch vibration feedback. For example, touch operations performed on different applications (for example, photographing and audio playing) may correspond to different vibration feedback effects. For touch operations performed on different areas of the display 194, the motor 191 may also correspond to different vibration feedback effects. Different application scenarios (for example, time reminding, information receiving, an alarm clock, and a game) may also correspond to different vibration feedback effects. A touch vibration feedback effect may be further customized.

The indicator 192 may be an indicator light, and may be configured to indicate a charging status and a power level change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano SIM card, a micro SIM card, a SIM card, and the like. A plurality of cards may be simultaneously inserted into a same SIM card interface 195. The plurality of cards may be of a same type or of different types. The SIM card interface 195 is also compatible with different types of SIM cards. The SIM card interface 195 is also compatible with an external memory card. The electronic device 100 interacts with a network by using the SIM card, to implement functions such as calling and data communication. In an implementation, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a microservice architecture, or a cloud architecture. For example, a software system of the layered architecture may be an Android (Android) system, or may be a Harmony (Harmony) operating system (operating system, OS), or another software system. In an embodiment of this application, a software structure of the electronic device 100 is described by using an Android system with a layered architecture as an example.

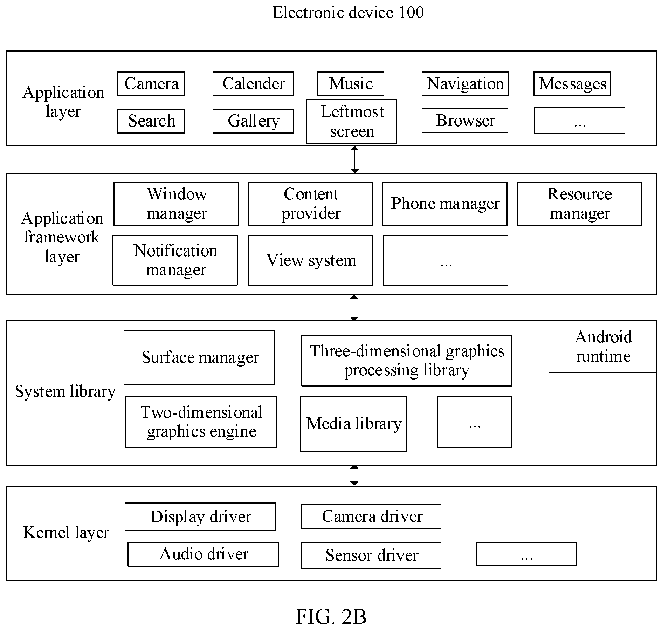

FIG. 2B is an example of a diagram of a software architecture of an electronic device 100.

In a layered architecture, software is divided into several layers, and each layer has a clear role and task. The layers communicate with each other by using a software interface. In an implementation, the Android system is divided into four layers: an application layer, an application framework layer, an Android runtime (Android runtime) and a system library, and a kernel layer from top to bottom.

The application layer may include a series of application packages.

As shown in FIG. 2B, the application package may include applications such as Camera, Calendar, Music, Navigation, Messages, Search, Gallery, Leftmost screen, and Browser. The search application may provide a search function. Search may be an independent application, or may be a function component encapsulated by another application such as a browser. This is not limited in this application. In this application, the application package may also be replaced with software in another form such as an applet. The following embodiment is described by using an example in which a browser application integrates a function component of Search.

The application framework layer provides an application programming interface (application programming interface, API) and a programming framework for an application of the application layer. The application framework layer includes some predefined functions.

As shown in FIG. 2B, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessible by an application. The data may include a video, an image, audio, calls made and answered, a browse history and a bookmark, a personal address book, and the like.

The view system includes a visual control, for example, a control for displaying a text or a control for displaying a picture. The view system may be configured to construct an application. A display interface may include one or more views. For example, a display interface including a notification icon of Messages may include a text display view and a picture display view.

The phone manager is configured to provide a communication function for the electronic device 100, for example, call status management (including call connection and disconnection, and the like).

The resource manager provides various resources for an application, such as a localized string, an icon, a picture, a layout file, and a video file.

The notification manager enables an application to display, in the status bar, notification information, which may be used for conveying a notification-type message that may automatically disappear after a short stay without user interaction. For example, the notification manager is configured to: notify download completion, provide a message prompt, and the like. The notification manager may alternatively be a notification that appears in a top status bar of the system in a form of a chart or scroll bar text, for example, a notification of an application running on the background or a notification that appears on the screen in a form of a dialog window. For example, text information is prompted in the status bar, a prompt tone is issued, an electronic device vibrates, or an indicator flashes.

The Android runtime includes a kernel library and a virtual machine. The Android runtime is responsible for scheduling and management of the Android system.

The core library includes two parts: a function that needs to be invoked in java language and a core library of Android.

The application layer and the application framework layer run in the virtual machine. The virtual machine executes java files at the application layer and the application framework layer as binary files. The virtual machine is configured to execute functions such as object life cycle management, stack management, thread management, security and exception management, and garbage collection.

The system library may include a plurality of functional modules, for example, a surface manager (surface manager), a media library (Media Libraries), a three-dimensional graphics processing library (for example, an OpenGL ES), a 2D graphics engine (for example, an SGL), and the like.

The surface manager is configured to: manage a display subsystem, and provide a fusion of 2D and 3D layers for a plurality of applications.

The media library supports playback and recording of a plurality of common audio and video formats, a still image file, and the like. The media library may support a plurality of audio and video coding formats, for example, MPEG 4, H.264, MP3, AAC, AMR, JPG, and PNG.

The three-dimensional graphics processing library is configured to implement three-dimensional graphics drawing, image rendering and synthesis, layer processing, and the like.

The 2D graphics engine is a drawing engine for 2D drawing.

The kernel layer is a layer between hardware and software. The kernel layer includes at least a display driver, a camera driver, an audio driver, and a sensor driver.

An example of a working procedure of software and hardware of the electronic device 100 is described below with reference to a web page search scenario.

When the touch sensor 180K receives a touch operation, a corresponding hardware interruption is sent to the kernel layer. The kernel layer processes the touch operation into an original input event (including information such as coordinates of touch and a timestamp of the touch operation). The original input event is stored at the kernel layer. The application framework layer obtains the original input event from the kernel layer, and identifies a control corresponding to the input event. For example, the touch operation is a touch tap operation, and the control corresponding to the tap operation is a search control of the browser application. The browser invokes an interface of the application framework layer to perform search based on a key word entered by the user in a search box control of the browser, and then starts the display driver by invoking the kernel layer, and displays, by using the display 194, a web page list obtained through searching. The user may operate any web page card in the web page list to view detailed content of the corresponding web page, so as to obtain content that meets the search intention.

The following describes application scenarios in embodiments of this application and diagrams of user interfaces in the scenarios.

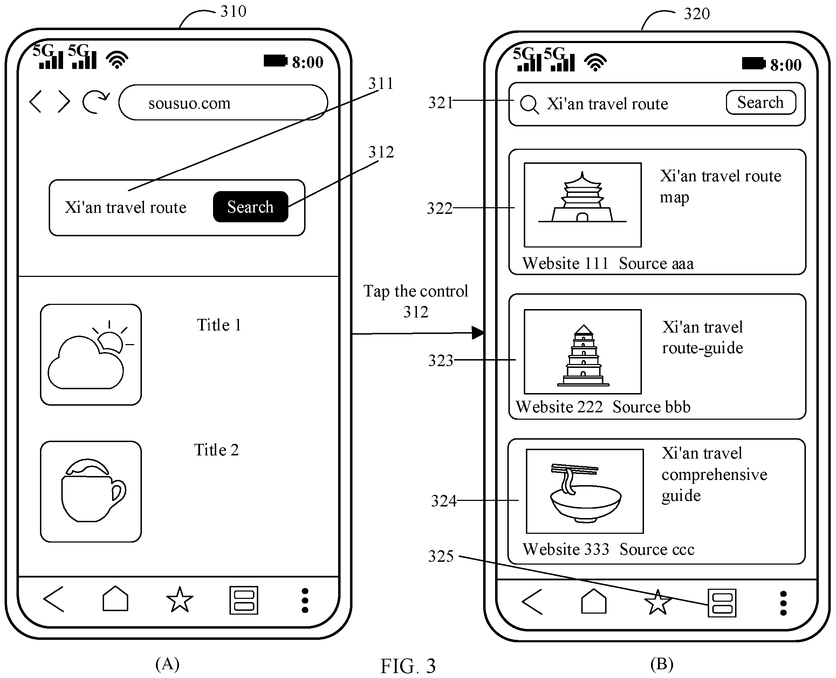

FIG. 3 is an example of a diagram of a user interface in a web page search process.

As shown in FIG. 3(A), an electronic device 100 may display a user interface 310 of a browser. The user interface 310 may include a search field 311 and a search control 312, where the search field 311 is used to receive a key word entered by a user, and the search control 312 is used to trigger a search operation on the key word in the search field 311. The electronic device 100 may receive key words "Xi'an travel route" entered by the user in the search field 311, then receive a touch operation (for example, a tap operation) on the search control 312, and in response to the touch operation, search to obtain at least one web page related to the key words, and sort the at least one web page. The electronic device 100 may display sorted web pages. For details, refer to a user interface 320 shown in FIG. 3(B).

As shown in FIG. 3(B), the user interface 320 may include a search field 321 and a web page list. Key words "Xi'an travel route" for current search are displayed in the search field 321. The user interface 320 shows summary information (which may be referred to as web page cards) of web pages ranking in the first three positions in the web page list, and the summary information is a web page card 322, a web page card 323, and a web page card 324 in a top-down sequence. The web page card 322 indicates a web page 1 whose title is "Xi'an travel route map", whose website is "website 111", and whose source is "source aaa". The web page card 323 indicates a web page 2 whose title is "Xi'an travel route-guide", whose website is "website 222", and whose source is "source bbb". The web page card 324 indicates a web page 3 whose title is "Xi'an travel comprehensive guide", whose website is "website 3333", and whose source is "source ccc". A navigation bar located at the bottom of the user interface 320 includes a card control 325. The card control 325 is used to trigger display of a semantic aggregation card set. The semantic aggregation card set includes, for example, content that is related to the search key words "Xi'an travel route" and that is in the web page 1, the web page 2, and the web page 3, and does not include content that is unrelated to the search key words "Xi'an travel route" and that is in the web page 1, the web page 2, and the web page 3. The following is not limited: The card control 325 in the user interface 320 shown in FIG. 3(B) triggers display of the semantic aggregation card set. In some other examples, display of the semantic aggregation card set may alternatively be triggered by using a gesture or voice entered by the user. A manner of triggering display of the semantic aggregation card set is not limited in this application.

The following example touch operation is, for example, but is not limited to: tap, double-tap, touch and hold, touch and hold with a single finger, touch and hold with a plurality of fingers, slide with a single finger (including drag with a single finger), slide with a plurality of fingers (including drag with a plurality of fingers), or slide with a knuckle.

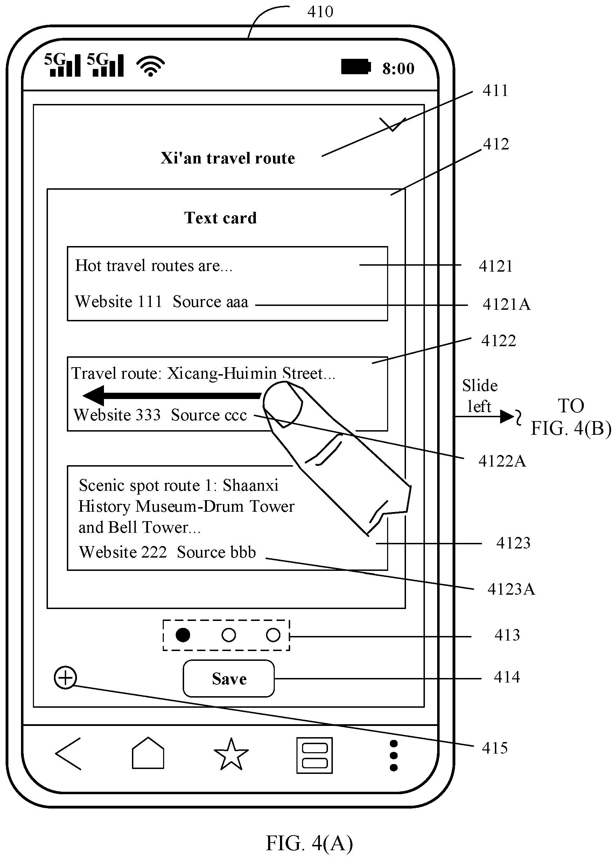

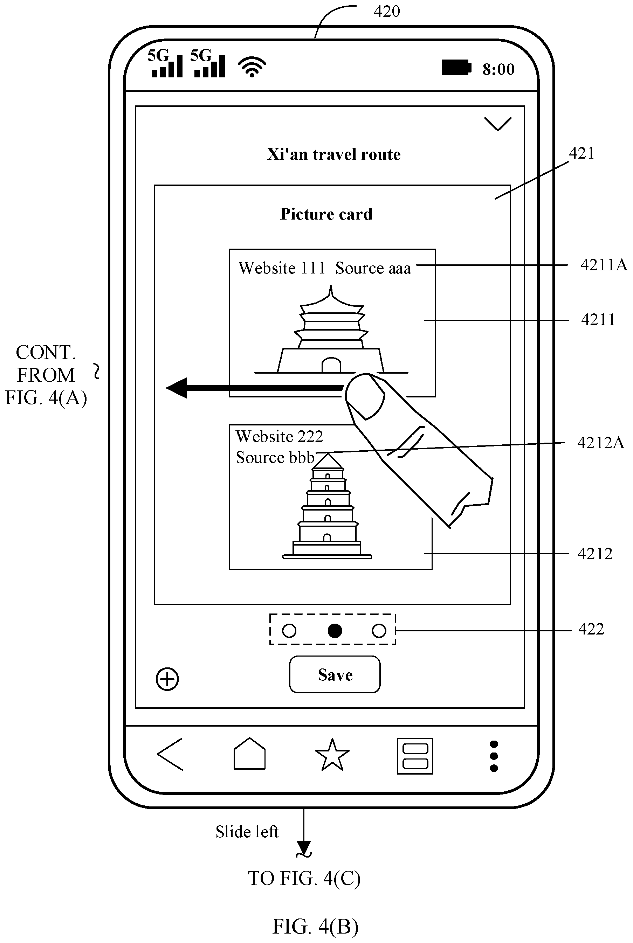

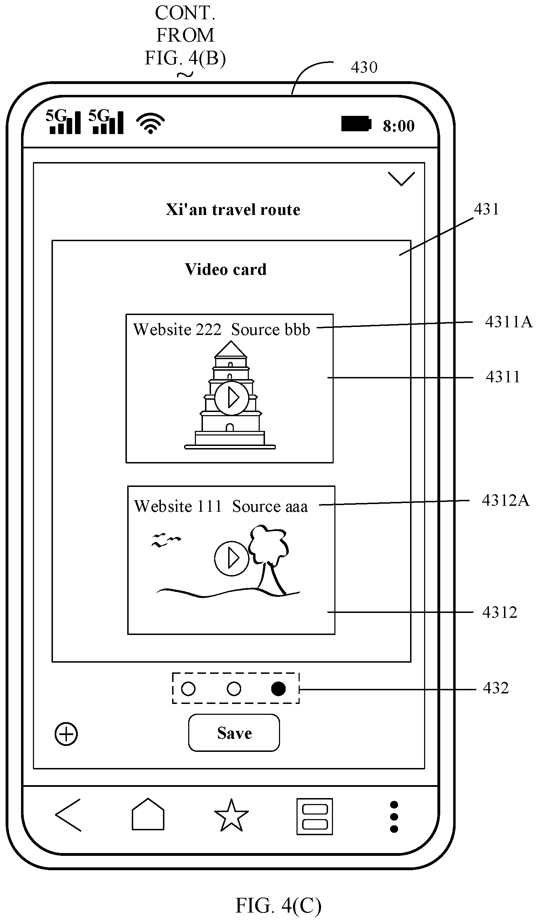

In an implementation, after the operation shown in FIG. 3, the electronic device 100 may receive a touch operation (for example, a tap operation) on the card control 325 in the user interface 320 shown in FIG. 3(B), and display the semantic aggregation card set in response to the touch operation. For a specific example, refer to the user interface shown in FIG. 4(A), FIG. 4(B), and FIG. 4(C).

It may be understood that one web page may include a plurality of types of content, for example, content of types such as a text, a picture, a video, audio, and the like. In an implementation, any card in the semantic aggregation card set may include only one type of content. For example, one card includes a static picture, and another card includes a dynamic picture. In another implementation, any card in the semantic aggregation card set may include a plurality of different types of content. For example, one card includes a text and a picture.

FIG. 4(A), FIG. 4(B), and FIG. 4(C) are described by using an example in which the semantic aggregation card set includes three cards. The three cards respectively include web page content of a text type, a picture type, and a video type (which may be respectively referred to as a text card, a picture card, and a video card for short). In a specific implementation, the semantic aggregation card set may include more or fewer cards. For example, the semantic aggregation card set includes only a text card, or the semantic aggregation card set includes only a picture card and a video card. This is not limited in this application.

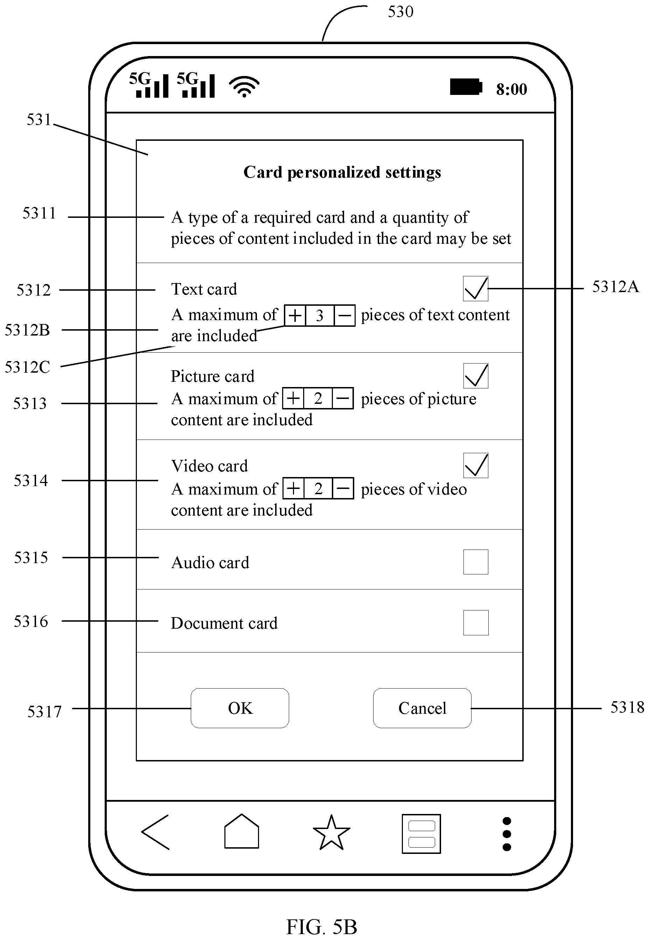

In an implementation, cards included in the semantic aggregation card set are set by the user, for example, as shown in FIG. 5B. In another implementation, the cards included in the semantic aggregation card set are generated by the electronic device based on web page content. For example, the web page 1, the web page 2, and the web page 3 do not include text content related to the search key words "Xi'an travel route". Therefore, the semantic aggregation card set includes only a picture card and a video card.

As shown in FIG. 4(A), the electronic device 100 may display a user interface 410 of the browser. The user interface 410 is used to display text cards (used to display web page content of a text type) in the semantic aggregation card set. The user interface 410 may include a title 411, a text card 412, a page option 413, a save control 414, and a new control 415. The title 411 is used to display the key words "Xi'an travel route" for current search. The text card 412 includes a title ("text card") and a plurality of pieces of text content. In descending order of similarities with the key words "Xi'an travel route", the plurality of pieces of text content displayed in the text card 412 is arranged from top to bottom in sequence as follows: text content 4121 ("hot travel routes are..."), text content 4122 ("travel route: Xicang-Huimin Street..."), and text content 4123 ("scenic spot route 1: Shaanxi History Museum-Drum Tower and Bell Tower..."). Source information 4121A in the text card 412 indicates that the text content 4121 is a text included in the web page 1 whose website is "website 111" and whose source is "source aaa", source information 4122A in the text card 412 indicates that the text content 4122 is a text included in the web page 3 whose website is "website 333" and whose source is "source ccc", and source information 4123A in the text card 412 indicates that the text content 4123 is a text included in the web page 2 whose website is "website 222" and whose source is "source bbb". The page option 413 includes three options (represented in a form of three circles), where the first option is in a selected state (represented in a form of a black circle), and the other two options are in an unselected state (represented in a form of a white circle). This may represent that the semantic aggregation card set includes three cards, and the text card 412 is the first card in the semantic aggregation card set. The save control 414 is used to trigger saving of the semantic aggregation card set. The new control 415 is used to trigger creation of a new card in the semantic aggregation card set.

The electronic device 100 may receive a slide operation on the text card 412. For example, the slide operation may be sliding up or down, sliding left or right, or the like. In FIG. 4(A), FIG. 4(B), and FIG. 4(C), an example in which the slide operation is sliding from right to left is used for illustration. The electronic device 100 displays, in response to the slide operation, a user interface 420 shown in FIG. 4(B). The user interface 420 is similar to the user interface 410 shown in FIG. 4(A), and a difference lies in that the user interface 420 is used to display a picture card (used to display web page content of a picture type) in the semantic aggregation card set. A picture card 421 in the user interface 420 includes a title ("picture card") and a plurality of pieces of picture content. For example, the plurality of pieces of picture content include picture content 4211 and picture content 4212. Source information 4211A in the user interface 420 indicates that the picture content 4211 is a picture included in a web page 1 whose website is "website 111" and whose source is "source aaa", and the source information 4212A in the user interface 420 indicates that the picture content 4212 is a picture included in the web page 2 whose website is "website 222" and whose source is "source bbb". The second option included in the page option 413 in the user interface 420 is in a selected state, and the other two options are in an unselected state. This may represent that the picture card 421 is the second card in the semantic aggregation card set.

The electronic device 100 may receive a slide operation on the picture card 421. For example, the slide operation may be sliding up or down, sliding left or right, or the like. In FIG. 4(A), FIG. 4(B), and FIG. 4(C), an example in which the slide operation is sliding from right to left is used for illustration. The electronic device 100 displays, in response to the slide operation, a user interface 430 shown in FIG. 4(C). The user interface 430 is similar to the user interface 410 shown in FIG. 4(A), and a difference lies in that the user interface 430 is used to display a video card (used to display web page content of a video type) in the semantic aggregation card set. The video card 431 in the user interface 430 includes a title ("video card") and a plurality of pieces of video content. The plurality of pieces of video content, for example, include video content 4311 and video content 4312. Source information 4311A in the user interface 430 indicates that the video content 4311 is a video included in the web page 2 whose website is "website 222" and whose source is "source bbb", and source information 4312A in the user interface 430 indicates that the video content 4312 is a video included in the web page 1 whose website is "website 111" and whose source is "source aaa". The third option included in the page option 432 in the user interface 430 is in a selected state, and the other two options are in an unselected state. This may represent that the video card 431 is the third card in the semantic aggregation card set.

In an implementation, the semantic aggregation card set may include all or some content of a search result. For example, the picture card in the semantic aggregation card set includes all or some pictures in the search result. For example, assuming that the search result is the web page 1, the web page 2, and the web page 3 shown in FIG. 3, the text card 412 in the user interface 410 shown in FIG. 4(A) may include text content in the three web pages, the picture card 421 in the user interface 420 shown in FIG. 4(B) includes only picture content in the web page 1 and the web page 2, and does not include picture content in the web page 3, and the video card 431 in the user interface 430 shown in FIG. 4(C) includes only video content in the web page 1 and the web page 2, and does not include video content in the web page 3. In some examples, a correlation between the picture content and the video content in the web page 3 and the search key words is relatively low. Therefore, the picture card 421 does not include the picture content in the web page 3, and the video card 431 does not include the video content in the web page 3.

This application is not limited to the semantic aggregation card set shown in FIG. 4(A), FIG. 4(B), and FIG. 4(C). In some other examples, information about a web page to which web page content in the semantic aggregation card set belongs may alternatively not be displayed. For example, the text card 412 in the user interface 410 shown in FIG. 4(A) does not include the source information 4121A indicating the web page 1 to which the text content 4121 belongs. A specific display manner of the semantic aggregation card set is not limited in this application.

This application is not limited to the foregoing examples. In some other examples, content included in the semantic aggregation card set may be content extracted from more or fewer web pages. The electronic device 100 may extract, from the at least one web page obtained through searching, web pages ranking in the first N positions, and use content that is in the N web pages and that is related to the search key words as content in the semantic aggregation card set, where N is a positive integer.

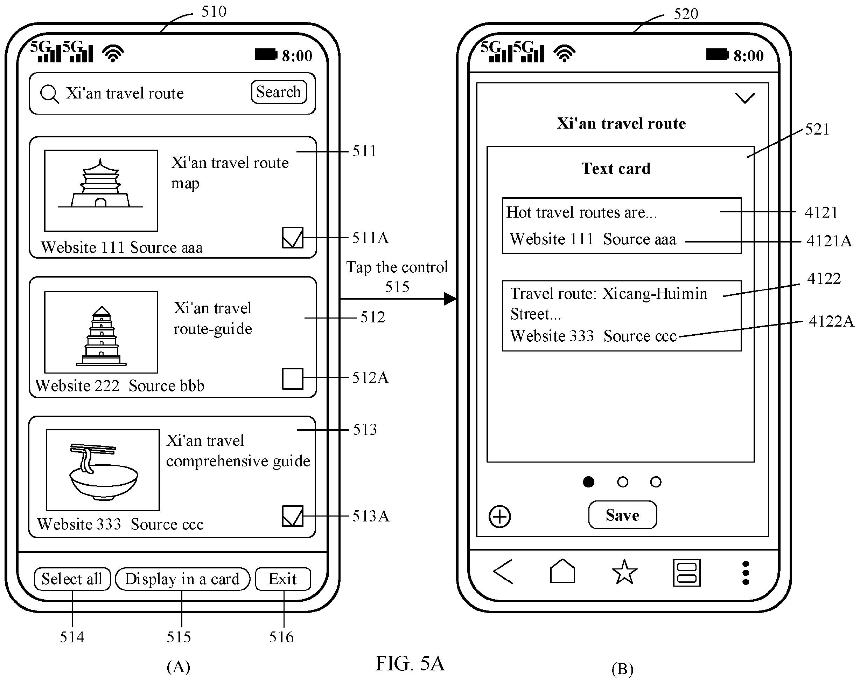

This application is not limited to the foregoing examples. In another implementation, the content included in the semantic aggregation card set may be content that is related to the search key words and that is extracted from the at least one web page selected by the user. For example, after the operation shown in FIG. 3, the electronic device 100 may receive a touch operation (for example, a tap operation) on the card control 325 in the user interface 320 shown in FIG. 3(B), and display, in response to the touch operation, a user interface used to select a web page. For a specific example, refer to a user interface 510 shown in FIG. 5A(A).

As shown in FIG. 5A(A), the user interface 510 is similar to the user interface 320 shown in FIG. 3(B). A plurality of web page cards in the user interface 510 include, for example, a web page card 511 indicating the web page 1, a web page card 512 indicating the web page 2, and a web page card 513 indicating the web page 3. A select control is further displayed in any web page card, and any select control is used to select a corresponding web page (that is, a web page indicated by a web page card in which the select control is located) or cancel the selection. In the user interface 510, a select control 511A and a select control 513A are in a selected state, and a select control 512A is in an unselected state. This may represent that the web page 1 corresponding to the select control 511A and the web page 3 corresponding to the select control 513A are selected. A menu located at the bottom of the user interface 510 includes a select all control 514, a card control 515, and an exit control 516. The select all control 514 is used to select web pages indicated by all web page cards displayed on the user interface 510. The card control 515 is used to trigger display of the semantic aggregation card set, where content included in the semantic aggregation card set is extracted from the web page 1 and the web page 3 that are selected by the user, and the content included in the semantic aggregation card set that is triggered by the card control 325 in the user interface 320 for display is extracted from the at least one web page obtained through searching (the web page 1, the web page 2, and the web page 3 that rank in the first three positions are used as examples). The exit control 516 is used to exit a function of using a web page.

The electronic device 100 may receive a touch operation (for example, a tap operation) on the card control 515, and in response to the touch operation, extract, from the selected web page 1 and web page 3, content related to the search key words, and use the extracted content as the content of the semantic aggregation card set. The electronic device 100 may display the semantic aggregation card set, for example, display a user interface 520 shown in FIG. 5A(B). The user interface 520 is similar to the user interface 410 shown in FIG. 4(A), and a difference lies in that text content included in the text card is different. A text card 521 in the user interface 520 includes the text content 4121, the source information 4121A (indicating that the text content 4121 is a text included in the web page 1), the text content 4122, and the source information 4122A (indicating that the text content 4122 is a text included in the web page 3) that are in the user interface 410, and does not include a text (for example, the text content 4123 in the user interface 410) included in the web page 2 that is not selected by the user.

In an implementation, a card type, a quantity of cards, and/or a quantity of pieces of content included in a card included in the semantic aggregation card set may be preset by the electronic device. In another implementation, a card type, a quantity of cards, and/or a quantity of pieces of content included in a card included in the semantic aggregation card set may be determined by the electronic device in response to a user operation. In some examples, after the operation shown in FIG. 3, the electronic device 100 may receive a touch operation (for example, a tap operation) on the card control 325 in the user interface 320 shown in FIG. 3(B), and display, in response to the touch operation, a user interface 530 shown in FIG. 5B. In some other examples, the user may also enter the user interface 530 shown in FIG. 5B through card settings.

As shown in FIG. 5B, the user interface 530 includes a setting interface 531. The setting interface 531 includes a title ("card personalized settings"), a setting description 5311 ("a type of a required card and a quantity of pieces of content included in the card may be set"), and a plurality of card options. The plurality of card options include, for example, an option 5312 of a text card, an option 5313 of a picture card, an option 5314 of a video card, an option 5315 of an audio card, an option 5316 of a document card, and the like. The audio card is a card including web page content of an audio type, and the document card is a card including web page content of a document type (for example, a document in a word, excel, or ppt format). A select control is displayed in any option, and any select control is used to select to add a corresponding card to the semantic aggregation card set or cancel the selection. The option 5312 is used as an example for description, and other options are similar. A select control 5312A displayed in the option 5312 is used to set to add a corresponding text card to the semantic aggregation card set or cancel the setting. When the select control 5312A is in a selected state, a content option 5312B may be further displayed in the option 5312, where the content option 5312B includes characters "a maximum of ... pieces of text content are included", a setting control 5312C is displayed at "...", a box in the middle of the setting control 5312C is used to display a maximum quantity of pieces of text content included in a currently set text card, a box on the left in the setting control 5312C is used to increase a maximum quantity of pieces of text content included in the text card, and a box on the right in the setting control 5312C is used to reduce a maximum quantity of pieces of text content included in the text card. In the user interface 530, select controls displayed in the option 5312, the option 5313, and the option 5314 are all in a selected state, and select controls displayed in the option 5315 and the option 5316 are both in an unselected state. This may represent that a text card corresponding to the option 5312, a picture card corresponding to the option 5313, and a video card corresponding to the option 5314 are added to the semantic aggregation card set in current settings. In addition, the setting control 5312C in the option 5312 displays a number 3, which may represent that a maximum value of a quantity of pieces of content included in the text card is set to 3. A setting control in the option 5313 displays a number 2, which may represent that a maximum value of a quantity of pieces of content included in the picture card is set to 2. A setting control in the option 5314 displays a number 2, which may represent that a maximum value of a quantity of pieces of content included in the video card is set to 2. The user interface 530 further includes an "OK" control 5317 and a cancel control 5318, where the cancel control 5318 is used to cancel display of the semantic aggregation card set. The electronic device 100 may receive a touch operation (for example, a tap operation) on the "OK" control 5317, and display the foregoing set semantic aggregation card set in response to the touch operation. For details, refer to the semantic aggregation card set shown in FIG. 4(A), FIG. 4(B), and FIG. 4(C).

This application is not limited to the foregoing examples. In some other examples, the user interface 530 shown in FIG. 5B may be further displayed on a setting interface such as a system setting interface of the electronic device 100 or a setting interface of a browser application.

This application is not limited to the foregoing examples. In some other examples, display of the user interfaces shown in FIG. 4(A), FIG. 4(B), and FIG. 4(C), FIG. 5A, and FIG. 5B may alternatively be triggered in another manner of triggering display of the semantic aggregation card set, such as a voice or a gesture in FIG. 3.

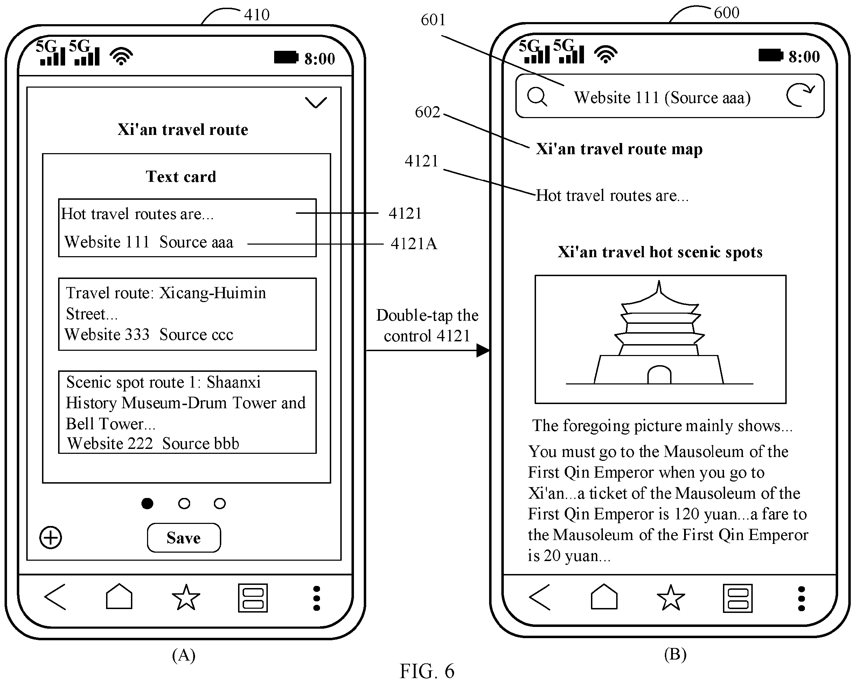

In an implementation, when displaying the semantic aggregation card set (for example, displaying the user interface 410 shown in FIG. 4(A)), the electronic device 100 may receive a touch operation (for example, a double-tap operation) on any content in the semantic aggregation card set, and display, in response to the touch operation, detailed content of a web page to which the content belongs. For a specific example, refer to FIG. 6.

As shown in FIG. 6(A), the electronic device 100 may display the user interface 410 shown in FIG. 4(A). The source information 4121A in the user interface 410 indicates that the text content 4121 is a text included in the web page 1 whose website is "website 111" and whose source is "source aaa". The electronic device 100 may receive a touch operation (for example, a double-tap operation) on the text content 4121, and display, in response to the touch operation, detailed content of the web page 1 to which the text content 4121 belongs. For a specific example, refer to the user interface 600 shown in FIG. 6(B). The user interface 600 may include a search field 601, and the search field 601 displays the website and the source "website 111 (source aaa)" of the currently displayed web page 1. The user interface 600 further includes a title 602 ("Xi'an travel route map") of the web page 1 and content of a plurality of types such as a text and a picture. The text content 4121 on which the touch operation is performed is highlighted (for example, highlighted) in the user interface 600. The user may obtain, by using the user interface 600, information related to the text content 4121, for example, a display position and context in the web page 1.

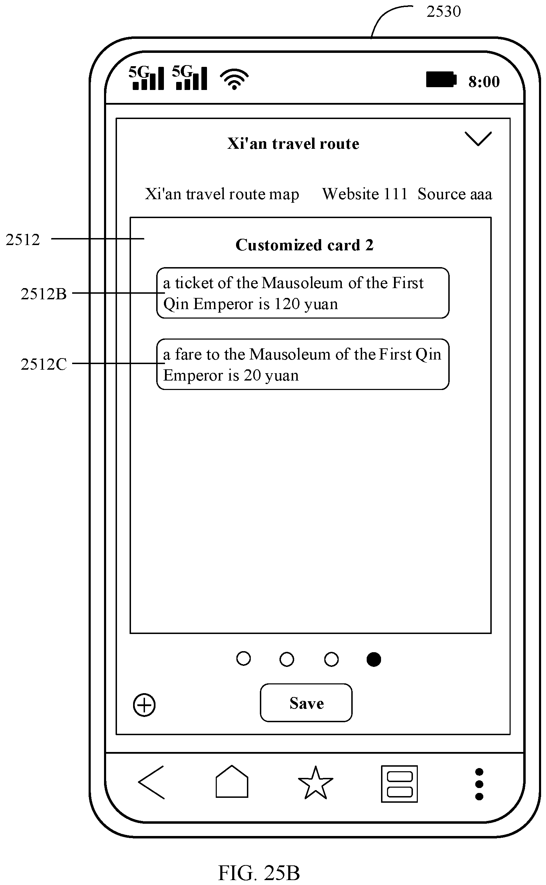

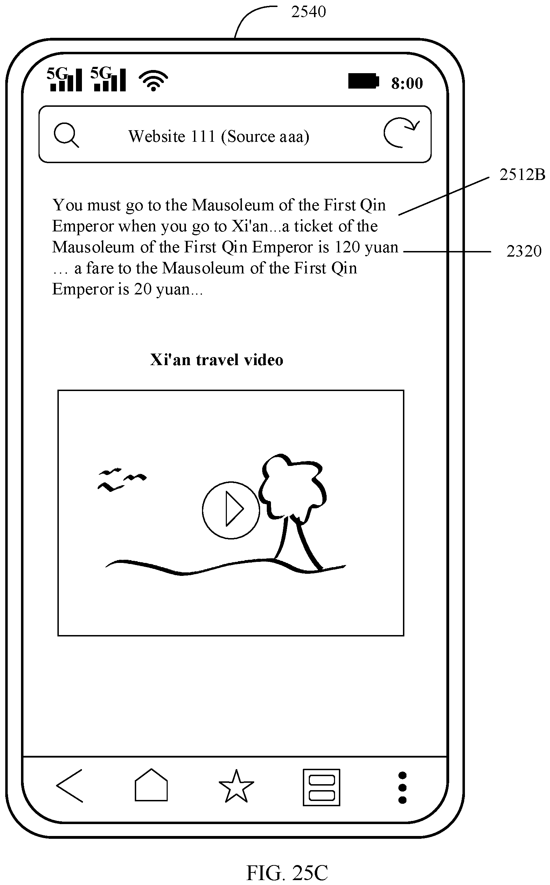

In an implementation, the electronic device 100 displays, in response to the touch operation on any content in the semantic aggregation card set, web page content related to the content. Optionally, the web page content may be located to a position in a web page to which the web page content belongs for display. For example, the electronic device 100 may display a user interface 2540 shown in FIG. 25C in response to a touch operation performed on associated content 2512B in a user interface 2530 shown in FIG. 25B, where the associated content 2512B is located on the web page 1 to which the associated content 2512B shown in the user interface 2540 belongs. Optionally, the web page content may be highlighted in the web page to which the web page content belongs. For example, the electronic device 100 may display, in response to a touch operation on the text content 4121 in the user interface 410 shown in FIG. 4(A), a user interface 600 shown in FIG. 6(B). The text content 4121 is highlighted in the web page 1 to which the text content 4121 shown in the user interface 600 belongs. For example, the electronic device 100 may display, in response to the touch operation performed on the associated content 2512B in the user interface 2530 shown in FIG. 25B, the user interface 2540 shown in FIG. 25C. The associated content 2512B is highlighted in the web page 1 to which the associated content 2512B shown in the user interface 2540 belongs.

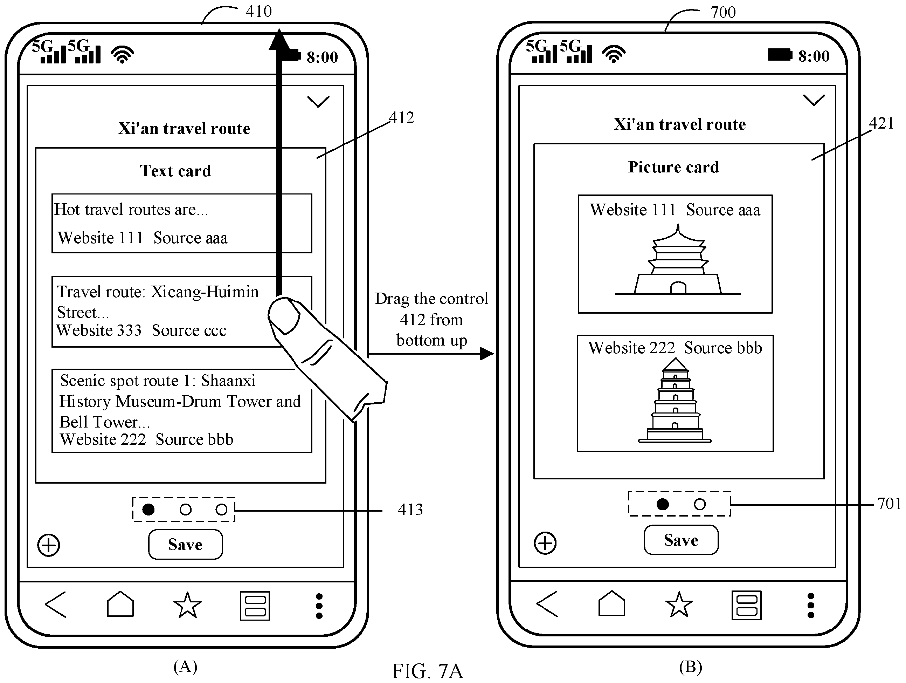

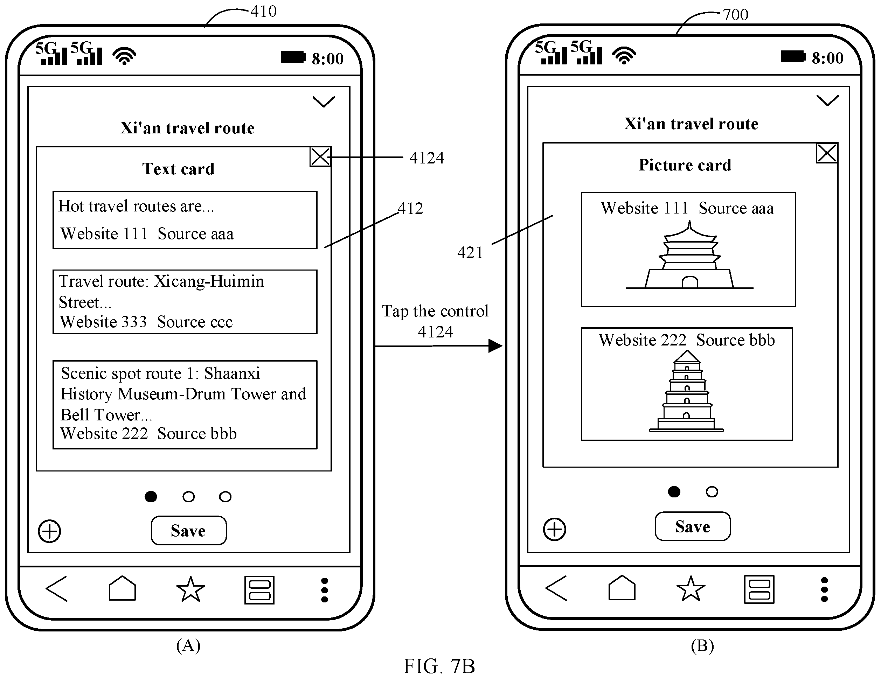

In an implementation, when displaying the semantic aggregation card set (for example, displaying the user interface 410 shown in FIG. 4(A)), the electronic device 100 may receive a touch operation (for example, an upward or downward drag operation or a tap operation) on any card in the semantic aggregation card set, and delete the card from the semantic aggregation card set in response to the touch operation. For specific examples, refer to FIG. 7A and FIG. 7B.

In the example shown in FIG. 7A(A), the electronic device 100 may display the user interface 410 shown in FIG. 4(A), where the user interface 410 is used to display the text card 412 in the semantic aggregation card set. The electronic device 100 may receive a drag operation on the text card 412. For example, the drag operation may be dragging up or down or sliding left or right. In FIG. 7A, an example in which the drag operation is dragging from bottom up is used for illustration. In response to the drag operation, the electronic device 100 deletes the text card 412 from the semantic aggregation card set. In this case, another card in the semantic aggregation card set may be displayed, for example, a user interface 700 shown in FIG. 7A(B) is displayed. The user interface 700 is used to display the picture card 421 in the semantic aggregation card set. Different from the page option 413 in the user interface 410 that includes three options, a page option 701 in the user interface 700 includes only two options, and the first option is in a selected state. This may indicate that the semantic aggregation card set includes two cards, and the picture card 421 is the first card in the two cards.

As shown in FIG. 7B(A), the electronic device 100 may display the user interface 410 shown in FIG. 4(A). The user interface 410 is used to display the text card 412 in the semantic aggregation card set. When the card is in an editable state, for example, the user selects a control used to edit the card, or makes the card in the editable state in another manner, a delete control 4124 is displayed in the text card 412. The electronic device 100 may receive a touch operation (for example, a tap operation) on the delete control 4124, and delete the text card 412 from the semantic aggregation card set in response to the touch operation. In this case, another card in the semantic aggregation card set may be displayed, for example, a user interface 700 shown in FIG. 7B(B) is displayed. Specific descriptions are similar to those of the user interface 700 shown in FIG. 7A(B), and a delete control may also be displayed in a picture card 421 displayed in the user interface 700 shown in FIG. 7B(B), used to trigger deletion of the picture card 421.

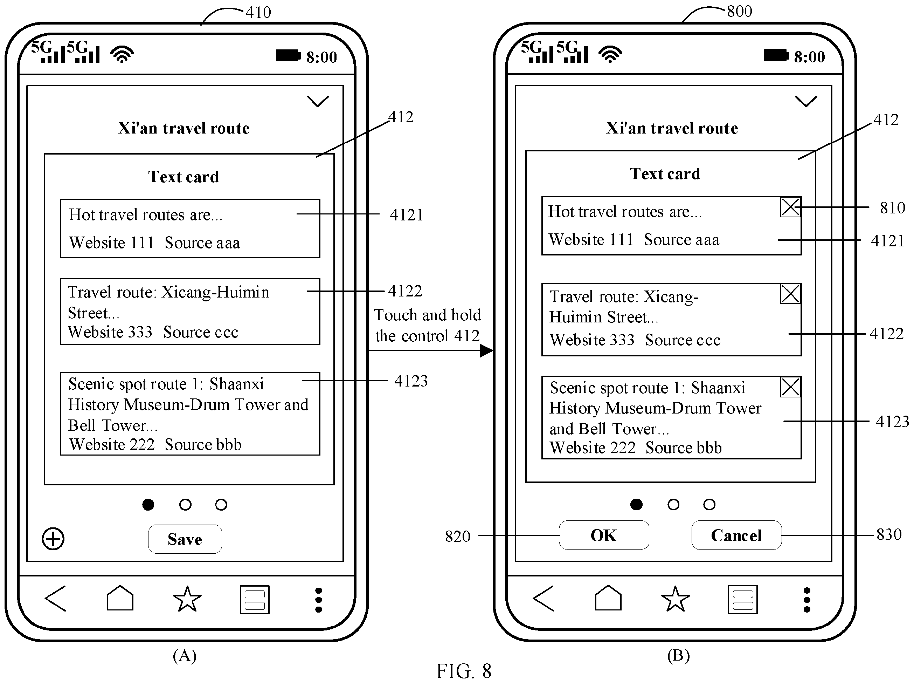

In an implementation, when displaying the semantic aggregation card set (for example, displaying the user interface 410 shown in FIG. 4(A)), the electronic device 100 may receive a touch operation (for example, a touch and hold operation) on any card in the semantic aggregation card set, and display, in response to the touch operation, a user interface (editing interface for short) used to edit the card. For a specific example, refer to FIG. 8.

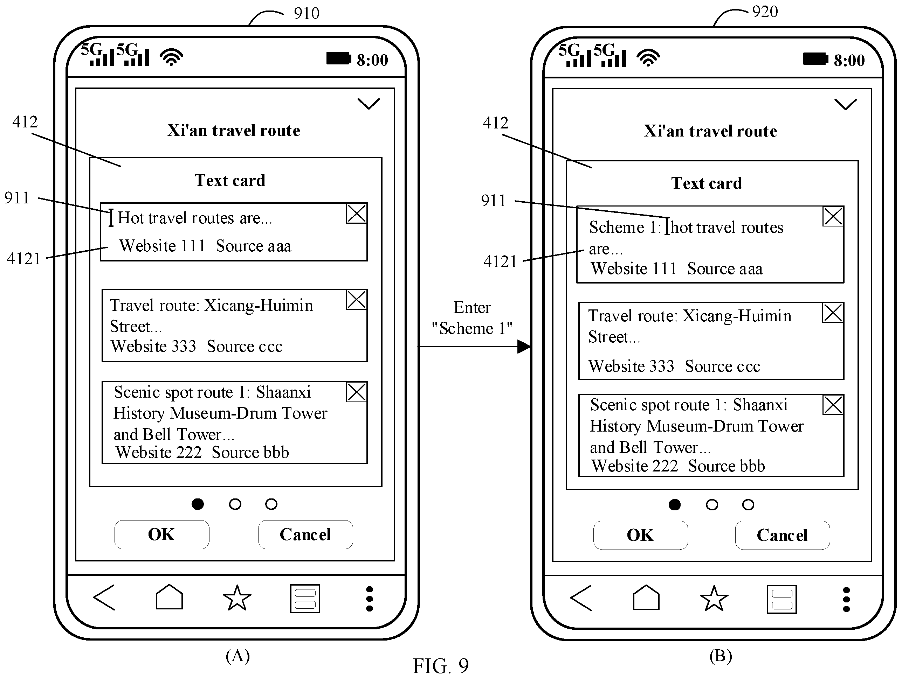

As shown in FIG. 8(A), the electronic device 100 may display the user interface 410 shown in FIG. 4(A). The electronic device 100 may receive a touch and hold operation on the text card 412 in the user interface 410. For example, the touch and hold operation is touch and hold with a single finger or touch and hold with two fingers, and in response to the touch and hold operation, a user interface 800 shown in FIG. 8(B) is displayed. The user interface 800 is used to implement an editing function of the text card 412. Any text content included in the text card 412 shown in the user interface 800 displays a delete control. The text content 4121 is used as an example for description, and other text content is similar. A delete control 810 is displayed in the text content 4121, and is used to delete the text content 4121 from the text card 412. The user interface 800 further includes an "OK" control 820 and a cancel control 830. The "OK" control 820 is used to save a current editing operation (that is, save the text card 412 displayed in the user interface 800), and the cancel control 830 is used to cancel a current editing operation (that is, save the text card 412 before editing). For examples of the foregoing editing operation, refer to the editing operations shown in FIG. 9 to FIG. 12.

In an implementation, after the operation shown in FIG. 8, the electronic device 100 may receive a touch operation (for example, a tap operation) on the text content 4121 in the user interface 800 shown in FIG. 8(B), and display an editing interface of the text content 4121 in response to the touch operation. For a specific example, refer to the user interface 910 shown in FIG. 9(A).

As shown in FIG. 9(A), the user interface 910 is used to implement an editing function of the text content 4121 in the text card 412. A cursor 911 is displayed before the characters "hot travel routes are..." included in the text content 4121, and the cursor 911 indicates an insertion point of text editing. The electronic device 100 may receive characters entered by the user, and display the characters before the cursor 911. For example, the electronic device 100 may receive characters "Scheme 1: " entered by the user, and display a user interface 920 shown in FIG. 9(B). The text content 4121 in the text card 412 shown in the user interface 920 includes characters "Scheme 1: hot travel routes are...", where the cursor 911 is displayed between the characters "Scheme 1: " and the characters "hot travel routes are...".

This application is not limited to the foregoing examples. In some other examples, when displaying the user interface 910 shown in FIG. 9(A), the electronic device 100 may further delete, in response to a user operation (for example, "delete" in voice input), characters included in the text content 4121. A specific editing manner of any content in the card set is not limited in this application.

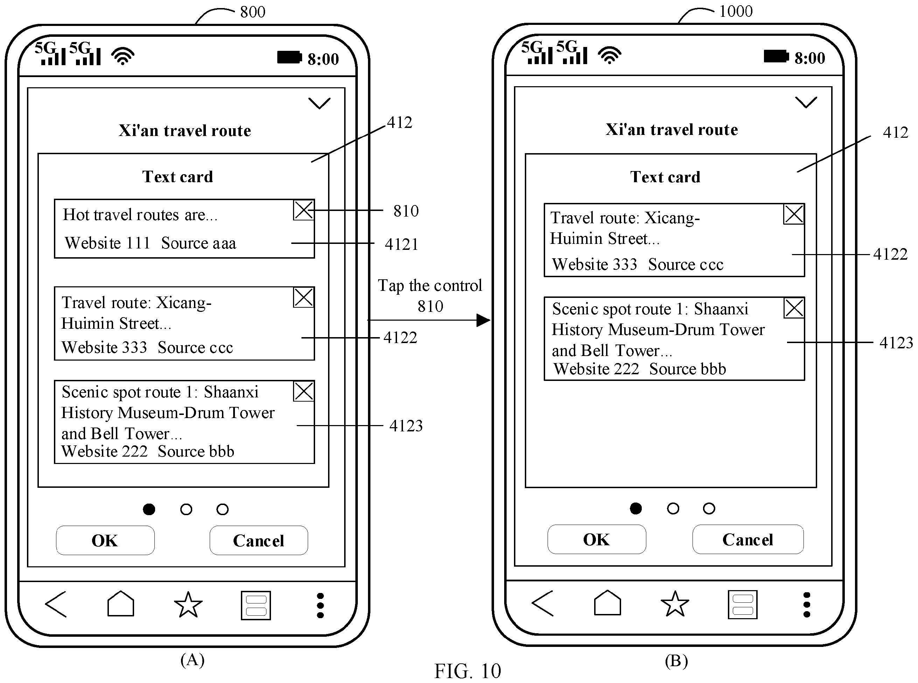

In an implementation, after the operation shown in FIG. 8, the electronic device 100 may receive a touch operation (for example, a tap operation) on the delete control 810 in the user interface 800 shown in FIG. 10(A) (that is, the user interface 800 shown in FIG. 8(B)), and delete the text content 4121 in the user interface 800 in response to the touch operation. In this case, the electronic device 100 may display a user interface 1000 shown in FIG. 10(B). The text card 412 in the user interface 1000 includes the text content 4122 and the text content 4123, and does not include the text content 4121.

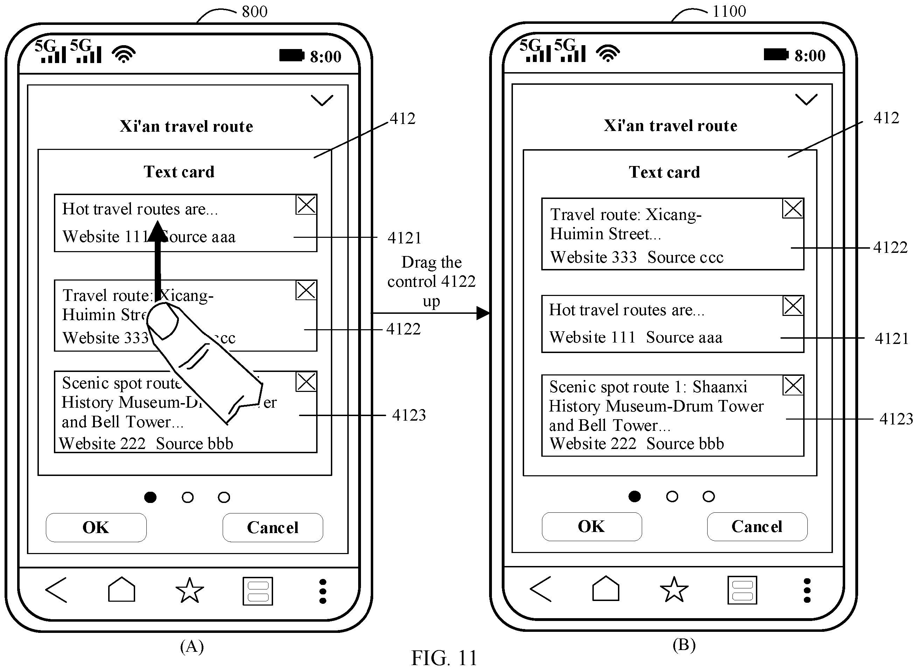

In an implementation, after the operation shown in FIG. 8, the electronic device 100 may receive a touch operation (for example, a downward or upward drag operation) on any text content in the user interface 800 shown in FIG. 8(B), and adjust, in response to the touch operation, a display position of the text content in the text card (this may also be understood as adjusting an arrangement sequence of the text content in the text card). For a specific example, refer to FIG. 11.

As shown in FIG. 11(A), the electronic device 100 may display a user interface 800 shown in FIG. 8(B). The electronic device 100 may receive a drag operation performed on the text content 4122 in the text card 412 shown in the user interface 800. For example, the drag operation is dragging up or down or dragging left or right. In FIG. 11, an example in which the drag operation is a user operation of dragging the text content 4122 in the text card 412 shown in the user interface 800 upward to a position of the text content 4121 is used for illustration. The electronic device 100 exchanges display positions of the text content 4121 and the text content 4122 in response to the drag operation. In this case, a user interface 1100 shown in FIG. 11(B) may be displayed. Different from an arrangement sequence (the text content 4121 is displayed above the text content 4122) of text content in the user interface 800 shown in FIG. 11(A), in the text card 412 shown in the user interface 1100, the text content 4122 is displayed above the text content 4121. This application is not limited to the foregoing examples. In some other examples, the electronic device 100 may display the user interface 1100 in response to a user operation of dragging the text content 4121 in the user interface 800 downward to a position of the text content 4122.

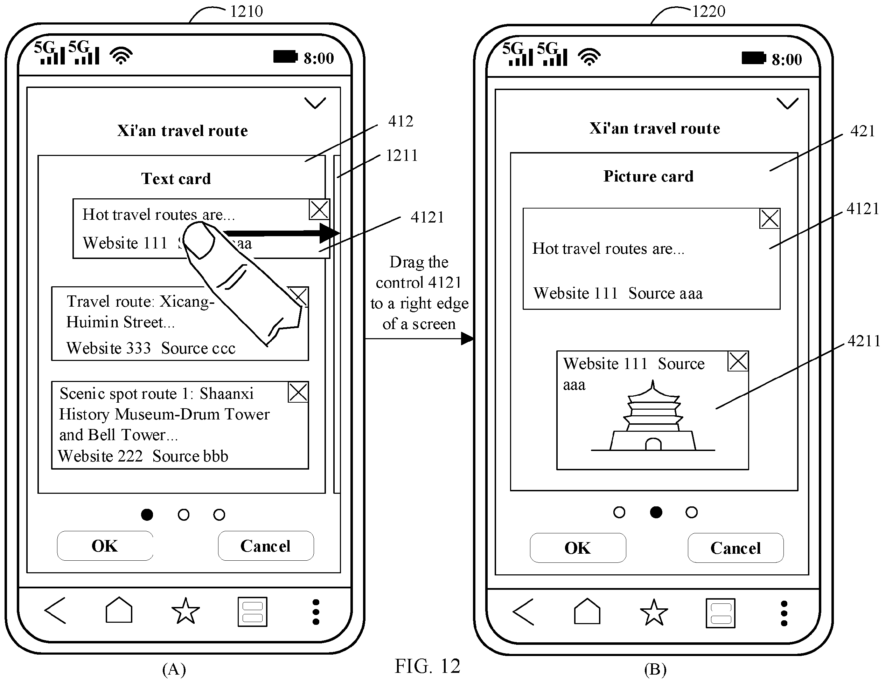

In an implementation, after the operation shown in FIG. 8, the electronic device 100 may receive a touch operation (for example, a leftward or rightward drag operation) on any text content in the user interface 800 shown in FIG. 8(B), and adjust, in response to the touch operation, a display position of the text content in the semantic aggregation card set. For a specific example, refer to FIG. 12.

As shown in FIG. 12(A), the electronic device 100 may display a user interface 1210, where the user interface 1210 may include the text card 412 in the user interface 800 shown in FIG. 8(B) and a preview card 1211. In an implementation, the user interface 1210 may be a user interface displayed by the electronic device 100 in response to a drag operation on the text content 4121 in the user interface 800 shown in FIG. 8(B). For example, the drag operation is used to drag the text content 4121 in the user interface 800 rightwards to a position of the text content 4121 in the user interface 1210. The preview card 1211 indicates a picture card that is arranged behind the text card 412 and that is in the semantic aggregation card set.

The electronic device 100 may receive a drag operation performed on the text content 4121. For example, the drag operation is dragging up or down, or dragging left or right. In FIG. 12, an example in which the drag operation is a user operation of dragging the text content 4121 to a right edge of the screen (this may also be understood as a user operation of dragging the text content 4121 to a position of the preview card 1211) is used for illustration. In response to the drag operation, the electronic device 100 moves the text content 4121 to the picture card indicated by the preview card 1211 for display. For a specific example, refer to a user interface 1220 shown in FIG. 12(B). Different from the picture card 421 in the user interface 420 shown in FIG. 4(B), the picture card 421 in the user interface 1220 not only includes the picture content 4211 and the picture content 4212 (not shown), but also includes the text content 4121.

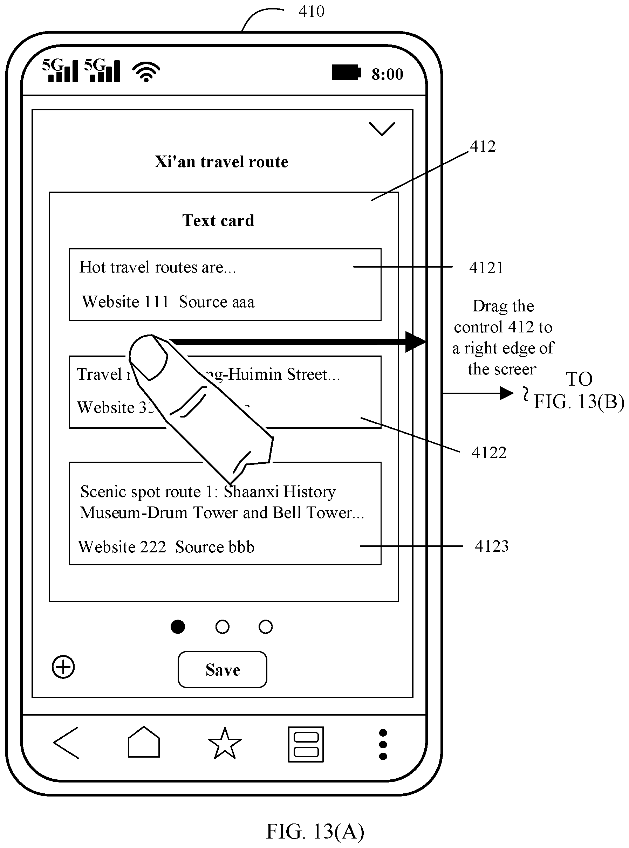

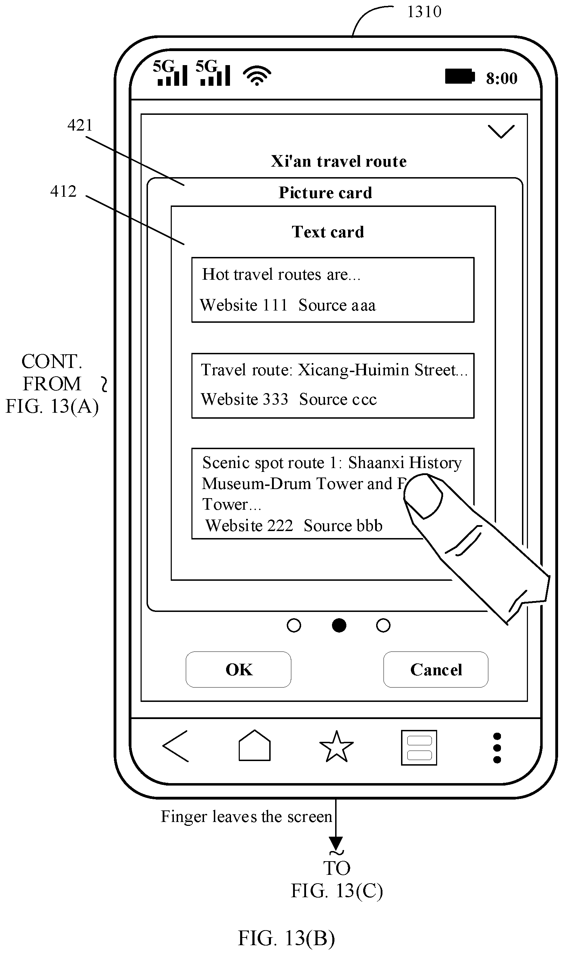

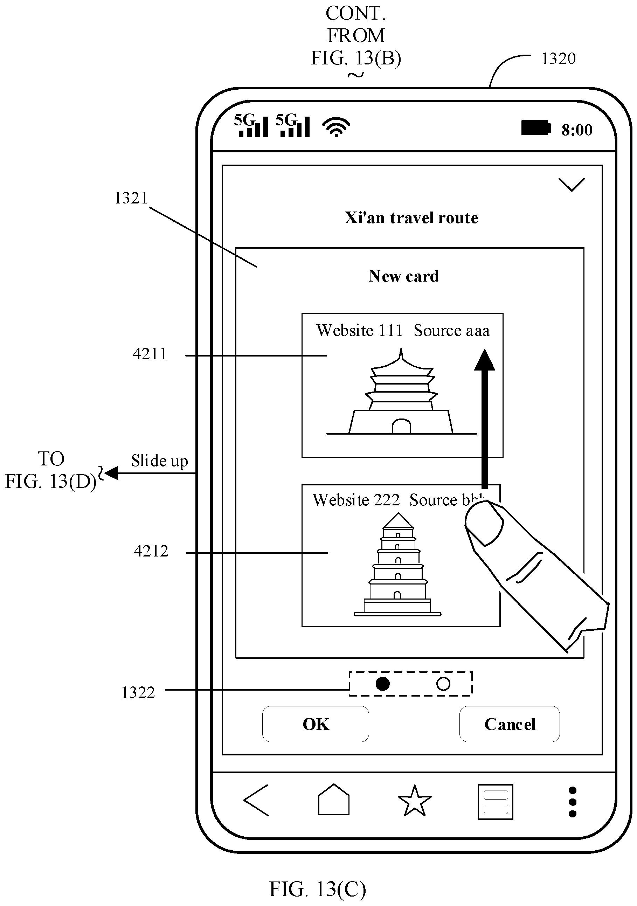

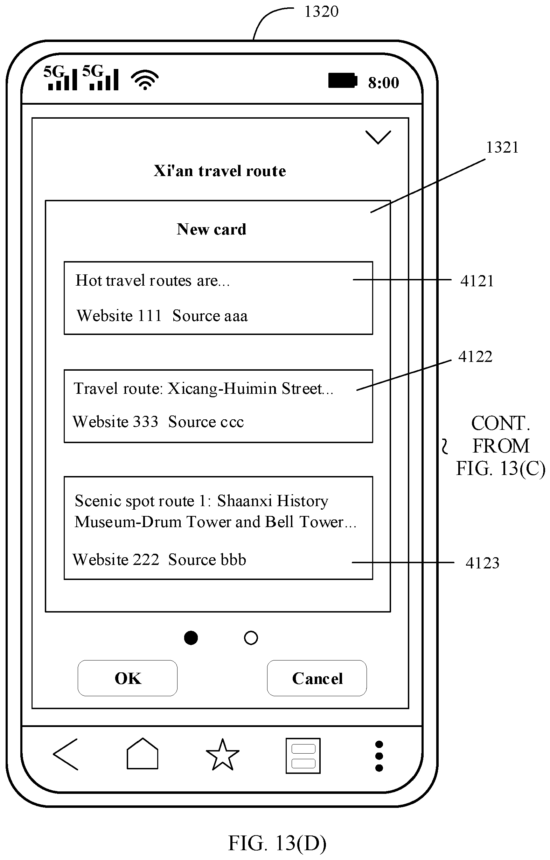

In an implementation, when displaying the semantic aggregation card set (for example, displaying the user interface 410 shown in FIG. 4(A)), the electronic device 100 may receive a touch operation (for example, a leftward or rightward drag operation) on any card in the semantic aggregation card set, and combine the card and another card into one card in response to the touch operation. For a specific example, refer to FIG. 13(A), FIG. 13(B), FIG. 13(C), and FIG. 13(D).

As shown in FIG. 13(A), the electronic device 100 may display a user interface 410 shown in FIG. 4(A). The electronic device 100 may receive a drag operation performed on the text card 412 in the user interface 410. For example, the drag operation is dragging up or down or dragging left or right. In FIG. 13(A), FIG. 13(B), FIG. 13(C), and FIG. 13(D), an example in which the drag operation is a user operation of dragging the text card 412 to a right edge of the screen is used for illustration. The electronic device 100 displays, in response to the user operation, a user interface 1310 shown in FIG. 13(B). It should be noted that when the electronic device 100 displays the user interface 1310, a finger of the user still touches the screen and is located on the text card 412, and the text card 412 is located inside the picture card 421 in the user interface 1310 and is displayed on the picture card 421. The electronic device 100 may combine the text card 412 and the picture card 421 in response to a finger release operation (that is, the finger leaves the screen, and this may be understood as a part of the foregoing drag operation) of the user, for example, move content included in the text card 412 to the picture card 421 for display. In this case, the user interface 1320 shown in FIG. 13(C) may be displayed. The user interface 1320 may include a new card 1321 and a page option 1322. The page option 1322 indicates that the semantic aggregation card set includes two cards, and the currently displayed new card 1321 is the first card in the two cards. The new card 1321 is a card obtained by combining the text card 412 and the picture card 421, and includes not only the picture content 4211 and the picture content 4212 in the picture card 421, but also the text content 4121, the text content 4122, and the text content 4123 in the text card 412. For details, refer to the user interface 1320 shown in FIG. 13(D). The user interface 1320 shown in FIG. 13(D) may be a user interface displayed by the electronic device 100 in response to a slide operation on the new card 1321 in the user interface 1320 shown in FIG. 13(C). For example, the slide operation is sliding left or right or sliding up or down. In FIG. 13(A), FIG. 13(B), FIG. 13(C), and FIG. 13(D), an example in which the slide operation is sliding from bottom up is used for illustration.

This application is not limited to the foregoing examples. In some other examples, after the operation shown in FIG. 8, the electronic device 100 may receive a touch operation (for example, a leftward or rightward drag operation) on any card in the semantic aggregation card set, and adjust a display position of the card in the semantic aggregation card set in response to the touch operation. This may be understood as that when the electronic device displays an editing interface of the card, the display position of the card is adjusted in response to the touch operation on the card. For example, the electronic device 100 may switch display positions of the text card 412 and the picture card 421 in response to a user operation of dragging the text card 412 in the user interface 800 shown in FIG. 8(B) rightwards. In this case, the picture card 421 is the first card, and the text card 412 is the second card.

This application is not limited to the foregoing examples. In some other examples, when the electronic device displays an editing interface of a card, the card and another card may be combined into one card in response to a touch operation (for example, a leftward or rightward drag operation) on the card; or when displaying the semantic aggregation card set, the electronic device adjusts, in response to a touch operation (for example, a leftward or rightward drag operation) on any card in the semantic aggregation card set, a display position of the card in the semantic aggregation card set. A user operation that triggers card adjustment is not limited in this application.

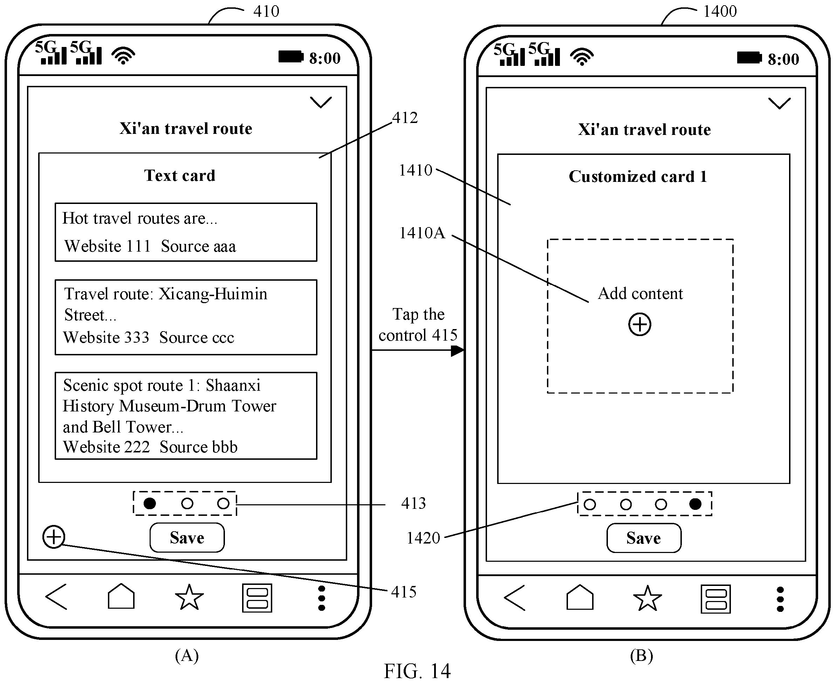

In an implementation, when displaying the semantic aggregation card set (for example, displaying the user interface 410 shown in FIG. 4(A)), the electronic device 100 may receive a touch operation (for example, a tap operation) on the new control 415, and create a new card in the semantic aggregation card set in response to the touch operation. For a specific example, refer to FIG. 14.

As shown in FIG. 14(A), the electronic device 100 may display the user interface 410 shown in FIG. 4(A). The electronic device 100 may receive a touch operation (for example, a tap operation) on the new control 415 in the user interface 410, and create, in response to the touch operation, a card that does not include any content. In this case, a user interface 1400 shown in FIG. 14(B) may be displayed. The user interface 1400 may include a card 1410 and a page option 1420. The card 1410 may include a title ("customized card 1") and an add control 1410A. The add control 1410A is used to add content to the card 1410. Different from the page option 413 (including three options) in the user interface 410, the page option 1420 includes four options, and the fourth option is in a selected state. This may represent that the semantic aggregation card set includes four cards, and the currently displayed card 1410 is the fourth card in the four cards.

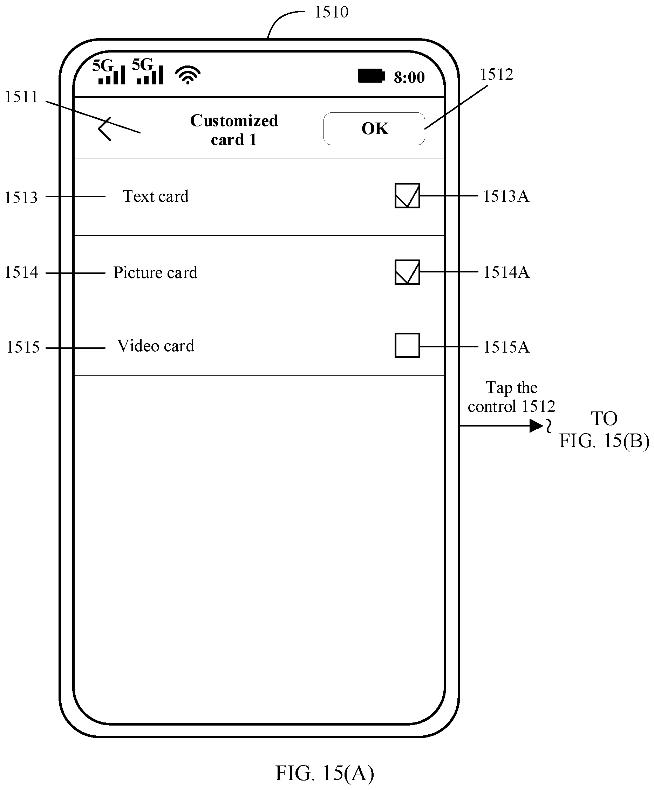

In an implementation, after the operation shown in FIG. 14, the electronic device 100 may receive a touch operation (for example, a tap operation) on the add control 1410A in the user interface 1400 shown in FIG. 14(B), and display, in response to the touch operation, a user interface 1510 shown in FIG. 15(A).

As shown in FIG. 15(A), the user interface 1510 includes a title 1511 ("customized card 1"), which may indicate that the user interface 1510 is used to add content to a card titled "customized card 1" (customized card 1 for short). The customized card 1 is the card 1410 in the user interface 1400 shown in FIG. 14(B). The user interface 1510 further includes an "OK" control 1512 and a plurality of card options. The plurality of card options include, for example, an option 1513 of a text card, an option 1514 of a picture card, and an option 1515 of a video card. A select control displayed in any option is used to select to add content included in a corresponding card to the customized card 1 or cancel the selection. In the user interface 1510, a select control 1513A displayed in the option 1513 and a select control 1514A displayed in the option 1514 are in a selected state, and a select control 1515A displayed in the option 1515 is in an unselected state. This may represent that content included in the text card and the picture card is currently selected to be added to the customized card 1. The "OK" control 1512 is used to trigger adding of content included in a selected card to the customized card 1.

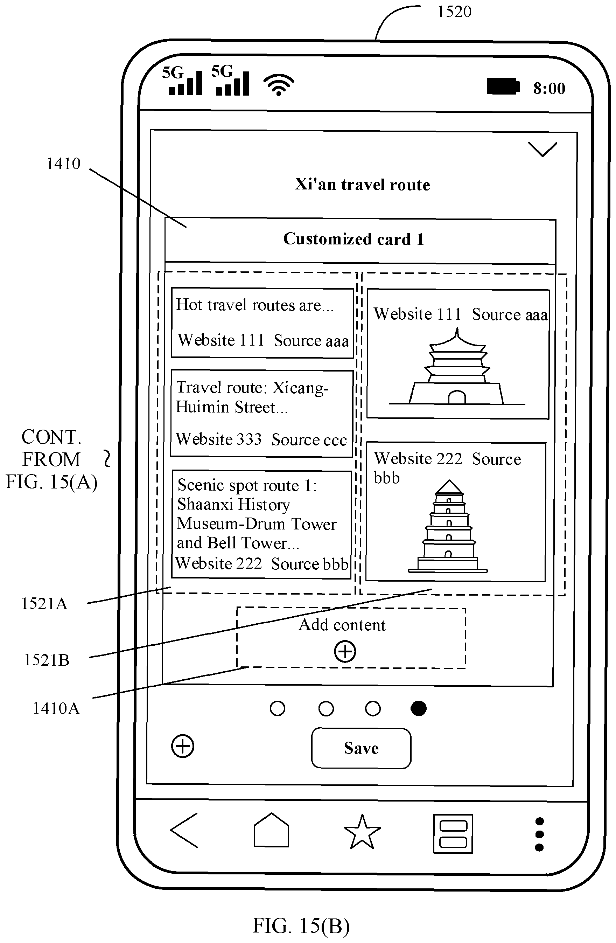

The electronic device 100 may receive a touch operation (for example, a tap operation) on the "OK" control 1512, and display, in response to the touch operation, a user interface 1520 shown in FIG. 15(B). The card 1410 in the user interface 1520 includes text content 1521A included in a selected text card (that is, the text card 412 in the user interface 410 shown in FIG. 4(A)) and picture content 1521B included in a selected picture card (that is, the text card 421 in the user interface 420 shown in FIG. 4(B)), and does not include video content included in an unselected video card. The card 1410 in the user interface 1520 further includes the add control 1410A, which may be used to continue to add content to the card 1410.

This application is not limited to the foregoing examples. In some other examples, the card 1410 in the user interface 1520 may also be replaced with the new card 1321 in the user interface 1320 shown in FIG. 13(C) and FIG. 13(D) (in this case, the title needs to be changed to "customized card 1"). Similarly, the new card 1321 in the user interface 1320 shown in FIG. 13(C) and FIG. 13(D) may also be replaced with the card 1410 in the user interface 1520 (in this case, the title needs to be changed to "new card").

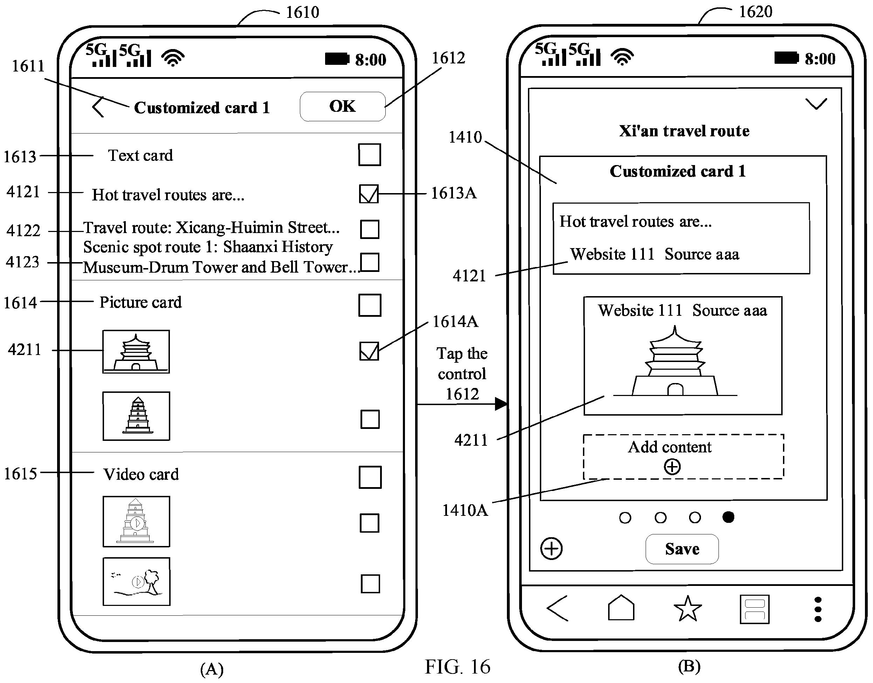

In an implementation, after the operation shown in FIG. 14, the electronic device 100 may receive a touch operation (for example, a tap operation) on the add control 1410A in the user interface 1400 shown in FIG. 14(B), and display, in response to the touch operation, a user interface 1610 shown in FIG. 16(A).

As shown in FIG. 16(A), the user interface 1610 includes a title 1611 ("customized card 1"). Similar to the user interface 1510 shown in FIG. 15(A), the user interface 1610 is used to add content to the customized card 1. A difference lies in that the user interface 1610 may further add any content included in a card to the customized card 1. The user interface 1610 includes an "OK" control 1612 and a plurality of card options. The plurality of card options include, for example, an option 1613 of a text card, an option 1614 of a picture card, and an option 1615 of a video card. At least one piece of content included in a corresponding card and a select control corresponding to each piece of content are displayed in any option, and any select control is used to add corresponding content to the customized card 1 or cancel the selection. The option 1613 is used as an example for description, and other options are similar. The text content 4121, the text content 4122, and the text content 4123 that are included in the text card, and select controls respectively corresponding to the three pieces of text content, for example, a select control 1613A corresponding to the text content 4121 are displayed in the option 1613. In the user interface 1610, the select control 1613A corresponding to the text content 4121 and a select control 1614A that corresponds to the picture content 4211 in the option 1614 of the picture card 421 are in a selected state, and another select control is in an unselected state. This may represent that the text content 4121 and the picture content 4211 are currently selected to be added to the customized card 1.

The electronic device 100 may receive a touch operation (for example, a tap operation) on the "OK" control 1612, and display, in response to the touch operation, a user interface 1620 shown in FIG. 16(B). The card 1410 in the user interface 1620 includes the selected text content 4121 and the selected picture content 4211, and does not include other unselected content. The card 1410 in the user interface 1520 further includes the add control 1410A, which may be used to continue to add content to the card 1410.

This application is not limited to the foregoing examples. In some other examples, content may also be added to cards such as the text card, the picture card, and the video card in the semantic aggregation card set based on the operation shown in FIG. 15(A) and FIG. 15(B) or FIG. 16.

This application is not limited to the foregoing implementations. In another implementation, when displaying the semantic aggregation card set (for example, displaying the user interface 410 shown in FIG. 4(A)), the electronic device 100 may receive a touch operation (for example, a tap operation) on the new control 415, and display, in response to the touch operation, a content selection interface shown in FIG. 15(A) or FIG. 16(A). The electronic device 100 may generate a new card based on web page content selected by the user based on the content selection interface, for example, the card 1410 in the user interface 1520 shown in FIG. 15(B), or the card 1410 in the user interface 1620 shown in FIG. 16(B).

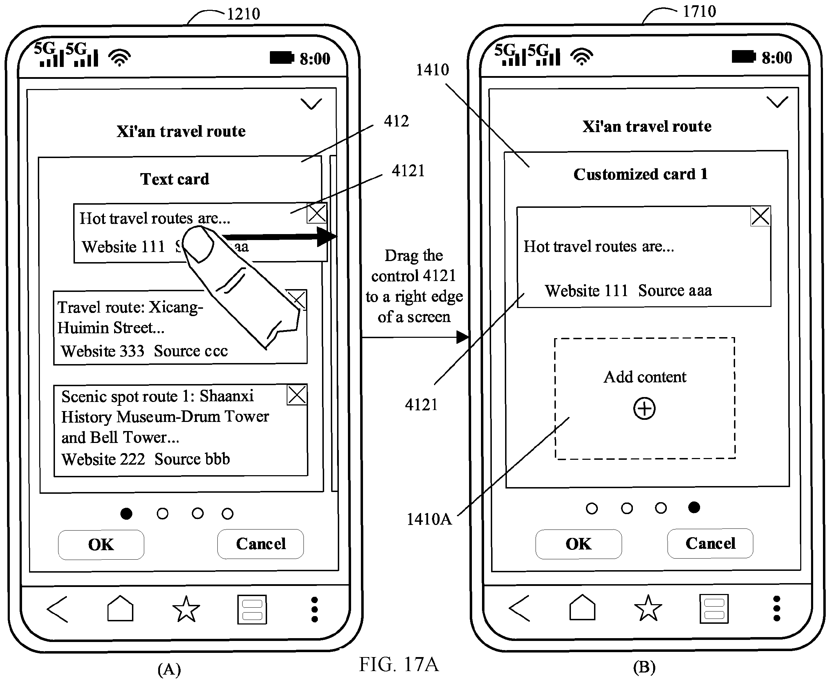

In an implementation, after the operation shown in FIG. 14, the electronic device 100 may receive a touch operation (for example, a leftward or rightward drag operation) on any content in a card, and in response to the touch operation, move the content to the card 1410 in the user interface 1400 shown in FIG. 14(B) for display. For a specific example, refer to FIG. 17A.

As shown in FIG. 17A(A), the electronic device 100 may display a user interface 1210 shown in FIG. 12(A), and the text card 412 in the user interface 1210 includes the text content 4121. The electronic device 100 may receive a drag operation performed on the text content 4121. For example, the drag operation is dragging left or right or dragging up or down. In FIG. 17A, an example in which the drag operation is a user operation of dragging the text content 4121 to a right edge of the screen is used for illustration. In response to the drag operation, the electronic device 100 moves the text content 4121 to the card 1410 in the user interface 1400 shown in FIG. 14(B) for display. For a specific example, refer to a user interface 1710 shown in FIG. 17A(B). The card 1410 in the user interface 1710 includes the text content 4121 and the add control 1410A. The add control 1410A is, for example, used to add content to the card 1410 in the manner shown in FIG. 15(A) and FIG. 15(B) or FIG. 16.

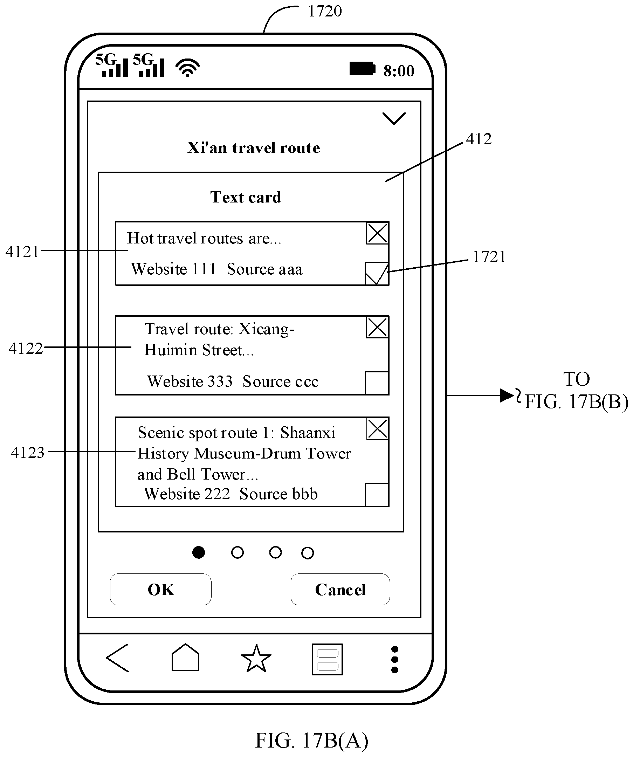

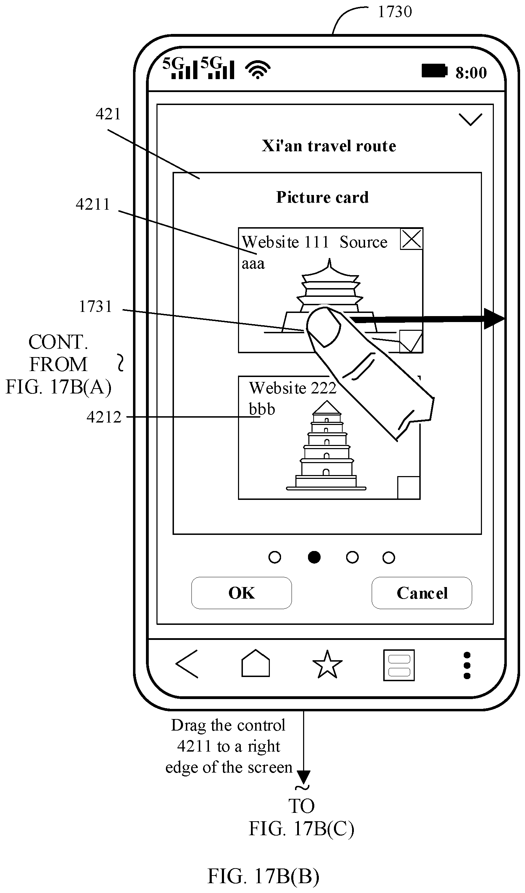

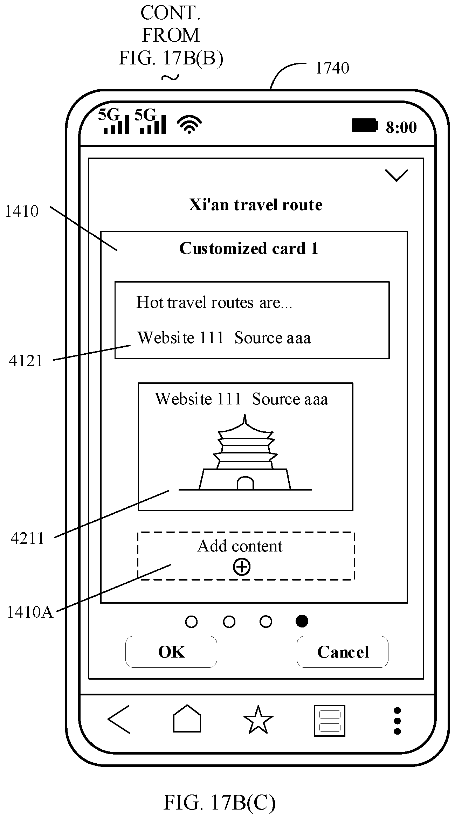

This application is not limited to the example shown in FIG. 17A. In another implementation, a plurality of pieces of content on a same card or different cards in the semantic aggregation card set may be further moved to the card 1410 in the user interface 1400 shown in FIG. 14(B) for display. For a specific example, refer to FIG. 17B(A), FIG. 17B(B), and FIG. 17B(C).

As shown in FIG. 17B(A), the electronic device 100 may display a user interface 1720. The user interface 1720 is similar to the user interface 800 shown in FIG. 8(B), and a difference lies in that any text content included in the text card 412 shown in the user interface 1720 displays a select control. In the user interface 1720, a select control 1721 displayed in the text content 4121 is in a selected state, and select controls displayed in the text content 4122 and the text content 4123 are in an unselected state. This may represent that the text content 4121 is currently selected.

The electronic device 100 may further display a user interface 1730 shown in FIG. 17B(B). The user interface 1730 is similar to the user interface 1720, and a difference lies in that the user interface 1730 is used to implement an editing function of the picture card 421. In the user interface 1730, a select control 1731 displayed in the picture content 4211 is in a selected state, and a select control displayed in the picture content 4212 is in an unselected state. This may represent that the picture content 4211 is currently selected.

The electronic device 100 may receive a touch operation on the picture content 4211 in the user interface 1730. For example, the touch operation is dragging left or right or dragging up or down. In FIG. 17B(A), FIG. 17B(B), and FIG. 17B(C), an example in which the touch operation is a user operation of dragging the picture content 4211 to a right edge of the screen is used for illustration. In response to the touch operation, the electronic device 100 moves the selected text content 4121 and the selected picture content 4211 to the card 1410 in the user interface 1400 shown in FIG. 14(B) for display. For a specific example, refer to the user interface 1740 shown in FIG. 17B(C). The card 1410 in the user interface 1740 includes the foregoing selected text content 4121 and picture content 4211, and further includes the add control 1410A. The add control 1410A is, for example, used to add content to the card 1410 in the manner shown in FIG. 15(A) and FIG. 15(B) or FIG. 16.

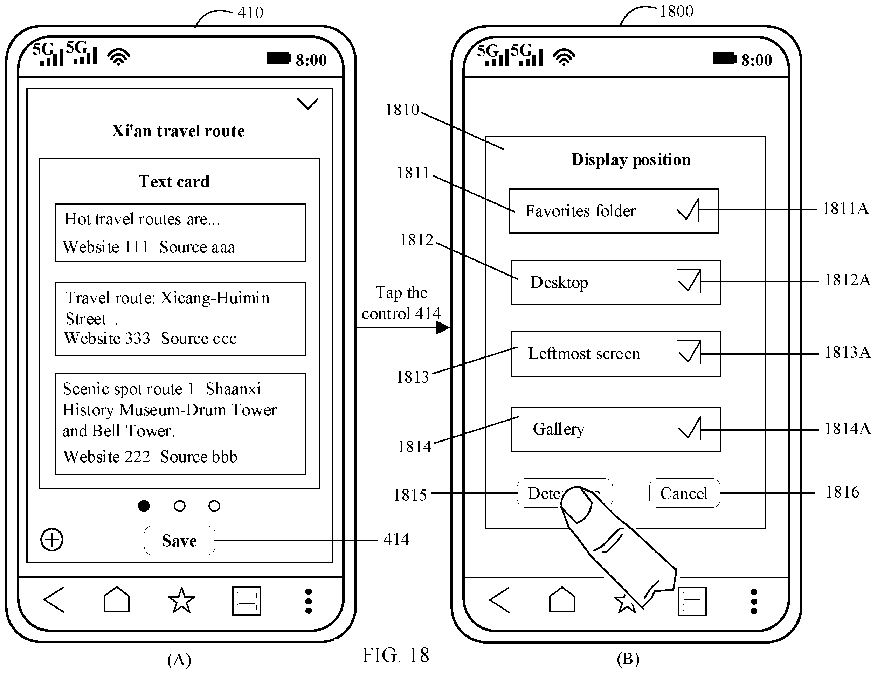

In an implementation, when displaying the semantic aggregation card set (for example, displaying the user interface 410 shown in FIG. 4(A)), the electronic device 100 may receive a touch operation (for example, a tap operation) on the save control 414, and save the semantic aggregation card set in response to the touch operation. For a specific example, refer to FIG. 18.

As shown in FIG. 18(A), the electronic device 100 may display the user interface 410 shown in FIG. 4(A). The electronic device 100 may receive a touch operation (for example, a tap operation) on the save control 414 in the user interface 410, and display, in response to the touch operation, a user interface 1800 shown in FIG. 18(B). The user interface 1800 is used to select a display position of an entry for secondary loading of the semantic aggregation card set. A prompt box 1810 in the user interface 1800 includes a title ("display position") and options of a plurality of display positions. The options of the plurality of display positions include, for example, an option 1811 of a favorites folder in a browser, an option 1812 of a desktop, an option 1813 of a leftmost screen, and an option 1814 of a gallery, and a select control displayed in any option is used to select to save the semantic aggregation card set to a display position corresponding to the option or cancel the selection. In the user interface 1800, a select control 1811A displayed in the option 1811, a select control 1812A displayed in the option 1812, a select control 1813A displayed in the option 1813, and a select control 1814A displayed in the option 1814 are all in a selected state. This may represent that the semantic aggregation card set is currently selected to be saved to the favorites folder of the browser application, the desktop, the leftmost screen application, and the gallery application. It may be understood that more or fewer select controls may be selected. The user interface 1800 further includes an "OK" control 1815 and a cancel control 1816, where the cancel control 1816 is used to cancel saving of the semantic aggregation card set. The electronic device 100 may receive a touch operation (for example, a tap operation) on the "OK" control 1815, and save the semantic aggregation card set to the foregoing selected display position in response to the touch operation.

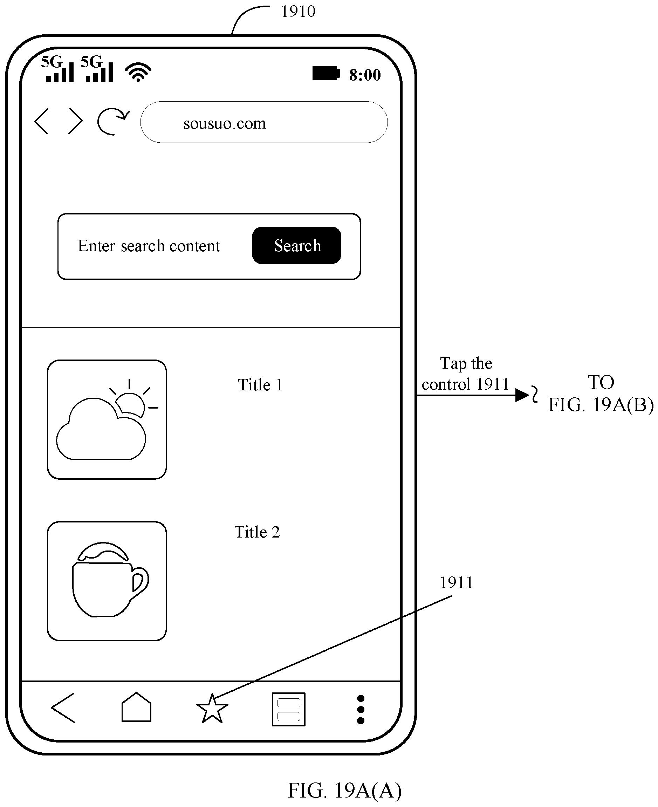

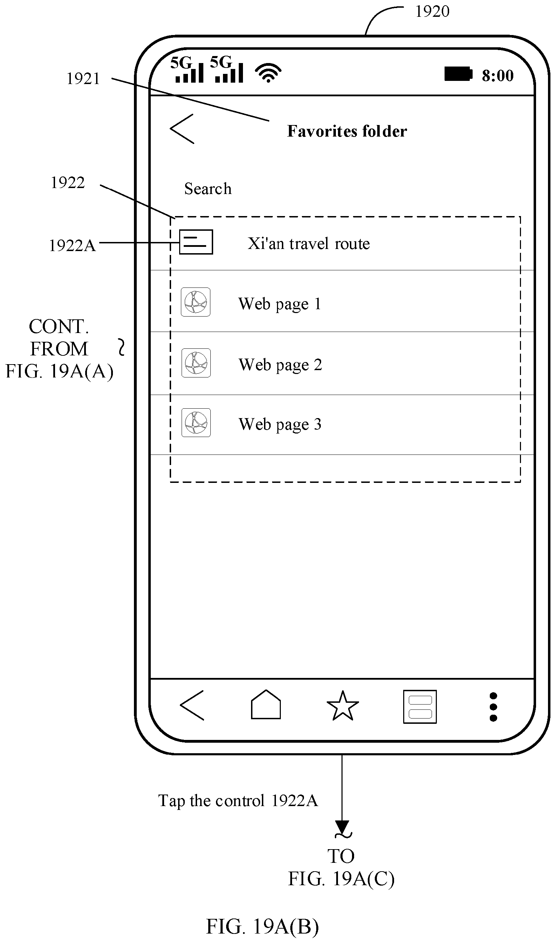

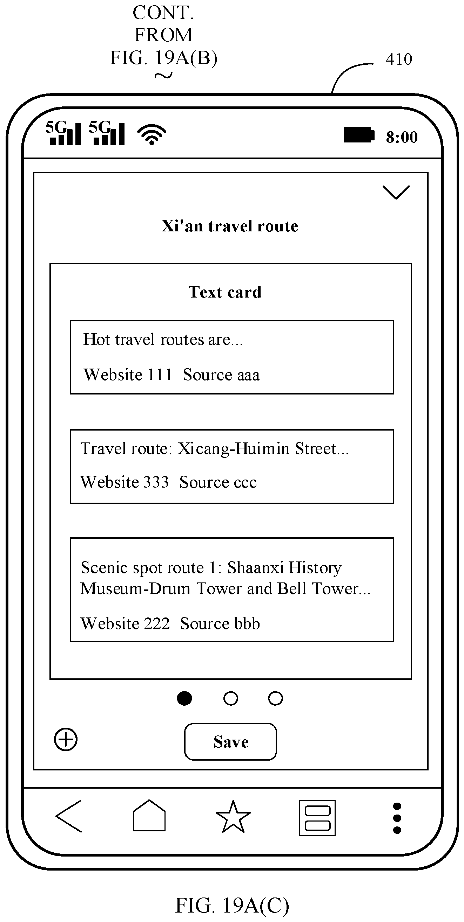

In an implementation, after the operation shown in FIG. 18, the user may view the semantic aggregation card set again by using the favorites folder of the browser application. For a specific example, refer to FIG. 19A(A), FIG. 19A(B), and FIG. 19A(C).

As shown in FIG. 19A(A), the electronic device 100 may display a user interface 1910 of the browser, a navigation bar located at the bottom of the user interface 1910 may include a control 1911, and the control 1911 is used to trigger opening of the favorites folder. The electronic device 100 may receive a touch operation (for example, a tap operation) on the control 1911, and display, in response to the touch operation, a user interface 1920 shown in FIG. 19A(B). The user interface 1920 includes a title 1921 ("favorites folder") and a favorites list 1922. The favorites list 1922 includes, for example, an option 1922A of a card set in favorites and an option of a plurality of web pages in favorites. Characters included in the option 1922A are a title "Xi'an travel route" of the card set in favorites. The electronic device 100 may receive a touch operation (for example, a tap operation) on the option 1922A, and display specific content of the semantic aggregation card set in favorites in response to the touch operation, for example, display the user interface 410 shown in FIG. 19A(C) (that is, the user interface 410 shown in FIG. 4(A)).

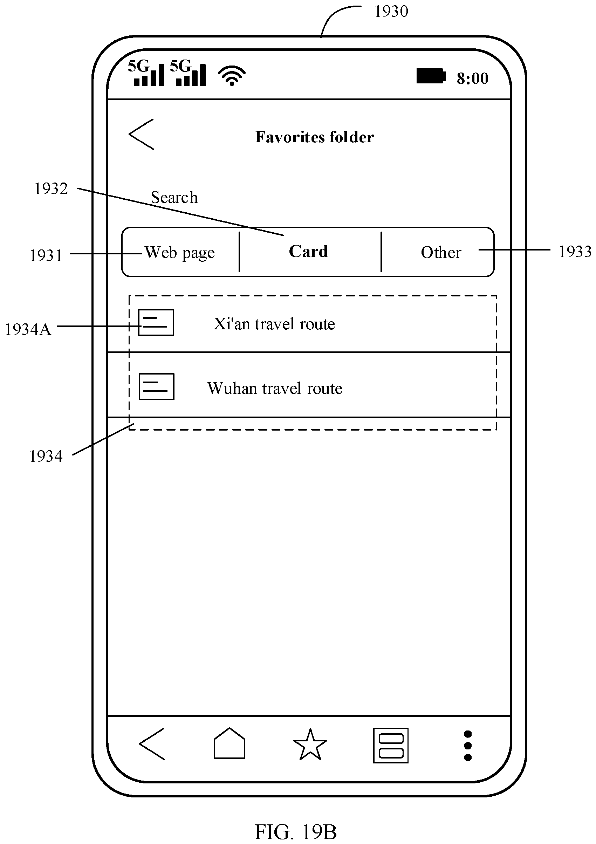

This application is not limited to the example shown in FIG. 19A(A), FIG. 19A(B), and FIG. 19A(C). In another implementation, the electronic device 100 may display, in response to a touch operation (for example, a tap operation) on the control 1911 in the user interface 1910 shown in FIG. 19A(A), a user interface 1930 shown in FIG. 19B in response to the touch operation. The user interface 1930 includes a plurality of page options, for example, a page option 1931, a page option 1932, and a page option 1933, where the page option 1931 is used to trigger display of the list of the web pages in favorites, the page option 1932 is used to trigger display of the list of the card sets in favorites, and the page option 1933 is used to trigger display of the list of other content in favorites. The page option 1932 in the user interface 1930 is in a selected state. This represents that a list 1934 of the card sets in favorites is currently displayed. The list 1934 includes, for example, an option 1934A indicating a card set titled "Xi'an travel route" and an option indicating a card set titled "Wuhan travel route". The electronic device 100 may display specific content of a corresponding card set in response to a touch operation (for example, a tap operation) on the option 1934A, for example, display the user interface 410 shown in FIG. 4(A).

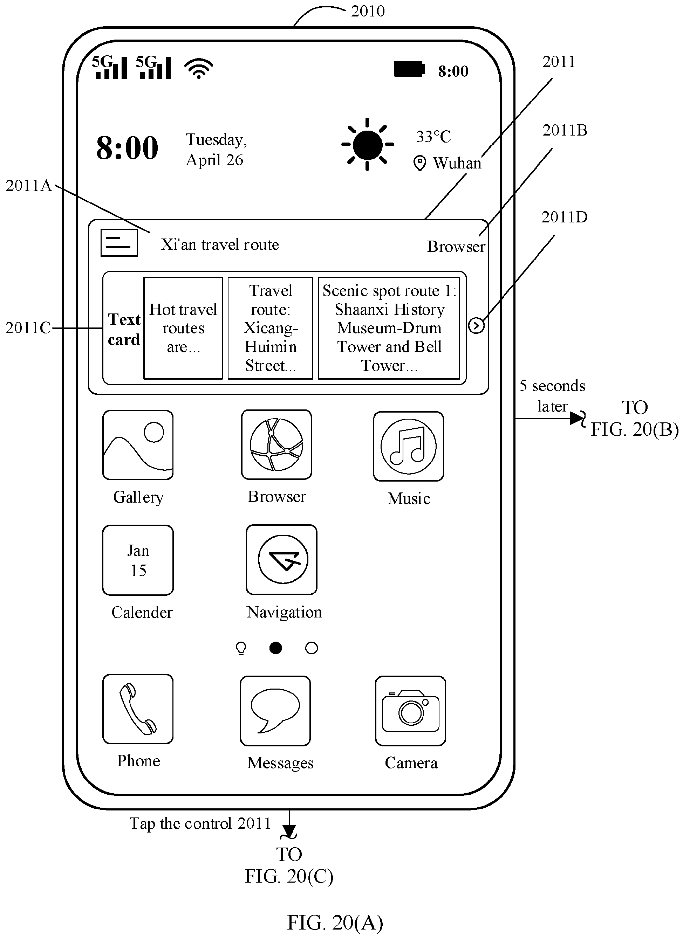

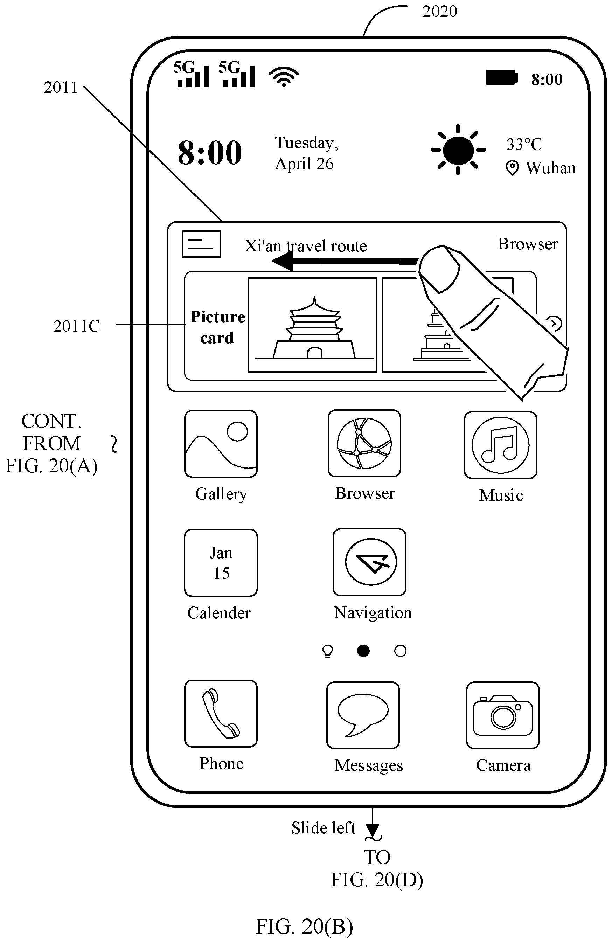

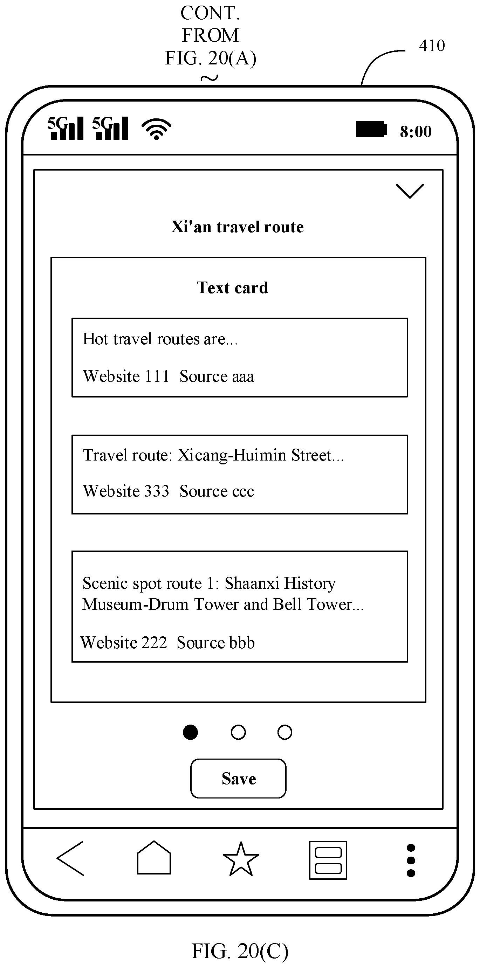

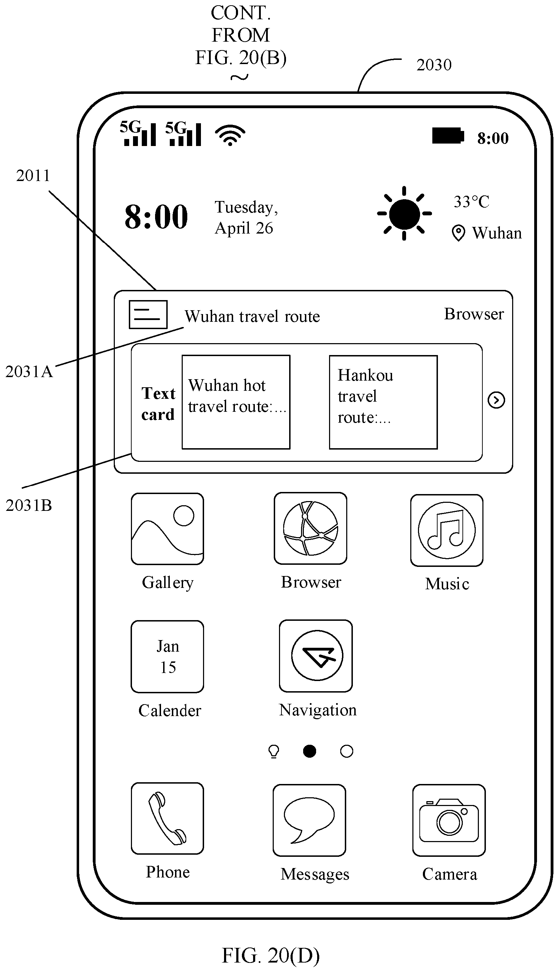

In an implementation, after the operation shown in FIG. 18, the user may view the semantic aggregation card set again by using the desktop. For a specific example, refer to FIG. 20(A), FIG. 20(B), FIG. 20(C), and FIG. 20(D).

As shown in FIG. 20(A), the electronic device 100 may display a user interface 2010. For example, the user interface 2010 is a desktop. A control 2011 in the user interface 2010 is used to indicate a card set in favorites, and the control 2011 includes a title 2011A, application information 2011B, a card control 2011C, and a page flip control 2011D. Characters included in the title 2011A are a title "Xi'an travel route" of the card set in favorites. The application information 2011B indicates that the card set in favorites belongs to the browser application. The card control 2011C is used to display a text card (that is, the text card 412 in the user interface 410 shown in FIG. 4(A)) in the card set in favorites. The page flip control 2011D is used to trigger switching of a card type displayed in the card control 2011C. The control 2011 may switch, at an interval of preset duration, the card type displayed in the card control 2011C. For example, after five seconds, the electronic device 100 may display a user interface 2020 shown in FIG. 20(B). The card control 2011C in the control 2011 shown in the user interface 2020 is used to display a picture card (that is, the picture card 421 in the user interface 420 shown in FIG. 4(B)) in the card set in favorites. The electronic device 100 may receive a touch operation (for example, a tap operation) on the control 2011 in the user interface 2010 or the user interface 2020, and display specific content of the semantic aggregation card set in favorites in response to the touch operation, for example, display the user interface 410 shown in FIG. 20(C) (that is, the user interface 410 shown in FIG. 4(A)).

The electronic device 100 may receive a touch operation on the control 2011 in the user interface 2010 or the user interface 2020. For example, the touch operation is sliding left or right or sliding up or down. In FIG. 20(A), FIG. 20(B), FIG. 20(C), and FIG. 20(D), an example in which the touch operation is sliding from right to left is used for illustration. In response to the touch operation, the electronic device 100 displays another semantic aggregation card set in favorites, for example, displays a user interface 2030 shown in FIG. 20(D). The user interface 2030 is similar to the user interface 2010, and a difference lies in that a card set in favorites indicated by the control 2011 is different. In the user interface 2030, characters included in a title 2031A in the control 2011 are a title "Wuhan travel route" of a currently displayed card set, and a card control 2031B in the control 2011 is used to display a text card in the card set.

In some examples, the electronic device 100 may receive a touch operation (for example, a tap operation) on the card control 2011C (used to display a text card) in the user interface 2010 shown in FIG. 20(A), and display the text card in response to the touch operation, for example, display the user interface 410 shown in FIG. 4(A). In some other examples, the electronic device 100 may receive a touch operation (for example, a tap operation) on the card control 2011C (used to display a picture card) in the user interface 2020 shown in FIG. 20(B), and display the picture card in response to the touch operation, for example, display the user interface 420 shown in FIG. 4(B). In other words, when card types displayed by card controls on which the user operation is performed are different, cards displayed by the electronic device 100 in response to the user operation may be different. Similarly, the electronic device 100 may further display a video card in response to a touch operation (for example, a tap operation) on a card control used to display the video card, for example, display the user interface 430 shown in FIG. 4(C) in response to the touch operation.

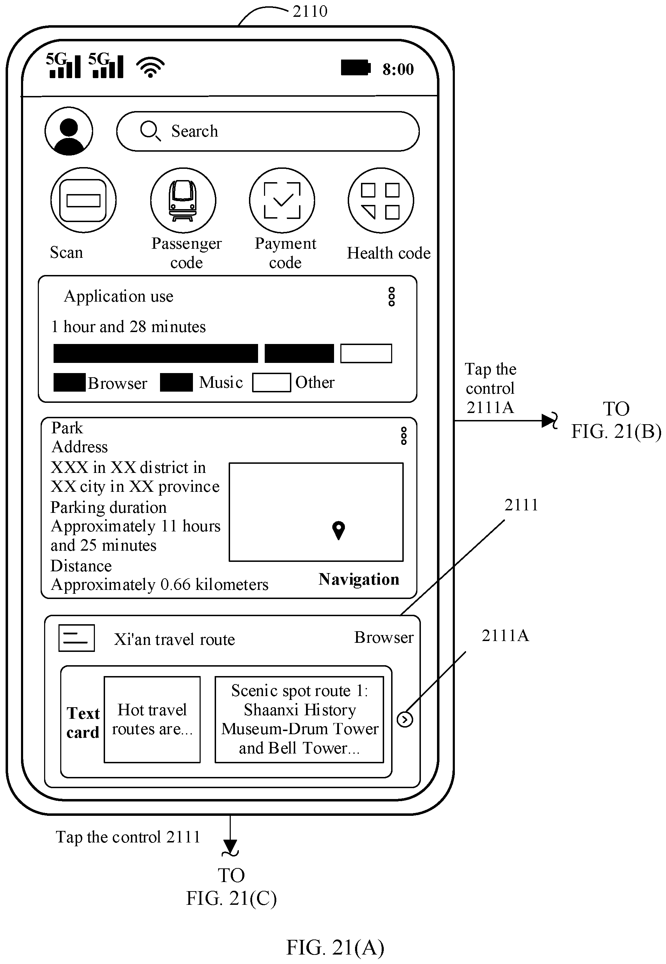

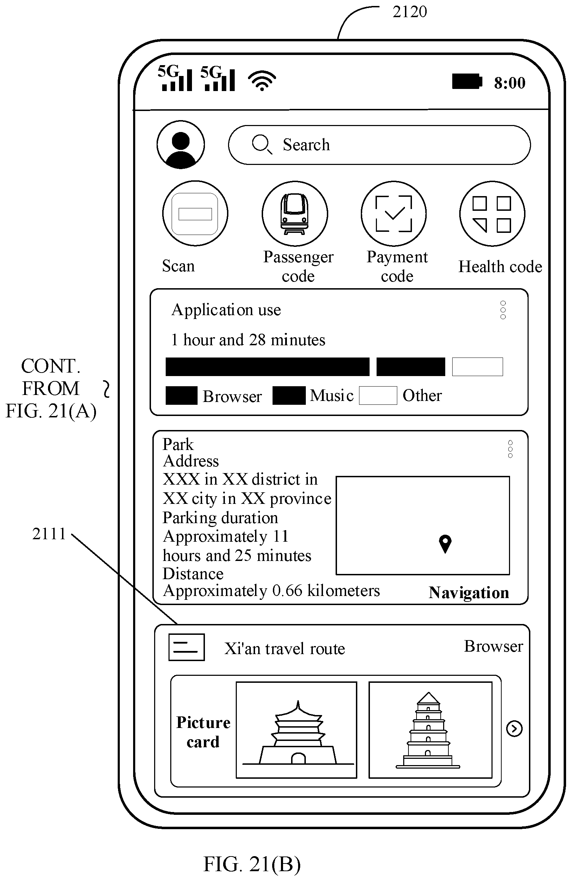

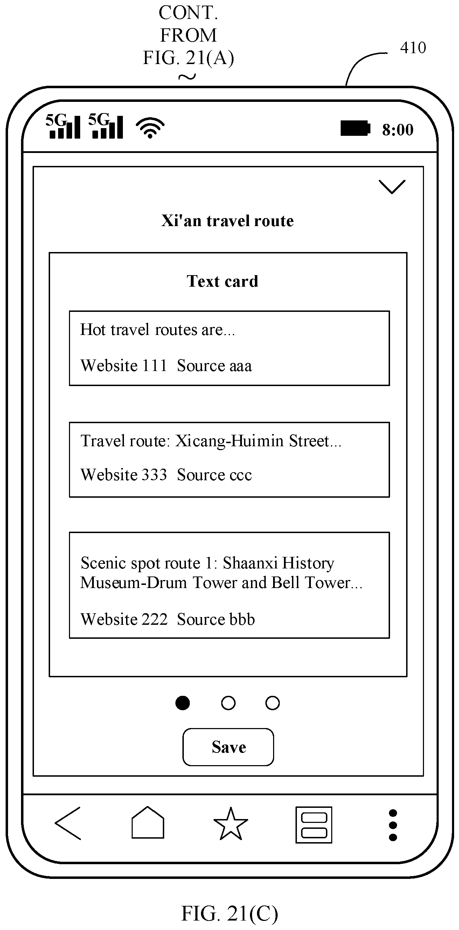

In an implementation, after the operation shown in FIG. 18, the user may view the semantic aggregation card set again by using the leftmost screen application. For a specific example, refer to FIG. 21(A), FIG. 21(B), and FIG. 21(C).

As shown in FIG. 21(A), the electronic device 100 may display a user interface 2110 of the leftmost screen application. The user interface 2110 may include a plurality of function controls (for example, controls of functions such as scan, a passenger code, a payment code, and a health code), an application use condition card, a parking condition card, and a control 2111. The control 2111 is similar to the control 2011 in the user interface 2010 shown in FIG. 20(A), and both indicate a card set in favorites, and are currently used to display a text card in the card set. The control 2111 further includes a page flip control 2111A. The electronic device 100 may receive a touch operation (for example, a tap operation) on the page flip control 2111A, and display, in response to the touch operation, a user interface 2120 shown in FIG. 21(B). A control 2111 in the user interface 2120 is similar to the control 2011 on the desktop 2020 shown in FIG. 20(B), and both indicate a card set in favorites, and are currently used to display a picture card in the card set. The electronic device 100 may receive a touch operation (for example, a tap operation) on the control 2111 in the user interface 2110 or the user interface 2120, and display specific content of the semantic aggregation card set in favorites in response to the touch operation, for example, display the user interface 410 shown in FIG. 21(C) (that is, the user interface 410 shown in FIG. 4(A)).

In some examples, the electronic device 100 may receive a touch operation on the control 2111 in the user interface 2110 or the user interface 2120. For example, the touch operation is sliding left or right or sliding up or down. Another semantic aggregation card set in favorites is displayed in response to the touch operation. For example, the control 2011 in the user interface 2030 shown in FIG. 20(D) is displayed in a user interface of the leftmost screen application. The example shown in FIG. 21(A), FIG. 21(B), and FIG. 21(C) is similar to the example shown in FIG. 20(A), FIG. 20(B), FIG. 20(C), and FIG. 20(D). When card types displayed by card controls on which the user operation is performed are different, cards displayed by the electronic device 100 in response to the user operation may be different. For a specific example, refer to the example shown in FIG. 20(A), FIG. 20(B), FIG. 20(C), and FIG. 20(D). Details are not described again.

FIG. 20(A), FIG. 20(B), FIG. 20(C), and FIG. 20(D) are described by using an example in which a card displayed by a card control is switched based on a time. FIG. 21(A), FIG. 21(B), and FIG. 21(C) are described by using an example in which a card displayed by a card control is switched based on a touch operation on a page flip control. In some other examples, the electronic device 100 may further switch, in response to a slide operation (for example, sliding left or right or sliding up or down) on a card control, a card displayed by the card control. A specific triggering manner is not limited in this application.

This application is not limited to the foregoing examples. In some other examples, the electronic device 100 may further display, on a user interface of another application (for example, a home page or a favorites folder page of the browser application), the control 2010 shown in FIG. 20(A), FIG. 20(B), FIG. 20(C), and FIG. 20(D) and/or the control 2111 shown in FIG. 21(A), FIG. 21(B), and FIG. 21(C) (for example, this may be understood as a widget indicating a card set in favorites).

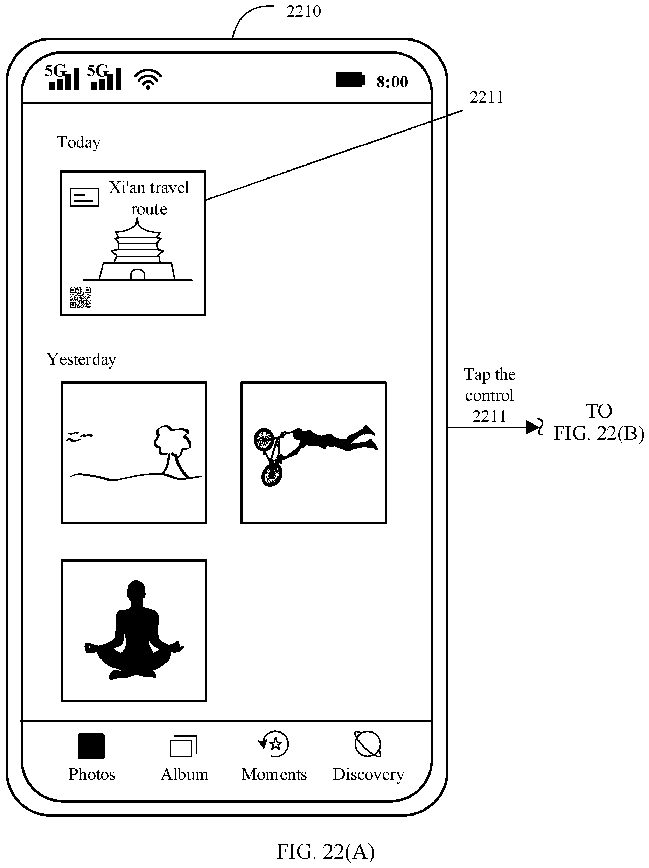

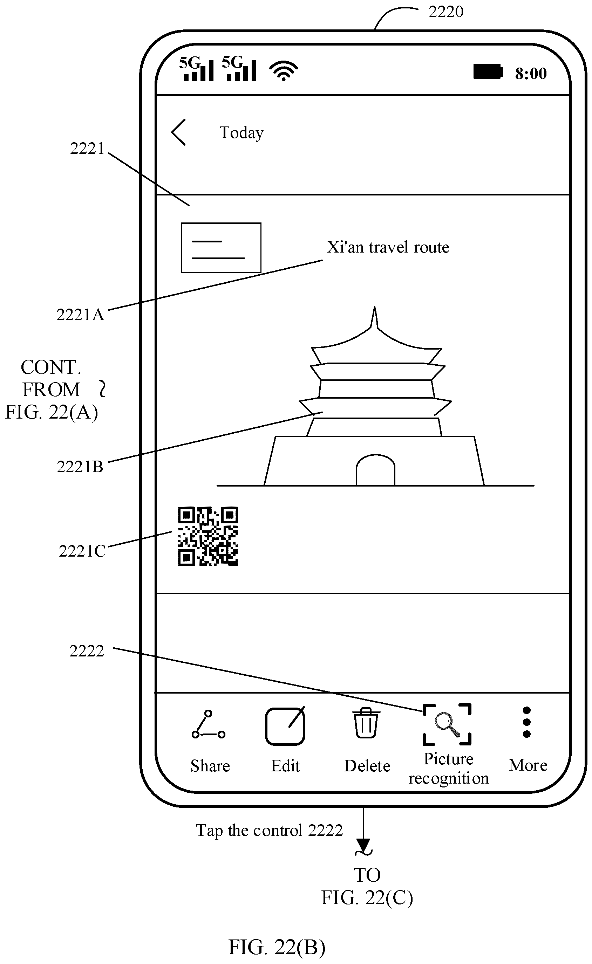

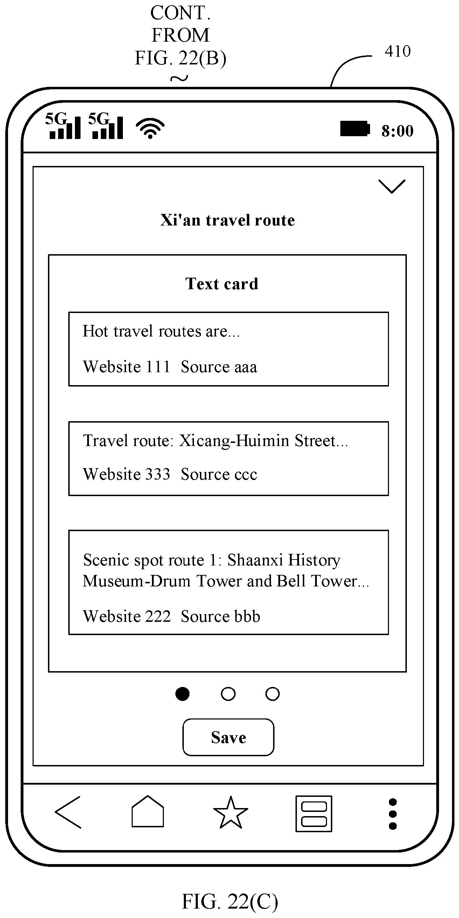

In an implementation, after the operation shown in FIG. 18, the user may view the semantic aggregation card set again by using the gallery application. For a specific example, refer to FIG. 22(A), FIG. 22(B), and FIG. 22(C).

As shown in FIG. 22(A), the electronic device 100 may display a user interface 2210 of the gallery application, where the user interface 2210 may include thumbnails of a plurality of pictures. The electronic device 100 may receive a touch operation (for example, a tap operation) on a thumbnail 2211 in the plurality of thumbnails, and display, in response to the touch operation, an original picture corresponding to the thumbnail 2211, for example, display a user interface 2220 shown in FIG. 22(B). A picture 2221 in the user interface 2220 indicates a card set in favorites, and the picture 2221 includes a title 2221A, an image 2221B, and a QR code 2221C, where characters included in the title 2221A are a title "Xi'an travel route" of the card set in favorites, the image 2221B is a cover of the card set in favorites (the first picture included in a picture card in the card set, that is, the picture content 4211 included in the picture card 421 in the user interface 420 shown in FIG. 4(B) is used as an example), and the QR code 2221C may include identification information of the card set in favorites, to indicate the card set. A menu located at the bottom of the user interface 2220 includes a picture recognition control 2222. The electronic device 100 may receive a touch operation (for example, a tap operation) on the picture recognition control 2222, and recognize the picture 2221 in response to the touch operation, for example, recognize the QR code 2221C in the picture 2221. The electronic device 100 may display a recognition result, that is, specific content of the semantic aggregation card set indicated by the picture 2221, for example, display the user interface 410 shown in FIG. 22(C) (that is, the user interface 410 shown in FIG. 4(A)).

This application is not limited to the foregoing examples. In some other examples, the user may further scan the picture 2221 by using a scan function of the electronic device, for example, recognize the QR code 2221C in the picture 2221, and display specific content of the recognized semantic aggregation card set, for example, display the user interface 410 shown in FIG. 4(A). A specific manner of recognizing a picture is not limited in this application.

This application is not limited to the entry for secondary loading of the semantic aggregation card set in the foregoing examples. In some other examples, the entry for secondary loading of the semantic aggregation card set may be further displayed in another application such as a notepad. This is not limited in this application.

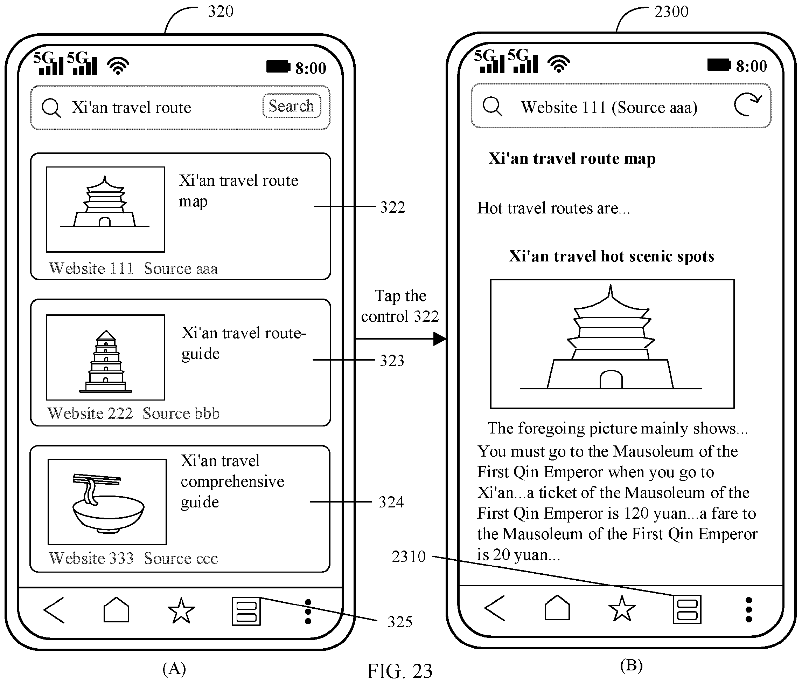

In an implementation, after the operation shown in FIG. 3, the electronic device 100 may receive a touch operation (for example, a tap operation) on any web page card in the user interface 320 shown in FIG. 3(B), and display, in response to the touch operation, specific content of a web page indicated by the web page card. For a specific example, refer to FIG. 23.

As shown in FIG. 23(A), the electronic device 100 may display the user interface 320 shown in FIG. 3(B). The web page list in the user interface 320 includes, for example, the web page card 322 (indicating the web page 1), the web page card 323 (indicating the web page 2), and the web page card 324 (indicating the web page 3). The electronic device 100 may receive a touch operation (for example, a tap operation) on the web page card 322, and display, in response to the touch operation, specific content of the web page 1 (the title is "Xi'an travel route map", the website is "website 111", and the source is "source aaa") indicated by the web page card 322. For details, refer to a user interface 2300 shown in FIG. 23(B). The user interface 2300 is similar to the user interface 600 shown in FIG. 6(B), and a difference lies in that the text content 4121 in the user interface 600 is not highlighted in the user interface 2300. Both the card control 325 in the user interface 320 and a card control 2310 in the user interface 2300 are used to trigger display of the semantic aggregation card set, but semantic aggregation card sets that are triggered for display may be different. Content included in the semantic aggregation card set triggered by the card control 325 for display is extracted from at least one web page obtained through searching, and content included in the semantic aggregation card set triggered by the card control 2310 for display is extracted from the web page 1 that is selected by the user to view.

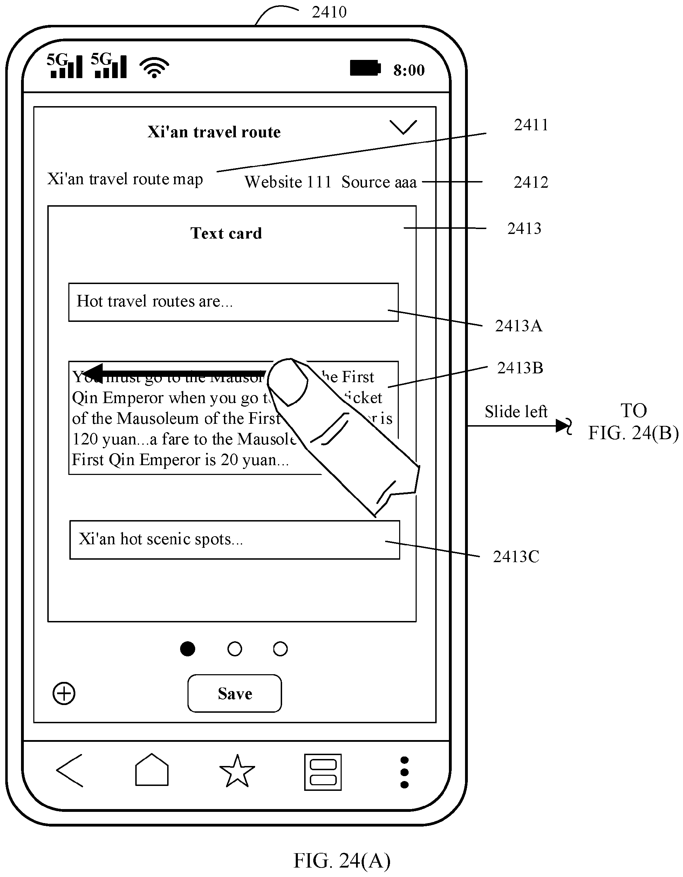

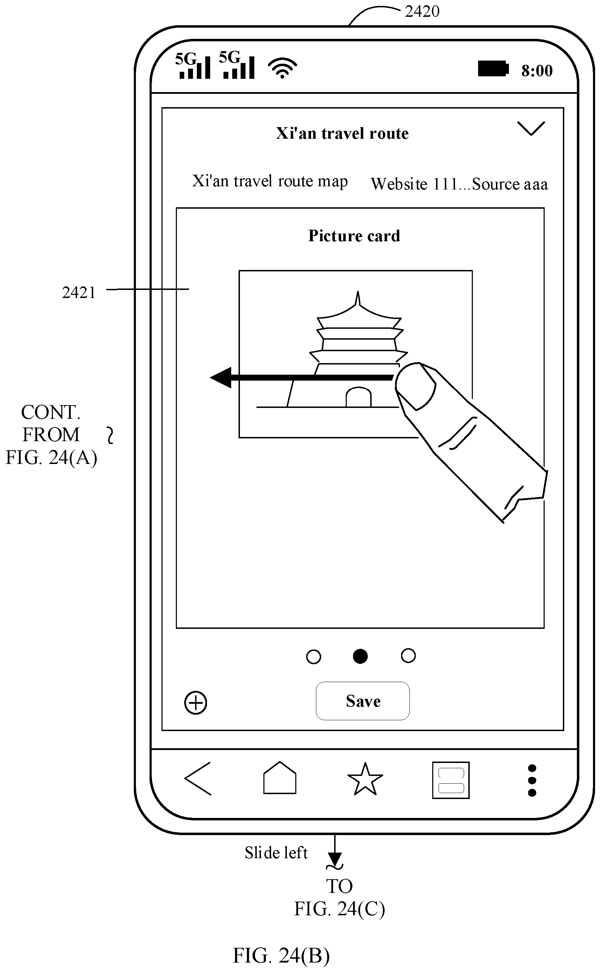

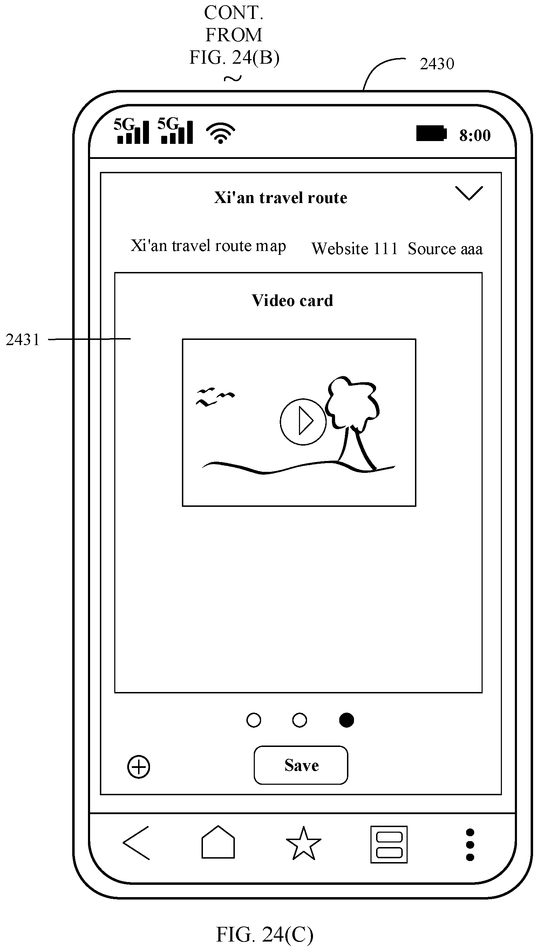

In an implementation, after the operation shown in FIG. 23, the electronic device 100 may receive a touch operation (for example, a tap operation) on the card control 2310 in the user interface 2300 shown in FIG. 23(B), and display the semantic aggregation card set in response to the touch operation. For details, refer to a user interface shown in FIG. 24(A), FIG. 24(B), and FIG. 24(C).

Similar to FIG. 4(A), FIG. 4(B), and FIG. 4(C), FIG. 24(A), FIG. 24(B), and FIG. 24(C) are also used to display the semantic aggregation card set. A difference lies in that content included in the semantic aggregation card set shown in FIG. 4(A), FIG. 4(B), and FIG. 4(C) is extracted from the web page 1, the web page 2, and the web page 3 that are obtained through searching and that rank in the first three positions, and content included in the semantic aggregation card set shown in FIG. 24(A), FIG. 24(B), and FIG. 24(C) is extracted from the web page 1 that is selected by the user to view. The following mainly describes a difference between FIG. 24(A), FIG. 24(B), and FIG. 24(C) and FIG. 4(A), FIG. 4(B), and FIG. 4(C) when describing FIG. 24(A), FIG. 24(B), and FIG. 24(C). For other descriptions, refer to descriptions of FIG. 4(A), FIG. 4(B), and FIG. 4(C).

As shown in FIG. 24(A), the electronic device 100 may display a user interface 2410 of the browser. The user interface 2410 may include a title 2411 ("Xi'an travel route map"), and website information and source information 2412 ("website 111 source aaa") of the web page 1 selected by the user to view. The user interface 2410 is used to display a text card 2413 in the semantic aggregation card set. The text card 2413 includes a plurality of pieces of text content that are related to the search key words and that are in the web page 1, for example, text content 2413A ("hot travel routes are"), text content 2413B ("You must go to the Mausoleum of the First Qin Emperor when you go to Xi'an...a ticket of the Mausoleum of the First Qin Emperor is 120 yuan...a fare to the Mausoleum of the First Qin Emperor is 20 yuan... "), and text content 2413C ("Xi'an hot scenic spots..."), where the text content 2413C is not shown in the user interface 2300 shown in FIG. 23(B).

The electronic device 100 may receive a slide operation on the text card 2413. For example, the slide operation is sliding up or down or sliding left or right. In FIG. 24(A), FIG. 24(B), and FIG. 24(C), an example in which the slide operation is sliding from right to left is used for illustration. The electronic device 100 displays, in response to the user operation, a user interface 2420 shown in FIG. 24(B). The user interface 2420 is similar to the user interface 2410 shown in FIG. 24(A), and a difference lies in that the user interface 2420 is used to display a picture card 2421 in the semantic aggregation card set, and the picture card 2421 includes picture content that is related to the search key words and that is in the web page 1.

The electronic device 100 may receive a slide operation on the picture card 2421. For example, the slide operation is sliding up or down or sliding left or right. In FIG. 24(A), FIG. 24(B), and FIG. 24(C), an example in which the slide operation is sliding from right to left is used for illustration. The electronic device 100 displays, in response to the user operation, a user interface 2430 shown in FIG. 24(C). The user interface 2430 is similar to the user interface 2410 shown in FIG. 24(A), and a difference lies in that the user interface 2430 is used to display a video card 2431 in the semantic aggregation card set, and the video card 2431 includes video content that is related to the search key words and that is in the web page 1.

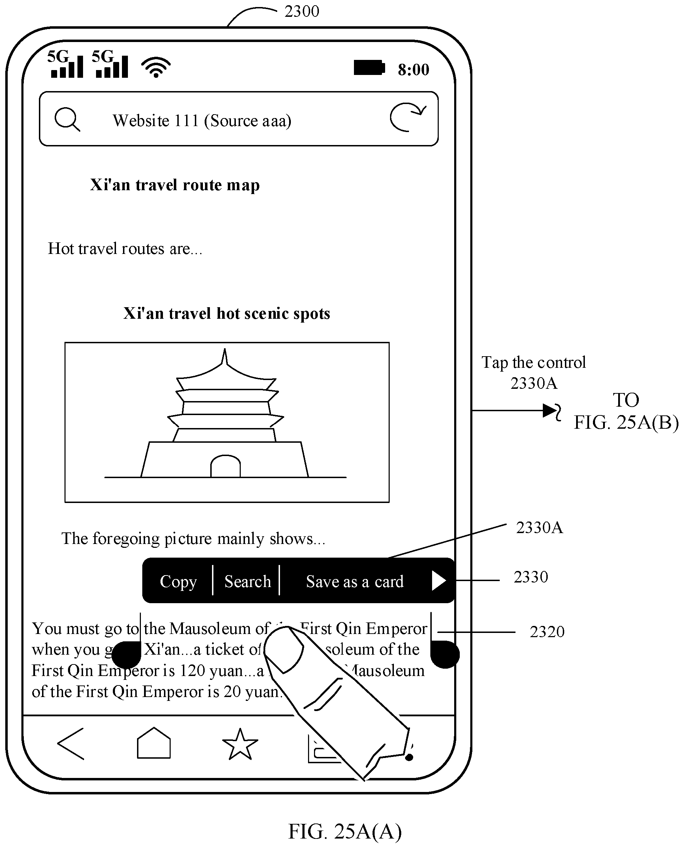

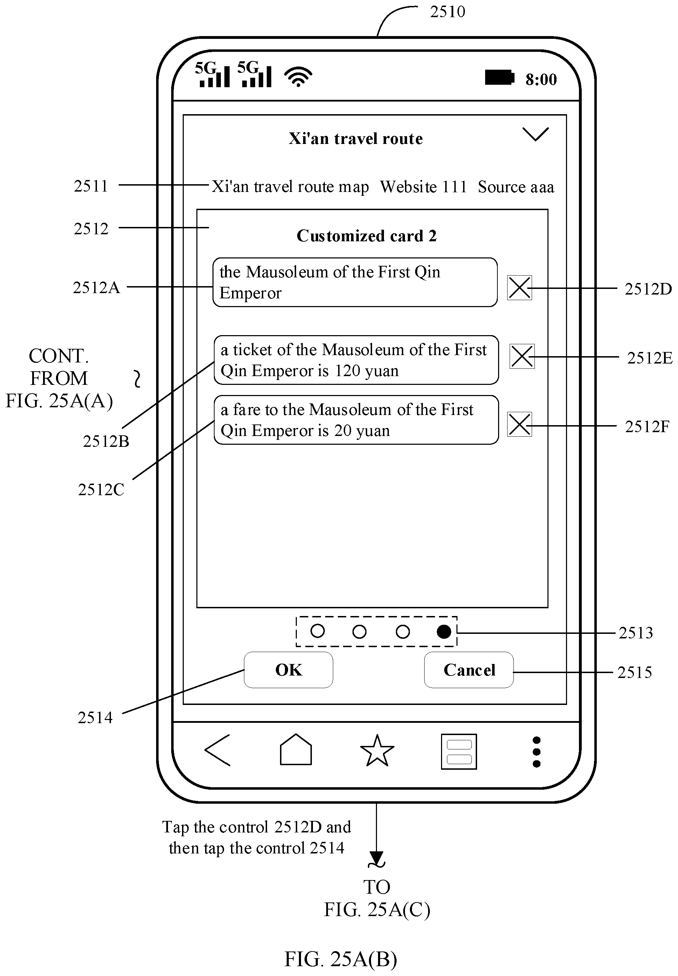

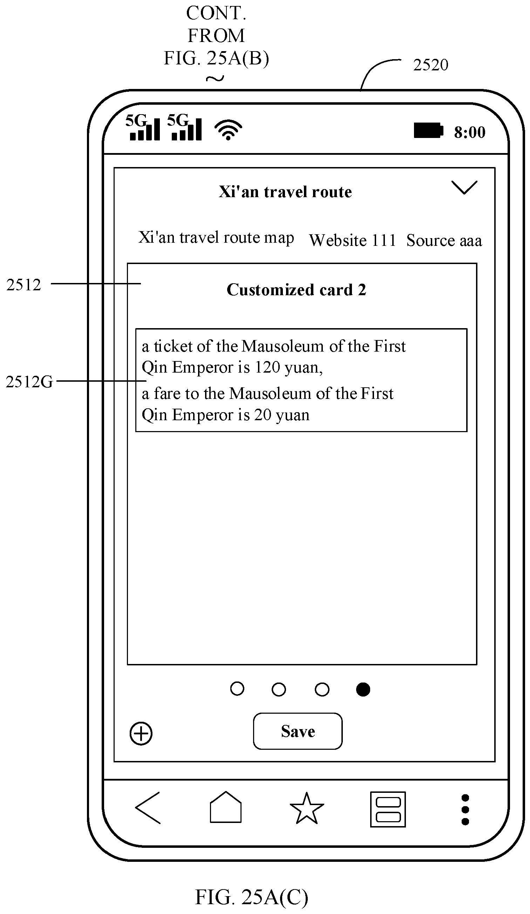

In an implementation, when displaying specific content of the web page 1 (for example, displaying the user interface 2300 shown in FIG. 23(B)), the electronic device 100 may receive a touch operation (for example, a touch and hold operation) on any content in the web page 1, and select the content in response to the touch operation. For a specific example, refer to the user interface 2300 shown in FIG. 25A(A).

As shown in FIG. 25A(A), the electronic device 100 may display the user interface 2300 shown in FIG. 23(B). The user interface 2300 may include a text 2320 ("You must go to the Mausoleum of the First Qin Emperor when you go to Xi'an...a ticket of the Mausoleum of the First Qin Emperor is 120 yuan...a fare to the Mausoleum of the First Qin Emperor is 20 yuan..."), where the text "the Mausoleum of the First Qin Emperor" is selected, and the touch operation may be understood as a user operation used to select the text "the Mausoleum of the First Qin Emperor" in the web page 1. In the user interface 2300, a function list 2330 may be displayed near the text "the Mausoleum of the First Qin Emperor". The function list 2330 may include options of a plurality of functions for the selected text "the Mausoleum of the First Qin Emperor", for example, an option of a copy function, an option of a search function, a save option 2330A, and an option of viewing more functions. The electronic device 100 may receive a touch operation (for example, a tap operation) on the save option 2330A, and in response to the touch operation, add the foregoing selected text "the Mausoleum of the First Qin Emperor" and a related text to a new card in the semantic aggregation card set. In this case, a user interface 2510 shown in FIG. 25A(B) may be displayed.

As shown in FIG. 25A(B), the user interface 2510 may include title information 2511, where the title information 2511 includes a title "Xi'an travel route map", website information "website 111", and source information "source aaa" of the web page 1 currently viewed by the user. This may indicate that the semantic aggregation card set displayed in the user interface 2510 is generated based on content in the web page 1. The user interface 2510 is used to display a card 2512 in the semantic aggregation card set. A page option 2513 in the user interface 2510 indicates that the semantic aggregation card set includes four cards, and the currently displayed card 2512 is the fourth card in the four cards. The first three cards in the four cards are, for example, a text card 2413, a picture card 2421, and a video card 2431 shown in FIG. 24(A), FIG. 24(B), and FIG. 24(C). The card 2512 may include a title ("customized card 2") and a plurality of pieces of text content, where the plurality of pieces of text content include, for example, the foregoing selected text 2512A ("the Mausoleum of the First Qin Emperor"), associated content 2512B ("a ticket of the Mausoleum of the First Qin Emperor is 120 yuan"), and associated content 2512C ("a fare to the Mausoleum of the First Qin Emperor is 20 yuan"), the associated content 2512B and the associated content 2512C are content semantically related to the text 2512A in the web page 1. Herein, an example in which a type of the associated content is text is used for description. In a specific implementation, the associated content may alternatively be of another type such as a picture or a video. A specific type of the associated content is not limited in this application. A plurality of delete options that respectively correspond to the plurality of pieces of text content are further displayed in the card 2512. For example, a delete option 2512D is used to delete the corresponding text 2512A, a delete option 2512E is used to delete the corresponding associated content 2512B, and a delete option 2512F is used to delete the corresponding associated content 2512C. The user interface 2510 further includes an "OK" control 2514 and a cancel control 2515. The "OK" control 2514 is used to save the currently displayed card 2512 into the semantic aggregation card set, and the cancel control 2515 is used to cancel saving of the currently displayed card 2512.

The electronic device 100 may receive a touch operation (for example, a tap operation) on the delete option 2512D, and delete the text 2512A from the card 2512 in response to the touch operation. Then, the electronic device 100 may receive a touch operation (for example, a tap operation) on the "OK" control 2514, and save the card 2512 in response to the touch operation. In this case, a user interface 2520 shown in FIG. 25A(C) may be displayed. The card 2512 in the user interface 2520 includes text content 2512G, and the text content 2512G includes characters "a ticket of the Mausoleum of the First Qin Emperor is 120 yuan, a fare to the Mausoleum of the First Qin Emperor is 20 yuan", that is, includes characters displayed in the associated content 2512B that is not deleted and characters displayed in the associated content 2512C that is not deleted, and does not include characters displayed in the deleted text content 2512A.

This application is not limited to the foregoing examples. In some other examples, the user interface 2520 shown in FIG. 25A(C) may also be replaced with a user interface 2530 shown in FIG. 25B. The card 2512 in the user interface 2530 includes the associated content 2512B and the associated content 2512C that are not deleted, and does not include the deleted text content 2512A.

In an implementation, the electronic device 100 may display, in response to a touch operation (for example, a tap operation) performed on the associated content 2512B in the user interface 2530 shown in FIG. 25B, a user interface 2540 shown in FIG. 25C. As shown in FIG. 25C, the user interface 2540 is used to display the web page 1 (a website is "website 111" and a source is "source aaa") to which the associated content 2512B belongs, a text 2320 ("You must go to the Mausoleum of the First Qin Emperor when you go to Xi'an...a ticket of the Mausoleum of the First Qin Emperor is 120 yuan... a fare to the Mausoleum of the First Qin Emperor is 20 yuan... ") including the associated content 2512B ("a ticket of the Mausoleum of the First Qin Emperor is 120 yuan") is displayed on the user interface 2540, and the associated content 2512B is highlighted (for example, highlighted) in the user interface 2540.

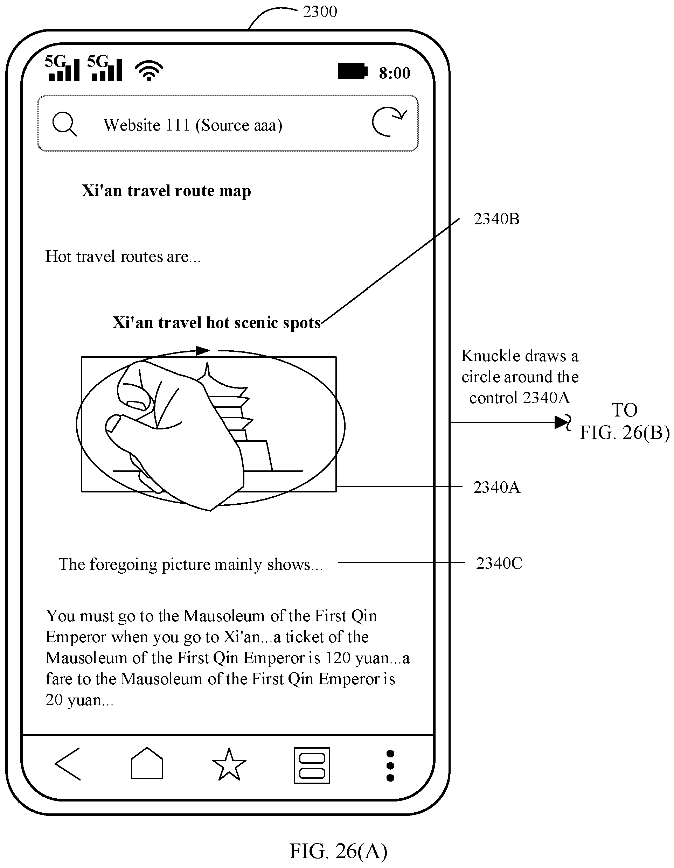

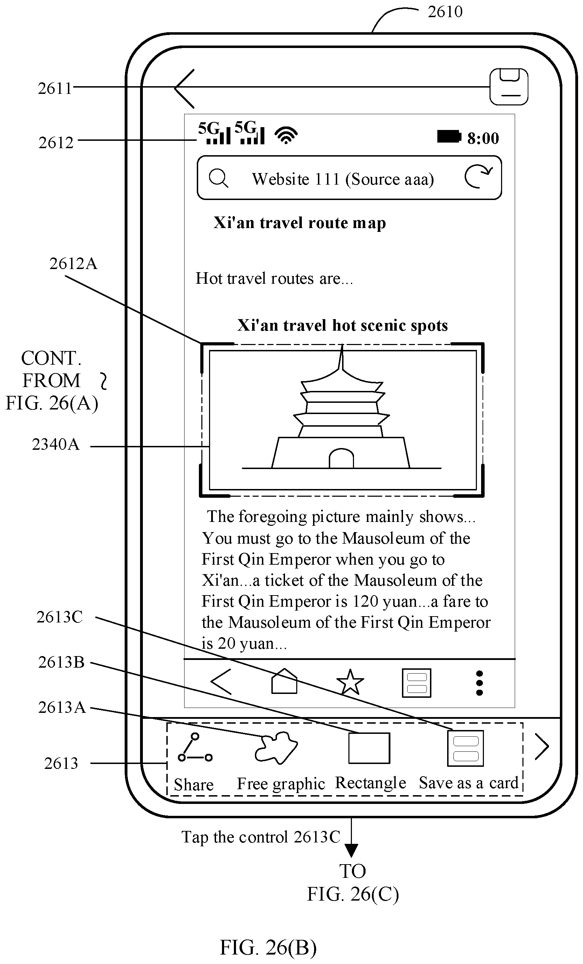

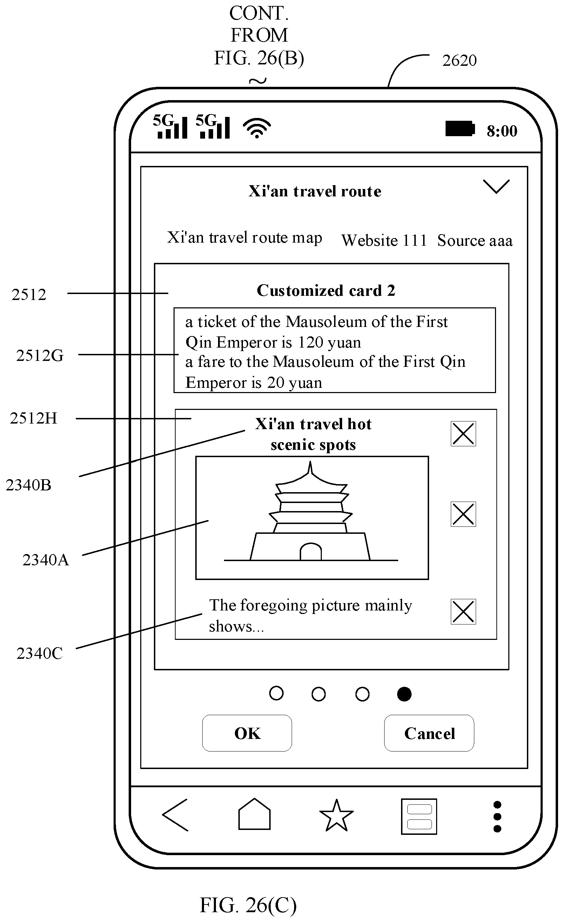

In an implementation, after the operation shown in FIG. 25A(A), FIG. 25A(B), and FIG. 25A(C), the electronic device 100 may receive a touch operation (for example, a slide operation) on any content in the web page 1, and select the content in response to the touch operation. For a specific example, refer to FIG. 26(A), FIG. 26(B), and FIG. 26(C).

As shown in FIG. 26(A), the electronic device 100 may display the user interface 2300 shown in FIG. 23(B). The user interface 2300 may include a picture 2340A, a title 2340B of the picture 2340A ("Xi'an travel hot scenic spots"), and a description 2340C of the picture 2340A ("the foregoing picture mainly shows..."). The electronic device 100 may receive a slide operation performed on the picture 2340A. For example, the slide operation is sliding with a single finger, sliding with double fingers, or sliding with a knuckle. In FIG. 26(A), FIG. 26(B), and FIG. 26(C), an example in which the slide operation is a slide operation of drawing a circle around the picture 2340A by using a knuckle is used for illustration. The slide operation may be understood as a screen capture operation on the picture 2340A, and the slide operation may also be understood as a user operation used to select the picture 2340A in the web page 1. The electronic device may display, in response to the slide operation, a user interface 2610 shown in FIG. 26(B). The user interface 2610 may include a save control 2611, an editing interface 2612, and a menu 2613 located at the bottom. The editing interface 2612 is used to display a user interface on which a user operation is performed, that is, the user interface 2300 shown in FIG. 26(A). An editing box 2612A is displayed in the editing interface 2612, and the picture 2340A selected by the user is displayed in the editing box 2612A. The user may operate the shape, size, and position of the editing box 2612A, to change selected content (that is, content displayed in the editing box 2612A). The menu 2613 includes, for example, an option of a sharing function, a graphics option 2613A, a rectangle option 2613B, a save option 2613C, and an option of viewing more functions, where the graphics option 2613Ais used to set the shape of the editing box 2612A to a free graphic. After the function is set, the user may operate the editing box 2612A to make the editing box 2612A become any regular or irregular shape. The rectangle option 2613B is used to set the shape of the editing box 2612A to a rectangle.

The electronic device 100 may receive a touch operation (for example, a tap operation) on the save control 2611 or the save option 2613C, and in response to the touch operation, save, to the card 2512 in the user interface 2520 shown in FIG. 25A(C), the picture 2340A and related content that are displayed in the editing box 2612A. In this case, for example, a user interface 2620 shown in FIG. 26(C) is displayed. The card 2512 in the user interface 2620 includes the previously saved text content 2512G, and further includes a to-be-selected content list 2512H. The content list 2512H includes a plurality of pieces of content and a plurality of delete options, where the plurality of pieces of content include, for example, the picture 2340A selected by the user, the title 2340B of the picture 2340A in the web page 1, and the description 2340C of the picture 2340A in the web page 1. Each delete option corresponds to one piece of content and is used to trigger deletion of the content.

This application is not limited to the screen capture operation shown in FIG. 26(A), FIG. 26(B), and FIG. 26(C). In some other examples, screen capture may alternatively be triggered by voice input. A specific type of the screen capture operation is not limited in this application.

FIG. 25A(A), FIG. 25A(B), and FIG. 25A(C) are described by using an example in which the content selected by the user is saved in a newly created customized card in the semantic aggregation card set. FIG. 26(A), FIG. 26(B), and FIG. 26(C) are described by using an example in which the content selected by the user is saved in an existing customized card in the semantic aggregation card set. In some other examples, a card for saving the selected content may alternatively be determined based on a type of the content selected by the user. For example, when the content selected by the user is a text, the selected content and associated content are saved in a text card. The card used to save the selected content is not limited in this application.

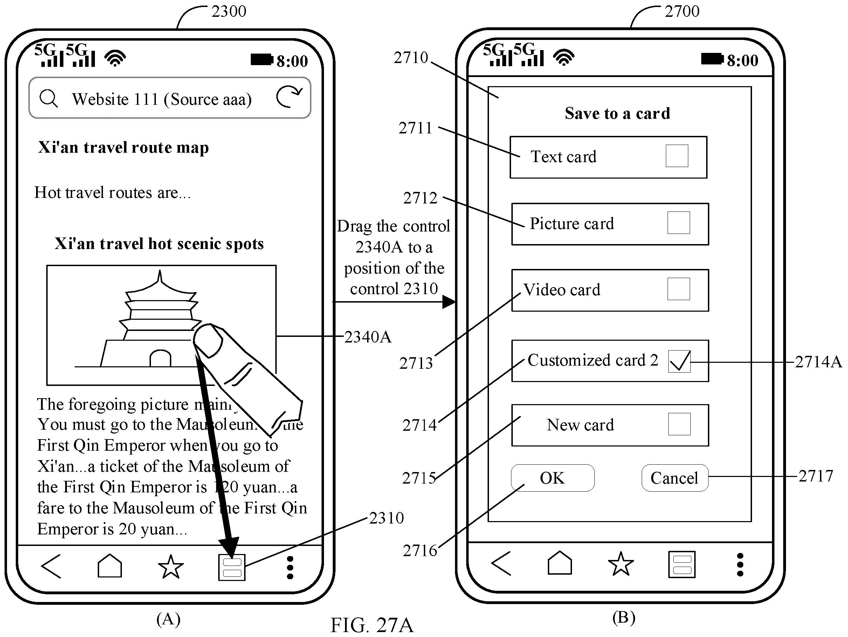

In another implementation, the user may also select a card for saving the selected content and the associated content. For example, after the operation shown in FIG. 25A(A), FIG. 25A(B), and FIG. 25A(C), the electronic device 100 may receive a touch operation (for example, a drag operation) on any content in the web page 1, and display, in response to the touch operation, a selection interface of a display position of the content. For a specific example, refer to FIG. 27A.

As shown in FIG. 27A(A), the electronic device 100 may display the user interface 2300 shown in FIG. 23(B), where the user interface 2300 includes the card control 2310 and the picture 2340A. The electronic device 100 may receive a drag operation performed on the picture 2340A. For example, the drag operation is a user operation of dragging the picture 2340A to a specific position. In FIG. 27A, an example in which the drag operation is a user operation of dragging the picture 2340A to a position of the card control 2310 is used for description. The drag operation may be understood as a user operation used to select the picture 2340A in the web page 1. The electronic device 100 displays, in response to the drag operation, a user interface 2700 shown in FIG. 27A(B). The user interface 2700 is used to select a card for saving selected content and associated content. A prompt box 2710 in the user interface 2700 includes a title ("save to the card") and options of a plurality of cards. The options of the plurality of cards include, for example, an option 2711 of a text card, an option 2712 of a picture card, an option 2713 of a video card, an option 2714 of a card titled "customized card 2" (customized card 2 for short), and an option 2715 of a new card, and the customized card 2 is the card 2512 in the user interface 2520 shown in FIG. 25A(C). A select control displayed in any one of the foregoing options is used to select to save the selected content to a card corresponding to the option or cancel the selection. In the user interface 2700, select controls displayed in the option 2711, the option 2712, the option 2713, and the option 2715 are all in an unselected state, and a select control 2714A displayed in the option 2714 is in a selected state. This may represent that currently selected content is saved in the customized card 2 indicated by the option 2714. It may be understood that more or fewer select controls may be selected. The prompt box 2710 further includes an "OK" control 2716 and a cancel control 2717, where the "OK" control 2716 is used to save the selected content and the associated content to the selected card, and the cancel control 2717 is used to cancel saving of the selected content and the associated content to the semantic aggregation card set. The electronic device 100 may receive a touch operation (for example, a tap operation) on the "OK" control 2716, and save, in response to the touch operation, the picture 2340A and related content to the customized card 2 indicated by the option 2714. In this case, for example, a user interface 2620 shown in FIG. 26(C) is displayed.

This application is not limited to the foregoing examples. In some other examples, the electronic device 100 may alternatively display, in response to a user operation of dragging the picture 2340A in the user interface 2300 shown in FIG. 27A(A) to the position of the card control 2310, the user interface 2610 shown in FIG. 26(B), or directly display the user interface 2620 shown in FIG. 26(C). In some other examples, the electronic device 100 may alternatively display, in response to a touch operation (for example, a tap operation) on the save option 2330A in the user interface 2300 shown in FIG. 25A(A), the user interface 2700 shown in FIG. 27A(B). In some other examples, the electronic device 100 may alternatively display, in response to a user operation of drawing a circle by using a knuckle around the picture 2340A in the user interface 2300 shown in FIG. 26(A), the user interface 2700 shown in FIG. 27A(B). In some other examples, the electronic device 100 may alternatively display, in response to a touch operation (for example, a tap operation) on the save control 2611 or the save option 2613C in the user interface 2610 shown in FIG. 26(B), the user interface 2700 shown in FIG. 27A(B). It may be understood that the foregoing user operation is merely an example. For example, the electronic device 100 may alternatively display, in response to the screen capture operation in another form (for example, voice input) on the picture 2340A in the user interface 2300 shown in FIG. 26(A), the user interface 2700 shown in FIG. 27A(B). A form of the user operation is not limited in this application.

FIG. 25A(A), FIG. 25A(B), and FIG. 25A(C), FIG. 26(A), FIG. 26(B), and FIG. 26(C), and FIG. 27A show three user operations used to select content in a web page. In some other examples, text content in the web page 1 may alternatively be selected by using the user operation shown in FIG. 26(A), FIG. 26(B), and FIG. 26(C) or FIG. 27A. In some other examples, the content in the web page may alternatively be selected through voice input. A specific user operation used to select the content in the web page is not limited in this application.

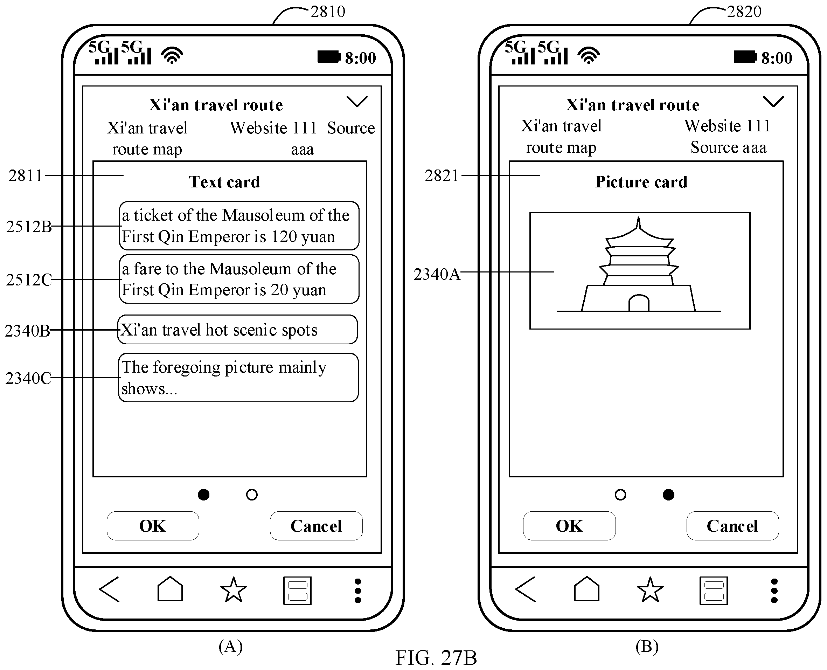

FIG. 25A(A), FIG. 25A(B), and FIG. 25A(C) are described by using an example in which the electronic device 100 generates four cards after receiving a user operation used to select content in a web page. The four cards are the text card 2413, the picture card 2421, and the video card 2431 shown in FIG. 24(A), FIG. 24(B), and FIG. 24(C), and the customized card 2512 shown in FIG. 25A(B). This application is not limited thereto. In some other examples, after receiving a user operation used to select content in a web page, the electronic device 100 may alternatively generate only the customized card 2512 shown in FIG. 25A(B), and does not generate the text card 2413, the picture card 2421, and the video card 2431 shown in FIG. 24(A), FIG. 24(B), and FIG. 24(C). This is not limited in this application. In some other examples, after receiving a user operation used to select content in a web page (selected content for short), the electronic device 100 may alternatively generate a plurality of cards. The plurality of cards are used to display the foregoing selected content and content (associated content for short) that is in the web page and that is related to the selected content. Optionally, the plurality of cards are respectively used to display web page content of different types. For a specific example, refer to FIG. 27B.

FIG. 27B is described by using an example in which the selected content and the associated content are content included in the card 2512 in the user interface 2620 shown in FIG. 26(C). The selected content and the associated content are specifically: the text content 2512G (including the text content 2512B ("a ticket of the Mausoleum of the First Qin Emperor is 120 yuan") and the text content 2512C ("a fare to the Mausoleum of the First Qin Emperor is 20 yuan")) in the card 2512, the title 2340B, the picture 2340A, and the description 2340C. The electronic device 100 may generate, based on the selected content and the associated content, a text card 2811 in a user interface 2810 shown in FIG. 27B(A) and a picture card 2821 in a user interface 2820 shown in FIG. 27B(B). As shown in FIG. 27B(A), the text card 2811 is used to display text content: the text content 2512B, the text content 2512C, the title 2340B, and the description 2340C. As shown in FIG. 27B(B), the picture card 2821 is used to display picture content: the picture 2340A.

The application is not limited to the cards in the foregoing examples. In some other examples, when video content is displayed in a card, related information such as a title, an annotation, and a description of the video content may be further displayed. A specific manner of displaying web page content in a card is not limited in this application.

The search method in this application is described based on the foregoing embodiments. The method may be applied to the search system 10 shown in FIG. 1A. The method may be applied to the search system 10 shown in FIG. 1B.

FIG. 28 is a schematic flowchart of a search method according to an embodiment of this application. The method may include but is not limited to the following steps.

S101: An electronic device obtains a first search word entered by a user.

In an implementation, the electronic device may receive the first search word (which may also be referred to as a first key word or a search key word) entered by the user, and receive a user operation used to trigger a search function for the first key word. The electronic device may obtain, based on the user operation, the first key word entered by the user. For example, the electronic device 100 may receive key words "Xi'an travel route" entered for a search field 311 in the user interface 310 shown in FIG. 3(A), and then receive a touch operation (for example, a tap operation) on the search control 312 in the user interface 310. The electronic device may obtain, based on the touch operation, the key words "Xi'an travel route" entered by the user. A form of the first key word is not limited in this application, for example, but is not limited to a text, a picture, or audio.

S102: The electronic device sends a first search request to a network device.

In an implementation, after obtaining the first key word entered by the user, the electronic device may send the first search request to the network device. The first search request is used to request to obtain a search result related to the first key word. Optionally, the first search request includes, for example, but is not limited to, the first key word.

S103: The network device obtains a first web page set.

In an implementation, after receiving the first search request, the network device may obtain at least one web page related to the first key word, that is, the first web page set. For example, the network device may perform semantic analysis on the first key word, and obtain, from a web page database, at least one web page (that is, the first web page set) related to the first key word.

S104: The network device sends the first web page set to the electronic device.

S105: The electronic device displays the first web page set.

In some examples, the first web page set in S103 to S105 includes web pages indicated by a plurality of web page cards in the user interface 320 shown in FIG. 3(B): the web page 1 (titled "Xi'an travel route map") indicated by the web page card 322, the web page 2 (titled "Xi'an travel route-guide") indicated by the web page card 323, and the web page 3 (titled "Xi'an travel comprehensive guide") indicated by the web page card 324, where the first web page set is related to the first key words, and the first key words are "Xi'an travel route" displayed in the search field 311 included in the user interface 310 shown in FIG. 3(A).

In an implementation, the first web page set displayed by the electronic device is sorted. Optionally, a display position of a web page that is in the first web page set and that has a higher correlation with the first key word is higher. For example, the first key words are "Xi'an travel route" displayed in the search field 311 included in the user interface 310 shown in FIG. 3(A), and the user interface 320 shown in FIG. 3(B) shows summary information (which may be referred to as web page cards) of web pages ranking in the first three positions in the first web page set. Because the three web pages are sequentially the web page 1 (titled "Xi'an travel route map"), the web page 2 (titled "Xi'an travel route-guide"), and the web page 3 (titled "Xi'an travel comprehensive guide") in descending order of correlations between the three web pages and the first key words, in the user interface 320, the web page cards are sequentially the web page card 322 indicating the web page 1, the web page card 323 indicating the web page 2, and the web page card 324 indicating the web page 3 in a top-down sequence.

S106: The electronic device receives a first user operation.

In an implementation, a form of the first user operation may be, but is not limited to, a touch operation (for example, a tap operation), a voice input, a motion posture (for example, a gesture), a brain wave, or the like. For example, the first user operation is a touch operation on the card control 325 in the user interface 320 shown in FIG. 3(B). A specific form of the user operation is not limited in this application.

S107: The electronic device obtains a first content set from web page content included in the first web page set.

In an implementation, the electronic device may filter, in response to the first user operation, web page content (that is, the first content set) that meets a search intention of the user from the web page content included in the first web page set. Content included in the first content set is related to the first key word. For example, the content included in the first content set is content that is in the web page content included in the first web page set and that is highly related to the first key word.

The following shows, by using examples, a manner of obtaining the first content set.

First, the electronic device may extract, from the first web page set, content (which may be referred to as a second content set) of web pages ranking in the first N positions, where N is a positive integer. For example, the electronic device may silently load the N web pages in the background, obtain hypertext markup language (hyper-text markup language, html) code of the N web pages through JavaScript (JS) script injection, and then parse the html code of the N web pages to obtain content of a plurality of types such as a text, a picture, a video, audio, and a document in the N web pages. The obtained content may form the second content set. In an implementation, when obtaining non-text web page content such as a picture, a video, audio, and a document, the electronic device may simultaneously obtain texts related to the web page content, for example, a name, a title, and an annotation. In an implementation, when the electronic device cannot obtain, from a web page, an original file of web page content that needs to be downloaded, such as a video, audio, or a document, address information (for example, a hyperlink of the original file, or a hyperlink of a web page to which the web page content belongs) used for viewing the original file may be obtained, and/or, identification information (such as a title, a name, a cover picture, and a thumbnail) used to indicate the web page content may be obtained.

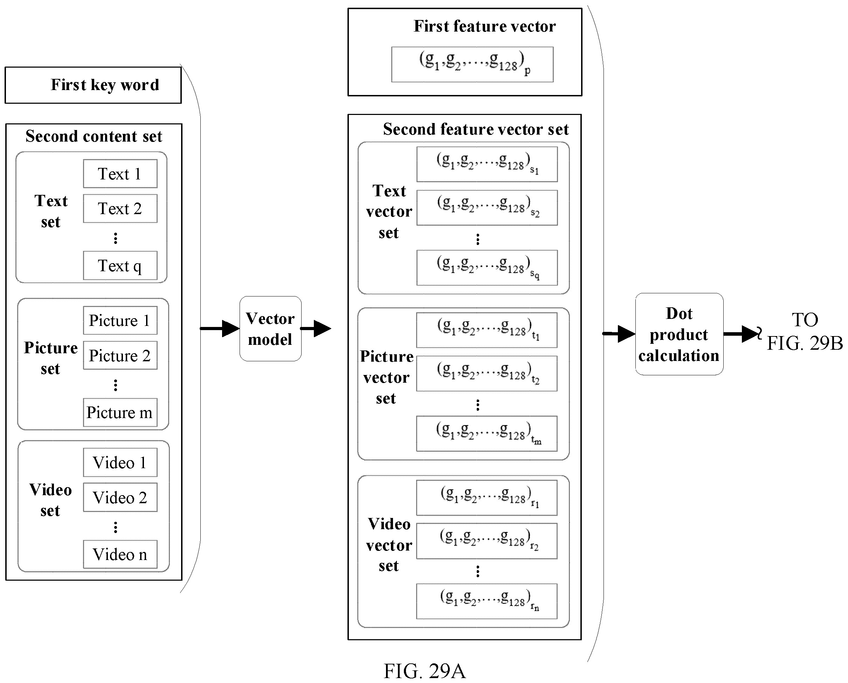

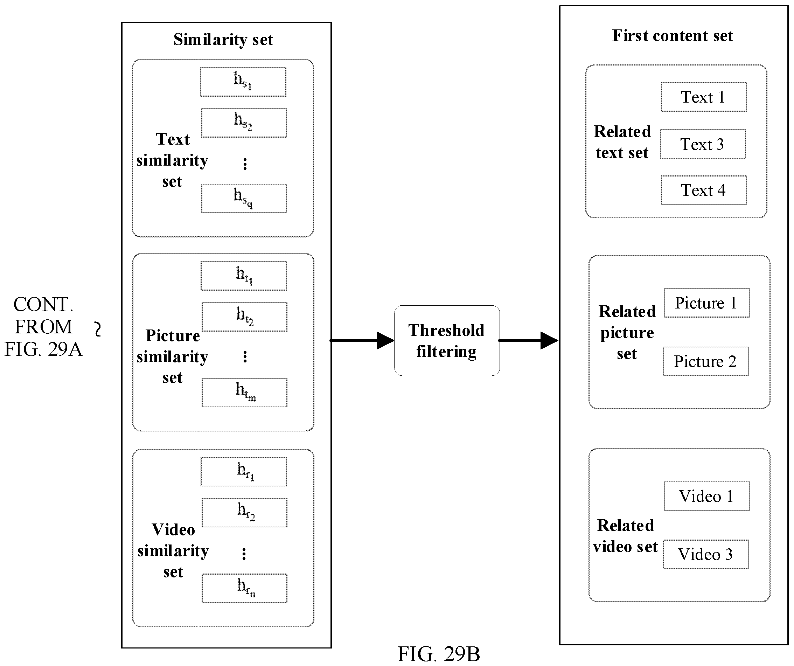

For example, as shown in FIG. 29A and FIG. 29B, the second content set may include a text set, an image set, and a video set, where the text set includes q pieces of text content: a text 1, a text 2, ..., and a text q, the image set includes m pieces of image content: a picture 1, a picture 2, ..., and a picture m, and the video set includes n pieces of video content: a video 1, a video 2, ..., and a video n, where q, m, and n are positive integers greater than 1.

Then, the electronic device may calculate a similarity between each piece of content in the second content set and the first key word. In an implementation, calculating the similarity may include two steps:

First, the electronic device may convert the first key word into an M-dimensional first feature vector, and convert each piece of content in the second content set into an M-dimensional second feature vector, where M is a positive integer. In an implementation, if the first key word belongs to a non-text type such as a picture, a video, audio, or a document, the electronic device may first convert the first key word into a text, and then convert the text into the first feature vector. In an implementation, for text content in the second content set, the electronic device may directly convert the text content into the second feature vector; and for non-text content such as a picture, a video, audio, and a document in the second content set, the electronic device may first convert the non-text content into a text, and then convert the text into the second feature vector. The text obtained by converting the non-text content includes, for example, but is not limited to, a text related to the non-text content such as a name, a title, or an annotation, and a text obtained by parsing the non-text content.

For example, as shown in FIG. 29A and FIG. 29B, the electronic device may implement a vector conversion operation based on a vector model. FIG. 29A and FIG. 29B are described by using an example in which M is 128, and any one-dimensional vector is represented by using $g_i$ (i is a positive integer less than or equal to 128). The first feature vector (which may also be referred to as a key word vector) obtained by inputting the first key word into the vector model may be represented as: $(g_1,g_2,...,g_{128})_p$. For the second content set, second feature vectors (which may also be referred to as text vectors) obtained by inputting the text 1, the text 2, ..., and the text q included in the text set into the vector model may be respectively represented as: $(g_1,g_2,...,g_{128})_{s1}s1$, $(g_1,g_2,...,g_{128})_{s2}$, ..., and $(g_1,g_2,...,g_{128})_{sq}$, second feature vectors (which may also be referred to as picture vectors) obtained by inputting the picture 1, the picture 2, ..., and the picture m included in the picture set into the vector model may be respectively represented as: $(g_1,g_2,...,g_{128})_{s1}$, $(g_1,g_2,...,g_{128})_{t2}$, ..., and $(g_1,g_2,...,g_{128})_{t_m}$, and second feature vectors (which may also be referred to as video vectors) obtained by inputting the video 1, the video 2, ..., and the video n included in the video set into the vector model may be respectively represented as $(g_1,g_2,...,g_{128})_{r1}$, $(g_1,g_2,...,g_{128})_{r2}$, ..., and $(g_1,g_2,...,g_{128})_{rn}$. The text vectors, the picture vectors, and the video vectors may form a second feature vector set.

Second, the electronic device may calculate a similarity between each second feature vector and the first feature vector.

For example, as shown in FIG. 29A and FIG. 29B, the electronic device may obtain, through dot product calculation, a similarity between the second feature vector and the first feature vector $(g_1,g_2,...,g_{128})_p$. A manner of calculating a similarity is described by using the text vector $(g_1,g_2,...,g_{128})_{s1}$ converted from the text 1 as an example. A similarity between the text vector and the first feature vector is

$$h_{s_1}=(g_1)_{s_1}\times(g_1)_p+(g_2)_{s_1}\times(g_2)_p+...+(g_{128})_{s_1}\times(g_{128})_p$$

, and other similarities are similar. Therefore, similarities (which may be referred to as text similarities) corresponding to the text 1, the text 2, ..., and the text q included in the text set may be represented as $h_{s_1}$, $h_{s_2}$, ..., and $h_{s_q}$, similarities (which may be referred to as picture similarities) corresponding to the picture 1, the picture 2, ..., and the picture m included in the picture set may be represented as $h_{t_1}$, $h_{t_2}$, ..., and $h_{t_m}$, and similarities (which may be referred to as video similarities) corresponding to the video 1, the video 2, ..., and the video n included in the video set may be represented as $h_{r_1}$, $h_{r_2}$, ..., and $h_{r_n}$. The text similarities, the picture similarities, and the video similarities may form a similarity set.

Finally, the electronic device may filter web page content corresponding to second feature vectors, similarities between which and the first feature vector are greater than or equal to a preset threshold, and the filtered content may form the first content set.

For example, as shown in FIG. 29A and FIG. 29B, the electronic device may filter similarities greater than or equal to the preset threshold from the similarity set, and web page content corresponding to the similarities may form the first content set. It is assumed that in a text similarity set, text similarities corresponding to the text 1, the text 3, and the text 4 are greater than or equal to a preset threshold. Therefore, the text 1, the text 3, and the text 4 may form a related text set. It is assumed that in a picture similarity set, picture similarities corresponding to the picture 1 and the picture 2 are greater than or equal to a preset threshold. Therefore, the picture 1 and the picture 2 may form a related picture set. It is assumed that in a video similarity set, video similarities corresponding to the video 1 and the video 3 are greater than or equal to a preset threshold. Therefore, the video 1 and the video 3 may form a related video set. The related text set, the related picture set, and the related video set may form the first content set.

An example of a scenario is provided based on the foregoing manner of obtaining the first content set. It is assumed that the first key words are key words "Xi'an travel route" displayed in the search field 311 in the user interface 310 shown in FIG. 3(A). Assuming that q is 4, and m and n are 3, the text set in the second content set may include the text 1 ("hot travel routes are... "), the text 2 ("Xi'an, anciently known as Chang'an..."), the text 3 ("scenic spot route 1: Shaanxi History Museum-Drum Tower and Bell Tower..."), and the text 4 ("travel route: Xicang-Huimin Street..."). The picture set may include the picture 1 (a picture of a scenic spot in a travel route), the picture 2 (a picture of a scenic spot in a travel route), and a picture 3 (a picture of special food). The video set may include the video 1 (a travel guide video, titled "Xi'an travel guide video"), the video 2 (a tourist interview video, titled "visitor gives a thumb-up to Xi'an"), and the video 3 (a travel guide video, titled "Xi'an 3-day travel guide"). Similarities between the text 1, the text 3, the text 4, the picture 1, the picture 2, the video 1, and the video 3 and the first key words are greater than or equal to the preset threshold. Therefore, the first content set includes the text content 4121 (used to display the text 1), the text content 4122 (used to display the text 4), and the text content 4123 (used to display the text 3) in the user interface 410 shown in FIG. 4(A), the picture content 4211 (used to display the picture 1) and the picture content 4212 (used to display the picture 2) in the user interface 420 shown in FIG. 4(B), and the video content 4311 (used to display the video 1) and the video content 4312 (used to display the video 3) in the user interface 430 shown in FIG. 4(C).

This application is not limited to the foregoing manner of obtaining the first content set in the foregoing example. In another implementation, the electronic device may alternatively calculate a similarity between each piece of content in the second content set and the first key word, then compare similarities of web page content of a same type that belongs to a same web page, and determine web page content, similarities between which and the first key word rank in the first M positions (M is a positive integer), where the determined web page content may form the first content set. Optionally, different types correspond to different M. For example, assuming that the second content set includes the text 1, the text 2, the picture 1, the picture 2, and the picture 3 in the web page 1, and a similarity between the text 1 and the first key word is greater than a similarity between the text 2 and the first key word, the picture 1 to the picture 3 are sequentially the picture 3, the picture 1, and the picture 2 in descending order of similarities to the first key word. Assuming that M corresponding to the text is 1, and M corresponding to the picture is 2, the first content set includes the text 1, the picture 1, and the picture 3. This application is not limited thereto. Alternatively, similarities of web page content of a same type that belongs to a same web page may be compared, and web page content, similarities between which and the first key word are greater than or equal to a preset threshold is determined. The determined web page content may form the first content set. This is not limited in this application.

In an implementation, before S107, the method further includes: The electronic device receives a user operation, and determines, in response to the user operation, a second web page set from the first web page set. For example, in the implementation shown in FIG. 5A, the electronic device may select the web page card 511 and the web page card 513 from the web page card 511, the web page card 512, and the web page card 513 in the user interface 510 shown in FIG. 5A(A). Therefore, the second web page set is the web page 1 (titled "Xi'an travel route map") indicated by the web page card 511 and the web page 3 (titled "Xi'an travel comprehensive guide") indicated by the web page card 513. In this case, a manner of obtaining the first content set is similar to the foregoing described manner of obtaining the first content set, and a difference lies in that the web pages that rank in the first N positions and that are in the first web page set need to be replaced with the second web page set. To be specific, web page content included in the second content set is web page content in the second web page set. In other words, the first content set is obtained based on the second web page set.

S108: Generate a first card set based on the first content set.

S109: The electronic device displays the first card set.

In an implementation, the first card set may include at least one card.

In an implementation, any card included in the first card set may include web page content of one type. In other words, different cards are used to display web page content of different types. For example, web page content of a plurality of types such as a text, a picture, a video, audio, and a document is separately displayed on different cards. This application is not limited thereto. In some other examples, classification into types may be more refined. For example, a static picture and a dynamic picture are displayed on different cards. In some other examples, classification into types may be coarser. For example, files such as a video, audio, and a document are displayed on a same card.

For example, assuming that the first content set is the example in S107, including the text 1 ("hot travel routes are..."), the text 3 ("scenic spot route 1: Shaanxi History Museum-Drum Tower and Bell Tower..."), the text 4 ("travel route: Xicang-Huimin Street..."), the picture 1 (a picture of a scenic spot in a travel route), the picture 2 (a picture of a scenic spot in a travel route), the video 1 (a travel guide video, titled "Xi'an travel guide video"), and the video 3 (a travel guide video, titled "Xi'an 3-day travel guide"), the first card set in S108 and S109 may include three cards, and the three cards respectively include text content, picture content, and video content. For the card including the text content, refer to the text card 412 in the user interface 410 shown in FIG. 4(A), for the card including the picture content, refer to the picture card 421 in the user interface 420 shown in FIG. 4(B), and for the card including the video content, refer to the video card 431 in the user interface 430 shown in FIG. 4(C).

This application is not limited thereto. In another implementation, any card included in the first card set may include content in one web page. In other words, content of different web pages is displayed on different cards. For example, assuming that the first content set is the example in S107, including the text 1 (belonging to the web page 1), the text 3 (belonging to the web page 2), the text 4 (belonging to the web page 3), the picture 1 (belonging to the web page 1), the picture 2 (belonging to the web page 2), the video 1 (belonging to the web page 2), and the video 3 (belonging to the web page 1), the first card set in S108 and S109 may include three cards, and the three cards respectively include content of the web page 1, the web page 2, and the web page 3. The card including the content of the web page 1 specifically includes the text content 4121 (used to display the text 1) in the user interface 410 shown in FIG. 4(A), the picture content 4211 (used to display the picture 1) in the user interface 420 shown in FIG. 4(B), and the video content 4312 (used to display the video 3) in the user interface 430 shown in FIG. 4(C). The card including the content of the web page 2 specifically includes the text content 4123 (used to display the text 3) in the user interface 410, the picture 4212 (used to display the picture 2) in the user interface 420, and the video content 4311 (used to display the video 1) in the user interface 430. The card including the content of the web page 3 specifically includes the text content 4122 (used to display the text 4) in the user interface 410. A card classification manner is not limited in this application.

In an implementation, when displaying non-text web page content such as a picture, a video, audio, and a document in the first card set, the electronic device may simultaneously display texts related to the web page content, for example, a name, a title, and an annotation.

In an implementation, for web page content such as a video, audio, and a document whose original file cannot be obtained, the electronic device may display identification information of the web page content in the first card set, to indicate the web page content. The identification information includes, for example, but is not limited to, a title, a name, a cover picture, and a thumbnail. For example, the first card set in S108 and S109 includes the video card 431 in the user interface 430 shown in FIG. 4(C), and display forms of the video content 4311 and the video content 4312 in the video card 431 are cover pictures.

In an implementation, for any card included in the first card set, the electronic device may determine a display sequence of web page content based on a correlation (for example, represented by a similarity in S107) between the web page content in the card and the first key word. Optionally, a higher correlation indicates a higher display sequence of the web page content in the card. For example, the first card set in S108 and S109 includes the text card 412 in the user interface 410 shown in FIG. 4(A). In descending order of correlations with the first key words "Xi'an travel route", the plurality of pieces of text content displayed in the text card 412 are arranged from top to bottom in sequence as follows: the text content 4121 ("hot travel routes are..."), the text content 4122 ("travel route: Xicang-Huimin Street..."), and the text content 4123 ("scenic spot route 1: Shaanxi History Museum-Drum Tower and Bell Tower...").

This application is not limited thereto. In another implementation, for any card included in the first card set, the electronic device may determine a display sequence of web page content based on a display sequence of a web page to which the web page content belongs in the card. Optionally, a higher display sequence of the web page to which the web page content belongs indicates a higher display sequence of the web page content in the card. The display sequence of the web page is determined, for example, based on a correlation between the web page and the first key word, and a higher correlation indicates a higher display sequence of the web page in a web page list. For example, the first card set in S108 and S109 includes the picture card 421 included in the user interface 420 shown in FIG. 4(B). In the web page list included in the user interface 320 shown in FIG. 3(B), web page cards are sequentially the web page card 322 indicating the web page 1, the web page card 323 indicating the web page 2, and the web page card 324 indicating the web page 3 in a top-down sequence. Therefore, in the picture card 421, the picture content 4211 in the web page 1 is displayed above the picture content 4212 in the web page 2.

For example, assuming that the second web page set is the web page 1 and the web page 3 that are selected by the user in the example in S107, and assuming that the first content set obtained based on the second web page set includes the text 1 ("hot travel routes are...") in the web page 1 and the text 4 ("travel route: Xicang-Huimin Street...") in the web page 3, the first card set in S108 and S109 includes the text card 521 in the user interface 520 shown in FIG. 5A(B). In the web page list included in the user interface 320 shown in FIG. 3(B), web page cards are sequentially the web page card 322 indicating the web page 1, the web page card 323 indicating the web page 2, and the web page card 324 indicating the web page 3 in a top-down sequence. Therefore, in the text card 521, the text content 4121 (used to display the text 1) is displayed above the text content 4122 (used to display the text 4).

In another implementation, for any card included in the first card set, the electronic device may determine a display sequence of a plurality of pieces of web page content based on a display sequence of web pages to which the web page content in the card belongs and correlations between the web page content and the first key word (for example, represented by similarities in S107). Optionally, for web page content that belongs to different web pages, a higher display sequence of a web page to which web page content belongs indicates a higher display sequence of the web page content in the card; and for web page content that belongs to a same web page, a higher correlation between the web page content and the first key word indicates a higher display sequence of the web page content in the card.

For example, it is assumed that the first content set includes content 1 (a similarity with the first key word is 0.7) and content 2 (a similarity with the first key word is 0.8) in the web page 1, content 3 (a similarity with the first key word is 0.5) in the web page 2, and content 4 (a similarity with the first key word is 0.9) in the web page 3, and all the content is displayed on a card 1 in a semantic aggregation card set. It is assumed that a display sequence of the web pages from top to bottom is: the web page 1, the web page 2, and the web page 3. In addition, because a similarity corresponding to the content 2 in the web page 1 is greater than a similarity corresponding to the content 1, in the card 1, content is sequentially the content 2, the content 1, the content 3, and the content 4 in a top-down display sequence. In one case, the content 1 and the content 2 belong to a same type, for example, both are texts. In another case, the content 1 and the content 2 belong to different types, for example, the content 1 is a text, and the content 2 is a picture. In an implementation, before S108, the method further includes: The electronic device receives a user operation, and determines, in response to the user operation, a card included in the first card set, for example, but not limited to a quantity and types of cards, and a quantity of pieces of web page content included in the card. For example, in the implementation shown in FIG. 5B, the electronic device determines that the first card set includes a text card, a picture card, and a video card, the text card includes a maximum of three pieces of text content, the picture card includes a maximum of two pieces of picture content, and the video card includes a maximum of two pieces of video content.

In an implementation, the method further includes: When displaying the first card set, the electronic device may receive a user operation on any content in the first card set, and display, in response to the user operation, detailed content of a web page to which the content belongs. Optionally, the electronic device may display web page content related to the content. Optionally, the web page content may be located to a position in the web page to which the web page content belongs for display. Optionally, the content may be highlighted (for example, highlighted) in an interface displayed by the electronic device. For example, in the implementation shown in FIG. 6, the electronic device may display, in response to a touch operation performed on the text content 4121 included in the text card 412 in the user interface 410 shown in FIG. 6(A), the user interface 600 shown in FIG. 6(B). For example, in the implementation shown in FIG. 25B and FIG. 25C, the electronic device 100 may display, in response to a touch operation performed on the associated content 2512B in the user interface 2530 shown in FIG. 25B, the user interface 2540 shown in FIG. 25C. Optionally, the electronic device may jump, based on recorded address information (for example, a uniform resource locator (uniform resource locator, url)) of the web page, to a content page of the web page for display.

In an implementation, the method further includes: When displaying the first card set, the electronic device may receive a user operation on any card in the first card set, and display other content in the card in response to the user operation. For example, the card 1321 in the user interface 1320 shown in FIG. 13(C) displays the picture content 4211 and the picture content 4212. The electronic device may receive a slide operation on the card 1321 in the user interface 1320 shown in FIG. 13(C), and display other content in the card 1321 in response to the slide operation, for example, display the user interface 1320 shown in FIG. 13(D). The picture card 421 in the user interface 1320 shown in FIG. 13(D) displays the text content 4121, the text content 4122, and the text content 4123.

S110: The electronic device receives a second user operation.

S111: The electronic device modifies the first card set.

In an implementation, the electronic device may modify the first card set in response to the second user operation, and display a modified first card set.

In an implementation, the electronic device may delete, in response to the second user operation on any card in the first card set, the card from the first card set. For example, in the implementation shown in FIG. 7A, the electronic device may delete the text card 412 in response to a drag operation on the text card 412 in the user interface 410 shown in FIG. 7A. In this case, the user interface 700 shown in FIG. 7A(B) may be displayed. For example, in the implementation shown in FIG. 7B, the electronic device may delete, in response to a tap operation on the delete control 4124 in the user interface 410 shown in FIG. 7B(A), the text card 412 corresponding to the delete control 4124. In this case, the user interface 700 shown in FIG. 7B(B) may be displayed.

In an implementation, the electronic device may adjust, in response to the second user operation on any card in the first card set, a display position of the card in the first card set. For example, when displaying the user interface 410 shown in FIG. 13(A), the electronic device may receive a drag operation on the text card 412 in the user interface 410. For example, the drag operation is dragging left or right or dragging up or down. In addition, when the finger of the user leaves the screen, the electronic device further displays the picture card 421 in the user interface 1310 shown in FIG. 13(B). The electronic device switches display positions of the text card 412 and the picture card 421 in response to the drag operation.

In an implementation, the electronic device may combine, in response to the second user operation on any card in the first card set, the card and another card into one card. For example, in an implementation shown in FIG. 13(A), FIG. 13(B), FIG. 13(C), and FIG. 13(D), the electronic device may receive the drag operation on the text card 412 in the user interface 410 shown in FIG. 13(A), and when the finger of the user leaves the screen, the electronic device further displays the picture card 421 in the user interface 1310 shown in FIG. 13(B). In response to the drag operation, the electronic device combines the text card 412 and the picture card 421. For a card obtained through combination, refer to the card 1321 in the user interface 1320 shown in FIG. 13(C) and FIG. 13(D).

In an implementation, the electronic device may display, in response to the user operation on any card in the first card set, a user interface used to edit the card. For example, in an implementation shown in FIG. 8, the electronic device may display, in response to the touch and hold operation on the text card 412 in the user interface 410 shown in FIG. 8(A), an editing interface of the text card 412: the user interface 800 shown in FIG. 8(B).

In an implementation, the electronic device may display, in response to the second user operation on any content in any card in the first card set, an editing interface of the content, and the user may edit (for example, add or delete) the content based on the editing interface. For example, in an implementation shown in FIG. 9, the electronic device may receive a character entered by the user and add the character to the text content 4121.

In an implementation, the electronic device may delete, in response to the second user operation on any content in any card in the first card set, the content from the first card set. For example, in an implementation shown in FIG. 10, the electronic device may delete, in response to a tap operation on the delete control 810 in the user interface 800 shown in FIG. 10(A), the text content 4121 corresponding to the delete control 810 from the text card 810. In this case, the user interface 1000 shown in FIG. 10(B) may be displayed.

In an implementation, the electronic device may adjust, in response to the second user operation on any content in any card in the first card set, a display position of the content in the card. For example, in an implementation shown in FIG. 11, the electronic device may switch, in response to a drag operation on the text content 4122 in the user interface 800 shown in FIG. 11(A), display positions of the text content 4121 and the text content 4122.

In an implementation, the electronic device may adjust, in response to the second user operation on any content in any card in the first card set, a display card of the content (that is, a card used to display the web page content), or it may be understood as moving the web page content to another card selected by the user for display, or it may be understood as adjusting a display position of the content in the first card set. For example, in an implementation shown in FIG. 12, the electronic device may receive a drag operation on the text content 4121 in the text card 412 included in the user interface 1210 shown in FIG. 12(A), and when the finger of the user leaves the screen, the electronic device further displays the picture card 421 in the user interface 1220 shown in FIG. 12(B). The electronic device moves, in response to the drag operation, the text content 4121 to the picture card 421 for display (that is, a display card of the text content 4121 is adjusted from the text card 412 to the picture card 421).

In an implementation, the electronic device may create a new card (which may be referred to as a customized card) in the first card set in response to the second user operation on the first card set. For example, in an implementation shown in FIG. 14, the electronic device may create, in response to a tap operation on the new control 415 in the user interface 410 shown in FIG. 14(A), a new card, that is, the card 1410 in the user interface 1400 shown in FIG. 14(B).

In an implementation, the electronic device may add, to a customized card in response to a user operation, web page content included in the first card set. The adding manner may include but is not limited to the following three cases: In one case, the electronic device may add, to the customized card, all content included in cards selected by the user. For example, in an implementation shown in FIG. 15(A) and FIG. 15(B), a text card corresponding to the option 1513A in the user interface 1510 shown in FIG. 15(A) and the picture card corresponding to the option 1514A in the user interface 1510 shown in FIG. 15(A) have been selected by the user, and the electronic device may add, to the customized card, content included in the text card 412 in the user interface 410 shown in FIG. 4(A) and content included in the picture card 421 in the user interface 420 shown in FIG. 4(B). In this case, the customized card is the card 1410 in the user interface 1520 shown in FIG. 15(B).

In another case, the electronic device may add, to the customized card, content that is in the first card set and that is selected by the user. For example, in an implementation shown in FIG. 16, the text content 4121 corresponding to the option 1613A in the user interface 1610 shown in FIG. 16(A) and the picture content 4211 corresponding to the option 1614A in the user interface 1610 shown in FIG. 16(A) have been selected by the user, and the electronic device may add the text content 4121 and the picture content 4211 to the customized card. In this case, the customized card is the card 1410 in the user interface 1620 shown in FIG. 16(B).

In another case, the electronic device may move, in response to the second user operation on any content in any card in the first card set, the content to the customized card. For example, in an implementation shown in FIG. 17A, the electronic device may move, in response to a drag operation on the text content 4121 in the text card 412 included in the user interface 1210 shown in FIG. 17A(A), the text content 4121 to the customized card for display. In this case, customized card is the card 1410 in the user interface 1710 shown in FIG. 17A(B). For example, in an implementation shown in FIG. 17B(A), FIG. 17B(B), and FIG. 17B(C), the text content 4121 in the text card 412 included in the user interface 1720 shown in FIG. 17A(B), and the picture content 4211 in the picture card 421 included in the user interface 1730 shown in FIG. 17B(B) have been selected, and the electronic device may move, in response to a drag operation on the picture content 4211, the selected text content 4121 and the selected picture content 4211 to the customized card for display. In this case, the customized card is the card 1410 in the user interface 1740 shown in FIG. 17B(C).

S112: The electronic device saves information about the first card set.

In an implementation, the electronic device may save the information about the first card set in response to a user operation. For example, the electronic device may save the information about the first card set in response to a touch operation (for example, a tap operation) on the save control 414 in the user interface 410 shown in FIG. 4(A).

In an implementation, the electronic device may save the information about the first card set into a memory of the electronic device, and may subsequently obtain the information about the first card set from the memory for secondary loading of the first card set. In another implementation, the electronic device may send the information about the first card set to a cloud server for saving, and may subsequently obtain the information about the first card set from the cloud server for secondary loading of the first card set.

In an implementation, the information that is about the first card set and that is saved in the electronic device may include but is not limited to information such as basic information, resource information, position information, and web page information of the first card set. The basic information is the first key word for searching by the user. The resource information includes a quantity of cards in the first card set and a plurality of pieces of web page content (which may be understood as a set of web page content) in the first card set. Optionally, the resource information includes original files of the web page content. Optionally, the resource information includes related information of non-text web page content such as a picture, a video, audio, and a document, for example, but not limited to at least one of the following: a name, a title, an annotation, a cover picture, a thumbnail, and address information (such as a hyperlink) of an original file. For example, for web page content such as a video, audio, and a document whose original file cannot be obtained, related information of the web page content may be saved as resource information. The position information includes a display position of a card in the first card set (for example, an ordinal of the card in the first card set) and a display position of each piece of web page content in the first card set (for example, an ordinal of the web page content in which card in the first card set). Optionally, the position information may be used by the electronic device to determine a position for drawing the card and the web page content when the electronic device subsequently displays the first card set. The web page information includes address information (for example, a url) of a web page to which each piece of web page content belongs. Optionally, the web page information may be used to implement a function of displaying a content page of a web page to which web page content belongs. For example, in response to a double-tap operation on any content in the first card set, the electronic device may jump to a web page based on address information that is of the web page to which the content belongs and that is in the web page information. In this case, specific content of the web page may be displayed.

For example, it is assumed that the first card set includes three cards: the text card 412 in the user interface 410 shown in FIG. 4(A), the picture card 421 in the user interface 420 shown in FIG. 4(B), and the video card 431 in the user interface 430 shown in FIG. 4(C). Therefore, the basic information that is of the first card set and that is saved in the electronic device is key words for searching by the user, that is, "Xi'an travel route" displayed in the title 411 in the user interface 410. The resource information that is of the first card set and that is saved in the electronic device is a set of web page content in the first card set, and specifically includes: the text content 4121, the text content 4122, and the text content 4123 in the text card 412, the picture content 4211 and the picture content 4212 in the picture card 421, and the video content 4311 and the video content 4312 in the video card 431. The position information that is of the first card set and that is saved in the electronic device includes a display position of a card in the first card set. For example, the text card 412 is the first card in the first card set. The position information further includes a display position of each piece of web page content in the resource information in the first card set. For example, the text content 4121 is the first piece of content in the first card (that is, the text card 412) in the first card set. The web page information that is of the first card set and that is saved in the electronic device includes address information of a web page to which each piece of web page content in the resource information belongs, for example, a url of the web page 1 to which the text content 4121 belongs, that is, the "website 111" included in the source information 4121A corresponding to the text content 4121 in the user interface 410.

S113: The electronic device displays the at least one entry control.

In an implementation, any entry control is used to trigger display of the first card set. Optionally, that the electronic device displays the at least one entry control may also be understood as that the electronic device sets at least one manner of secondary loading of the first card set, and any entry control may implement one manner of secondary loading of the first card set.

In an implementation, that the electronic device may determine the at least one entry control in response to a user operation may be understood as that the user may select an entry for secondary loading of the first card set. For example, in an implementation shown in FIG. 18, in the user interface 1800 shown in FIG. 18(B), the favorites folder of the browser indicated by the option 1811, the desktop indicated by the option 1812, the leftmost screen indicated by the option 1813, and the gallery indicated by the option 1814 have been selected by the user. This may represent that the electronic device displays, at the foregoing selected positions, the entry for secondary loading of the first card set.

In an implementation, before displaying the entry control, the electronic device may first generate the entry control. Specific examples are as follows:

For example, the electronic device may generate/create a tappable component (that is, the entry control) in the favorites folder of the browser application. The component may store identification information of the first card set. The identification information may be used by the electronic device to determine the to-be-displayed/loaded first card set when the electronic device receives a user operation (for example, a tap operation) on the component.

For example, the electronic device may generate/create an entry control in a widget form in the desktop or the leftmost screen application, and store a correspondence between the entry control and the identification information of the first card set. The identification information may be used by the electronic device to determine the to-be-displayed/loaded first card set when the electronic device receives a user operation on the entry control.

For example, the electronic device may generate an image in the gallery. The image may include a QR code or content in another form. The QR code is used as an example for description, and the QR code includes the identification information of the first card set. The electronic device may obtain the identification information of the first card set by recognizing the QR code, to determine the to-be-displayed/loaded first card set.

The following shows some examples of displaying the entry control by the electronic device:

For example, in an implementation shown in FIG. 19A(A), FIG. 19A(B), and FIG. 19A(C), the user interface 1920 shown in FIG. 19A(B) is a favorites folder page of the browser application, and the option 1922A in the user interface 1920 is an entry control indicating a card set whose basic information is "Xi'an travel route".

For example, in an implementation shown in FIG. 19B, the user interface 1930 is a favorites folder page of the browser application, and the list 1934 in the user interface 1930 includes an entry control (that is, the option 1934A) indicating a card set whose basic information is "Xi'an travel route" and an entry control indicating a card set whose basic information is "Wuhan travel route".

For example, in an implementation shown in FIG. 20(A), FIG. 20(B), FIG. 20(C), and FIG. 20(D), the user interface 2010 shown in FIG. 20(A) is a desktop, and the control 2011 in the user interface 2010 is an entry control indicating a card set whose basic information is "Xi'an travel route".

For example, in an implementation shown in FIG. 21(A), FIG. 21(B), and FIG. 21(C), the user interface 2110 shown in FIG. 21(A) is a user interface of the leftmost screen application, and the control 2111 in the user interface 2110 is an entry control indicating a card set whose basic information is "Xi'an travel route".

For example, in an implementation shown in FIG. 22(A), FIG. 22(B), and FIG. 22(C), the user interface 2220 shown in FIG. 22(B) is a user interface of the gallery application, the picture 2221 in the user interface 2220 indicates a card set whose basic information is "Xi'an travel route", and a picture recognition control 2222 in the user interface 2220 is an entry control of the card set.

S114: The electronic device receives a third user operation on a first entry control.

In an implementation, the first entry control is any one of the foregoing at least one entry control.

S115: The electronic device displays the first card set.

In an implementation, the electronic device may display the first card set in response to the third user operation. In some examples, the electronic device may open an application (for example, the browser) used to implement a function of displaying the first card set, and display the first card set in a user interface of the application. In some other examples, the electronic device may invoke a display component in an application in which the first entry control is located, and display the first card set by using the display component.

Examples of scenarios in S114 and S115 are shown as follows:

For example, in an implementation shown in FIG. 19A(A), FIG. 19A(B), and FIG. 19A(C), the electronic device may receive a touch operation on the option 1922A in the user interface 1920 shown in FIG. 19A(B), and display the user interface 410 shown in FIG. 19A(C).

For example, in an implementation shown in FIG. 19B, the electronic device may receive a touch operation on the option 1934A in the user interface 1930, and display the user interface 410 shown in FIG. 19A(C).

For example, in an implementation shown in FIG. 20(A), FIG. 20(B), FIG. 20(C), and FIG. 20(D), the electronic device may receive a touch operation on the control 2011 in the user interface 2010 shown in FIG. 20(A), and display the user interface 410 shown in FIG. 20(C).

For example, in an implementation shown in FIG. 21(A), FIG. 21(B), and FIG. 21(C), the electronic device may receive a touch operation on the control 2111 in the user interface 2110 shown in FIG. 21(A), and display the user interface 410 shown in FIG. 21(C).

For example, in an implementation shown in FIG. 22(A), FIG. 22(B), and FIG. 22(C), the electronic device may receive a touch operation on the picture recognition control 2222 in the user interface 2220 shown in FIG. 22(B), and display the user interface 410 shown in FIG. 22(C). This application is not limited thereto. The electronic device may further display, in response to a user operation used to scan the picture 2221 in the user interface 2220 shown in FIG. 22(B), the user interface 410 shown in FIG. 22(C). For example, the electronic device uses a scan function in a chat application or a payment application.

In an implementation, the third user operation is further used to select the card 1 in the first card set, and S115 may include: The electronic device displays the card 1 in the first card set in response to the third user operation. For example, in an implementation shown in FIG. 20(A), FIG. 20(B), FIG. 20(C), and FIG. 20(D), the electronic device displays, in response to the card control 2011C (used to display a text card) in the user interface 2010 shown in FIG. 20(A), the user interface 410 shown in FIG. 4(A). The electronic device displays, in response to the card control 2011C (used to display a picture card) in the desktop 2020 shown in FIG. 20(B), the user interface 420 shown in FIG. 4(B).

In an implementation, the method further includes: The electronic device may switch, in response to a user operation on the first entry control, a card set displayed in the first entry control. For example, in an implementation shown in FIG. 20(A), FIG. 20(B), FIG. 20(C), and FIG. 20(D), the electronic device may display, in response to a slide operation on the control 2011 (used to display a card set whose basic information is "Xi'an travel route") in the desktop 2020 shown in FIG. 20(B), the user interface 2030 shown in FIG. 20(D). The control 2011 in the user interface 2030 is used to display a card set whose basic information is "Wuhan travel route".

In an implementation, S115 includes: The electronic device may obtain the saved information about the first card set based on the identification information of the first card set, and display the first card set based on the information. Optionally, the identification information of the first card set may be determined based on the first entry control. For example, the electronic device stores a correspondence between the first entry control and the identification information of the first card set. When the third user operation on the first entry control is received, the identification information of the first card set corresponding to the first entry control is determined based on the correspondence. Optionally, when the first entry control displays content of a card set 1, identification information of the card set 1 is determined based on the correspondence; or when the first entry control displays content of a card set 2, identification information of the card set 2 is determined based on the correspondence.

For example, the electronic device may obtain the first key word based on the saved basic information of the first card set, determine, based on the saved resource information of the first card set, a quantity of cards included in the first card set and web page content in each card, determine, based on the saved position information of the first card set, a drawing position/sequence of a card and web page content in the resource information, and implement, based on the saved web page information of the first card set, a function of viewing a content page of a web page to which web page content in the first card set belongs.

In an implementation, the information about the first card set is saved in the memory of the electronic device, and the electronic device may obtain the information about the first card set from the memory. In another implementation, the information about the first card set is saved in a cloud server. The electronic device may send a request message (for example, including the identification information of the first card set) to the cloud server, and receive the information that is about the first card set and that is returned by the cloud server based on the request message.

In an implementation, the user may still view and edit the first card set in S115, for example, but not limited to double-tapping content to view a content page of a web page to which the content belongs, sliding to view more content in a card, dragging a card to delete the card, dragging a card to adjust a display position of the card, combining a plurality of cards into one card, touching and holding to enter an editing interface of a card, tapping to enter an editing interface of content, tapping to delete content in a card, dragging content to adjust a display position of the content in a card, dragging content to adjust a display card of the content, creating a card, selecting content in a menu to add the content to the new card, and dragging content to the new card. For details, refer to descriptions of S109 to S111. Details are not described again.

It may be understood that any web page in the first web page set may include content related to the first key word, or may include content unrelated to the first key word. This increases difficulty of searching for content that meets a search intention by the user. In this application, content related to the first key word may be filtered from the web page content included in the first web page set, and the filtered content is displayed by using the first card set, so that the user can quickly obtain, by using the first card set, valuable content that is in the search result and that meets the search intention of the user, and does not need to tap a plurality of web pages or browse a complete web page, thereby reducing a time for sorting out the search result by the user and improving search efficiency. The first card set may include web page content of a plurality of types such as a picture, a video, audio, and a document, and is not limited to a text type. The content is more abundant, more meets a user requirement, and has better user experience.

In addition, this application supports viewing, modifying, saving, and secondary viewing/loading of the first card set, to meet a personalized requirement of a user. The user does not need to copy web page content to an application such as a notepad for modification and saving, and the user does not need to add an entire web page to the favorites folder, and does not need to search for required content (which cannot be modified) after browsing the entire web page again when the user views the web page next time, thereby reducing a time for user operation and a time for secondary viewing/loading. In addition, there are various manners of secondary viewing/loading (for example, the entry for secondary loading of the card set is displayed by using an application such as the favorites folder of the browser, the desktop, the leftmost screen, or the gallery), and flexibility is high, thereby increasing a speed and accuracy of obtaining the first card set by the user again, and making use more convenient for the user.

FIG. 30 is a schematic flowchart of another search method according to an embodiment of this application. The method may include but is not limited to the following steps.

S201: An electronic device receives a fourth user operation on a first web page in a first web page set.

In an implementation, S201 is an optional step.

In an implementation, the first web page set is the first web page set described in S103 to S105 shown in FIG. 28.

In an implementation, before S201, the electronic device may perform S101 to S105 shown in FIG. 28.

In an implementation, the first web page is any web page in the first web page set.

For example, the web page list in the user interface 320 shown in FIG. 23(A) shows summary information (which may be referred to as web page cards) of three web pages in the first web page set: the web page card 322 indicating the web page 1, the web page card 323 indicating the web page 2, and the web page card 324 indicating the web page 3. The electronic device may receive a touch operation on the web page card 322, and the web page 1 indicated by the web page card 322 is the first web page.

S202: The electronic device requests to obtain display data of the first web page from a network device.

In an implementation, the electronic device may send a request message to the network device in response to the fourth user operation, to request to obtain the display data of the first web page.

S203: The network device sends first web page data to the electronic device.

In an implementation, the network device may send the first web page data, that is, the display data of the first web page, to the electronic device based on the request message sent by the electronic device.

S204: The electronic device displays the first web page based on the first web page data.

For example, after receiving the touch operation on the web page card 322 in the user interface 320 shown in FIG. 23(A), the electronic device may display specific content of the web page 1 indicated by the web page card 322, that is, display the user interface 2300 shown in FIG. 23(B).

S205: The electronic device receives a fifth user operation.

In an implementation, the fifth user operation is used to trigger viewing of a second card set for the currently displayed first web page, where the second card set includes content in the first web page. For example, the fifth user operation is a tap operation on the card control 2310 in the user interface 2300 shown in FIG. 23(B).

S206: The electronic device obtains a third content set from the content of the first web page.

In an implementation, the electronic device may filter, from the content of the first web page, the third content set that meets the search intention of the user. In an implementation, content included in the third content set is related to the first key word. For example, the content included in the third content set is content that is in the content of the first web page and that is highly related to the first key word.

A manner of obtaining the third content set by the electronic device is similar to the manner of obtaining the first content set described in S107 in FIG. 28. The following describes, by using examples, the manner of obtaining the third content set by the electronic device. It should be noted that the following mainly describes differences between the two manners. For other descriptions, refer to the descriptions of the manner of obtaining the first content set in S107 in FIG. 28.

In an implementation, the electronic device may first calculate a similarity between each piece of content in the first web page and the first key word, and then filter web page content, a similarity between which and the first key word is greater than or equal to a preset threshold. The filtered content may form the third content set.

In another implementation, the electronic device may first calculate a similarity between each piece of content in the first web page and the first key word, then compare similarities of web page content of a same type, and determine web page content, similarities between which and the first key word rank in the first M positions (M is a positive integer), where the determined web page content may form the third content set.

S207: The electronic device generates a second card set based on the third content set.

S208: The electronic device displays the second card set.

In an implementation, the second card set may include at least one card.

In an implementation, any card included in the second card set may include web page content of one type. For example, web page content of a plurality of types such as a text, a picture, a video, audio, and a document is separately displayed on different cards. This application is not limited thereto. In some other examples, classification into types may be more refined. For example, a static picture and a dynamic picture are displayed on different cards. In some other examples, classification into types may be coarser. For example, files such as a video, audio, and a document are displayed on a same card.

For example, it is assumed that the first web page is the web page 1 displayed on the user interface 2300 shown in FIG. 23(B), and the third content set in S206 and S207 includes: the text 1 ("hot travel routes are...") and the text 2 ("You must go to the Mausoleum of the First Qin Emperor when you go to Xi'an...a ticket of the Mausoleum of the First Qin Emperor is 120 yuan...a fare to the Mausoleum of the First Qin Emperor is 20 yuan...") in the user interface 2300, the text 3 ("Xi'an hot scenic spots") in the web page 1 (not shown in the user interface 2300), the picture 1 in the user interface 2300, and the video 1 in the web page 1 (not shown in the user interface 2300). In this case, the second card set in S207 and S208 may include three cards, and the three cards respectively include text content, picture content, and video content. For the card including the text content, refer to the text card 2413 (used to display the text 1, the text 2, and the text 3) in the user interface 2410 shown in FIG. 24(A), for the card including the picture content, refer to the picture card 2421 (used to display the picture 1) in the user interface 2420 shown in FIG. 24(B), and for the card including the video content, refer to the video card 2431 (used to display the video 1) in the user interface 2430 shown in FIG. 24(C).

In an implementation, for any card included in the second card set, the electronic device may determine a display sequence of web page content based on a correlation (for example, represented by a similarity) between the web page content in the card and the first key word. Optionally, a higher correlation indicates a higher display sequence of the web page content in the card. For example, with reference to the text card 2413 in the user interface 2410 shown in FIG. 24(A), in descending order of correlations with the first key words "Xi'an travel route", a plurality of pieces of text content displayed in the text card 2413 are arranged from top to bottom in sequence as follows: the text content 2413A ("hot travel routes are..."), the text content 2413B ("You must go to the Mausoleum of the First Qin Emperor when you go to Xi'an...a ticket of the Mausoleum of the First Qin Emperor is 120 yuan...a fare to the Mausoleum of the First Qin Emperor is 20 yuan..."), and the text content 2413C ("Xi'an hot scenic spots...").

In an implementation, the user may view and edit the second card set, for example, but not limited to double-tapping content to view a content page of a web page to which the content belongs, sliding to view more content in a card, dragging a card to delete the card, dragging a card to adjust a display position of the card, combining a plurality of cards into one card, touching and holding to enter an editing interface of a card, tapping to enter an editing interface of content, tapping to delete content in a card, dragging content to adjust a display position of the content in a card, dragging content to adjust a display card of the content, creating a card, selecting content in a menu to add the content to the new card, and dragging content to the new card. For details, refer to descriptions of the first card set in S109 to S111 of FIG. 28. Specific examples are similar to FIG. 6, FIG. 7A, FIG. 7B, FIG. 8 to FIG. 16, FIG. 7A, and FIG. 17B(A), FIG. 17B(B), and FIG. 17B(C). Details are not described again.

S209: The electronic device receives a sixth user operation on the first content in the first web page.

In an implementation, the first content is any web page content included in the first web page.

The following shows some first content and sixth user operations by using examples:

For example, in an implementation shown in FIG. 25A(A), FIG. 25A(B), and FIG. 25A(C), the first content is a text "the Mausoleum of the First Qin Emperor" in the user interface 2300 shown in FIG. 25A(A), and the sixth user operation is a touch operation on the save option 2330A in the function list 2330 included in the user interface 2300.

For example, in an implementation shown in FIG. 26(A), FIG. 26(B), and FIG. 26(C), the first content is the picture 2340A in the user interface 2300 shown in FIG. 26(A), and the sixth user operation includes a slide operation performed on the picture 2340A, and a touch operation on the save control 2611 or the save option 2613C in the user interface 2610 shown in FIG. 26(B).

For example, in an implementation shown in FIG. 27A, the first content is the picture 2340A in the user interface 2300 shown in FIG. 27A(A), and the sixth user operation is a drag operation performed on the picture 2340A.

S210: The electronic device obtains, from the content of the first web page, at least one piece of second content associated with the first content.

In an implementation, the electronic device may obtain, according to a preset rule, at least one piece of second content associated with the first content. For example, if the first content is the picture 2340A in the user interface 2300 shown in FIG. 26(A), two pieces of second content can be obtained: the title 2340B ("Xi'an travel hot scenic spots") of the picture 2340A shown in the user interface 2300 and the description 2340C of the picture 2340A ("the foregoing picture mainly shows...").

In another implementation, the second content may be web page content that is in the content of the first web page and that is highly related to the first content (for example, represented by using a similarity). In some examples, the electronic device may first calculate a similarity between each piece of content in the first web page and the first content, and then filter web page content, a similarity between which and the first content is greater than or equal to a preset threshold as the second content. For descriptions of calculating the similarity, refer to descriptions of the similarity in S107 of FIG. 28. This application is not limited thereto. In some other examples, the electronic device may alternatively filter web page content, similarities between which and the first content rank in the first M positions as the second content (M is a positive integer). For example, if the first content is a text "Xi'an travel route 1: ...", the second content may be "Xi'an travel route 2: ...". For example, if the first content is a text "the Mausoleum of the First Qin Emperor" included in the text 2320 in the user interface 2300 shown in FIG. 25A(A), two pieces of second content can be obtained: the text "a ticket of the Mausoleum of the First Qin Emperor is 120 yuan" included in the text 2320 and the text "a fare to the Mausoleum of the First Qin Emperor is 20 yuan" included in the text 2320.

S211: The electronic device displays the second card set based on the first content and the at least one piece of second content.

In an implementation, the electronic device may first create a new card (which may be referred to as a customized card) in the second card set, and display the first content and the at least one piece of second content in the customized card. The customized card is a card other than the card included in the second card set in S208.

In an implementation, one customized card may include web page content of only one web page. For example, after receiving the sixth user operation on the first content in the first web page, the electronic device may create a customized card 1 in the second card set, where the customized card 1 is used to display the content of the first web page. After receiving a user operation on web page content in a second web page, the electronic device may create a customized card 2 in the second card set, where the customized card 2 is used to display content of the second web page. Optionally, the electronic device may display information about the first web page when displaying the customized card 1, to indicate that the customized card 1 is used to display the content of the first web page. For example, it is assumed that the first web page is the web page 1 displayed on the user interface 2300 shown in FIG. 25A(A). It is assumed that based on the example of S210, the first content is the text "the Mausoleum of the First Qin Emperor", and the two pieces of second content are the text "a ticket of the Mausoleum of the First Qin Emperor is 120 yuan" and the text "a fare to the Mausoleum of the First Qin Emperor is 20 yuan". The electronic device may display the card 2512 (that is, the customized card 1) by using the user interface 2510 shown in FIG. 25A(B). The card 2512 includes the text content 2512A (used to display the first content), the associated content 2512B, and the associated content 2512C (used to display the two pieces of second content). The user interface 2510 may include the title information 2511, where a title "Xi'an travel route map", website information "website 111", and source information "source aaa" of the web page 1 are displayed in the title information 2511.

In an implementation, the electronic device may display the first content and the second content in a customized card based on a display sequence of the first content and the second content in the first web page. Specific examples are as follows:

For example, in the implementation shown in FIG. 25A(A), FIG. 25A(B), and FIG. 25A(C), in the web page 1 displayed on the user interface 2300 shown in FIG. 25A(A), the text "the Mausoleum of the First Qin Emperor" is displayed before the text 1 ("a ticket of the Mausoleum of the First Qin Emperor is 120 yuan"), and the text 1 is also displayed before the text 2 ("a fare to the Mausoleum of the First Qin Emperor is 20 yuan"). Therefore, in the customized card 2512 included in the user interface 2510 shown in FIG. 25A(B), the text 2512A (used to display the text "the Mausoleum of the First Qin Emperor"), the associated content 2512B (used to display the text 1), and the associated content 2512C (used to display the text 2) are displayed sequentially in a top-down sequence.

For example, in the implementation shown in FIG. 26(A), FIG. 26(B), and FIG. 26(C), in the web page 1 displayed on the user interface 2300 shown in FIG. 26(A), the title 2340B ("Xi'an travel hot scenic spots ") is displayed above the picture 2340A, and the description 2340C ("the foregoing picture mainly shows...") is displayed below the picture 2340A. Therefore, in the customized card 2512 included in the user interface 2620 shown in FIG. 26(B), the picture 2340A, the title 2340B, and the description 2340C are displayed sequentially in a top-down sequence.

In another implementation, the electronic device may alternatively determine the display sequence of the first content and the second content in the customized card based on correlations (for example, represented by using similarities) between the first content and the second content and the first key word. Optionally, a higher correlation indicates a higher display sequence of the web page content in the customized card.

This application is not limited to the foregoing examples. In another implementation, the electronic device may alternatively display the first content and the second content in an existing card in the second card set, and a display manner is similar to the foregoing manner of displaying the first content and the second content in the customized card. Optionally, assuming that web page content of three types, namely, a text, a picture, and a video, are respectively displayed on different cards in the second card set, the electronic device may determine, based on a type of the first content and/or a type of the second content, a card for displaying the first content and the second content. For example, when the first content is a text, the first content and the second content are displayed on a card that includes text content. Alternatively, when the first content is a text and the second content is a picture, the first content is displayed on a card including text content, and the second content is displayed on a card including picture content.

In another implementation, the electronic device may alternatively determine, in response to a user operation, a card that is in the second card set and that is used to display the first content and the second content. For example, in the implementation shown in FIG. 27A, in the user interface 2700 shown in FIG. 27A(B), the select control 2714A displayed in the option 2714 of the customized card is in a selected state. This may represent that the customized card is selected. The electronic device may save the first content and the second content into the customized card. In this case, the customized card is the card 2512 shown in the user interface 2620 shown in FIG. 26(C).

This application is not limited to the method procedures in the foregoing examples. In another implementation, the electronic device may not receive the fifth user operation (that is, may not perform S205), and receive the sixth user operation (that is, perform S209) after S204. In response to the sixth user operation, the electronic device may perform S206, S207, and S210, and then display the second card set (for details, refer to descriptions of S208 and S211). A sequence between S206 and S207 and S210 is not limited. For example, based on Example 1 of S209, the sixth user operation is a tap operation on the save option 2330A in the user interface 2300 shown in FIG. 25A(A). The electronic device may generate the second card set in response to the sixth user operation. The second card set includes four cards: the text card 2413 in the user interface 2410 shown in FIG. 24(A), the picture card 2421 in the user interface 2420 shown in FIG. 24(B), the video card 2431 in the user interface 2430 shown in FIG. 24(C), and the customized card 2512 in the user interface 2510 shown in FIG. 25A(B), where the first three cards are used to display the third content set, and the fourth card is used to display the first content and the at least one piece of second content.

This application is not limited to the method procedures in the foregoing examples. In another implementation, the electronic device may alternatively first perform S209 to S211, and then perform S205 to S208. Optionally, S211 is specifically: The electronic device generates the second card set based on the first content and the at least one piece of second content, where the second card set includes at least one card, and the at least one card includes the first content and the at least one piece of content. S207 is specifically: The electronic device generates at least one card in the second card set based on the third content set. For descriptions of the at least one card, refer to descriptions of the card included in the second card set in S207. In some examples, S211 specifically includes: The electronic device generates a customized card based on the first content and the at least one piece of second content, where the customized card includes the first content and the at least one piece of second content. For example, the customized card is the customized card 2512 shown in FIG. 25A(B), or the customized card 2512 shown in FIG. 26(C). In some other examples, S211 specifically includes: The electronic device generates a plurality of cards based on the first content and the at least one piece of second content, where the plurality of cards include the first content and the at least one piece of second content. Optionally, the plurality of cards are used to display content of different types. Specific descriptions are similar to descriptions that different cards are used to display web page content of different types in S109 of FIG. 28, and details are not described again. For example, the plurality of cards are the text card 2811 in the user interface 2810 shown in FIG. 27B(A), and the picture card 2821 in the user interface 2820 shown in FIG. 27B(B).

This application is not limited to the method procedures in the foregoing examples. In another implementation, the electronic device may alternatively perform only S209 to S211, and does not perform S205 to S208.

This application is not limited to the method procedures in the foregoing examples. In another implementation, the electronic device may alternatively perform only S205 to S208, and does not perform S209 to S211.

S212: The electronic device saves information about the second card set.

In an implementation, S212 is similar to S112 in FIG. 28. For details, refer to the description of S112 in FIG. 28. In an implementation, the customized card in the second card set includes only the content of the first web page. The electronic device may save the information about the first web page, where the information includes, for example, but not limited to, a title and address information (such as a url) of the first web page. The information about the first web page may be displayed together when the customized card is displayed (for a specific example, refer to the description that the electronic device may display the information about the first web page when displaying the customized card 1 in S211).

In an implementation, the electronic device may further display at least one entry control (used to trigger display of the second card set). Specific descriptions are similar to those of S113 in FIG. 28, and details are not described again.

In an implementation, the electronic device may display the second card set in response to a user operation on any entry control. Specific descriptions are similar to those of S114 and S115 in FIG. 28, and details are not described again.

This application is not limited to the foregoing examples. In an implementation, the electronic device may cancel, in response to a user operation, adding the first content or any second content to the second card set. For example, in the implementation shown in FIG. 25A(A), FIG. 25A(B), and FIG. 25A(C), the text card 2511 in the user interface 2510 shown in FIG. 25A(B) includes the text content 2512A (used to display the first content), the text content 2512B (used to display one piece of second content), and the text content 2512C (used to display the other piece of second content). The delete option 2512D in the user interface 2510 is used to trigger deletion of the text content 2512A, the delete option 2512E in the user interface 2510 is used to trigger deletion of the text content 2512B, and the delete option 2512F in the user interface 2510 is used to trigger deletion of the text content 2512C. In other words, the user may select whether to keep the selected first content and any piece of second content associated with the first content. This is more flexible in use and better in user experience.

It may be understood that any web page in the first web page set may include content related to the first key word, or may include content unrelated to the first key word. This increases difficulty of searching for content that meets a search intention by the user. In this application, after the user selects to view specific content of the first web page, the content related to the first key word may be filtered from the content of the first web page, and the filtered content is displayed by using the second card set, so that the user can quickly obtain, by using the second card set, valuable content that is in the first web page and that meets the search intention of the user, and the user does not need to browse a complete web page, thereby reducing a time for sorting out a search result by the user, improving search efficiency, and improving user experience. Like the first card set, the second card set may also include content of a plurality of types, and also support viewing, modification, saving, and secondary viewing/loading. Therefore, the second card set has same effect as the first card set. For details, refer to the effect of the first card set in FIG. 28. Details are not described again.

In addition, user-defined selection of the content in the first web page for adding the content to the second card set is supported in this application. In other words, content that is automatically filtered by the electronic device and the content selected by the user in a same web page may be saved into a same function window (that is, the second card set). This is highly flexible, and greatly facilitates reading and secondary viewing/loading by the user. The electronic device may further filter, from the content of the first web page, the second content related to the first content, and display, by using the second card set, the first content and the second content, and the user does not need to manually search for and add the second content, so as to further reduce a time for obtaining content that meets the search intention of the user.

This application is not limited to the foregoing examples. In some other examples, the electronic device may alternatively not filter the second content related to the first content, and the second card set does not display the second content. This is not limited in this application.

Based on the descriptions of the foregoing embodiments, it may be understood that the electronic device not only can extract the web page content that is related to the search key word and that is in the plurality of web pages returned by the search function, but also can extract the web page content that is related to the search key word and that is in the web page viewed by the user, and display the extracted content to the user in a form of a card set. In addition, the electronic device may further display, together in a form of a card set, the content selected by the user in the web page content page and the content that is in the content page and that is associated with the selected content. Therefore, the user can quickly obtain, by using only the card set, the content that meets the search intention and that is in the search result, so as to greatly reduce the time of sorting out the search result and searching for the required content by the user. In addition, the card set may support functions such as reading, viewing an original web page to which content belongs, performing editing operations such as addition, deletion, modification, and sequence adjustment, saving, and secondary loading, so as to meet various requirements of the user and make use more convenient.

In the descriptions of embodiments of this application, unless otherwise stated, "/" represents the meaning of "or". For example, A/B may represent A or B. "And/or" in the text merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

In the foregoing, the terms "first" and "second" are used only for descriptive purposes, and cannot be understood as indicating or implying relative importance or implicitly indicating a quantity of indicated technical features. Therefore, features defined by "first" and "second" may explicitly or implicitly include one or more of the features. In the descriptions of embodiments of this application, "a plurality of" means two or more unless otherwise specified.

All or some of the methods provided in embodiments of this application may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, procedures or functions according to embodiments of this application are entirely or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like. In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A search method, applied to an electronic device, wherein the method comprises:

   obtaining a first key word entered by a user;
   sending a first search request to a network device, wherein the first search request comprises the first key word;
   receiving a search result set that is sent by the network device based on the first search request;
   displaying a first interface, wherein the first interface comprises the search result set, the search result set comprises a first search result and a second search result, the first search result is related to a first web page, and the second search result is related to a second web page;

receiving a first user operation;

generating a first card set in response to the first user operation, wherein the first card set comprises a first card, the first card comprises first content and second content, the first web page comprises the first content, and the second web page comprises the second content; and

displaying a second interface after the first user operation, wherein the second interface comprises the first card.

2. The method according to claim 1, wherein both the first content and the second content are associated with the first key word.

3. The method according to claim 1, wherein the method further comprises:

receiving a second user operation performed on the first search result in the first interface;

displaying the first web page;

receiving a third user operation;

generating a second card set in response to the third user operation, wherein the second card set comprises a second card, the first card comprises third content and fourth content, and both the third content and the fourth content are content of the first web page; and

displaying a third interface, wherein the third interface comprises the second card.

4. The method according to claim 3, wherein the method further comprises:

receiving a selection operation performed by the user on the first web page;

obtaining first information based on the selection operation;

receiving a fourth user operation;

generating a third card in response to the fourth user operation, wherein the third card is a card in the second card set, the third card comprises fifth content and sixth content, both the fifth content and the sixth content are content of the first web page, and both the fifth content and the sixth content are associated with the first information; and

displaying a fourth interface, wherein the fourth interface comprises the third card.

5. The method according to claim 1, wherein the first card set further comprises a fourth card, the first card comprises content of a first type, the fourth card comprises content of a second type, and the first type is different from the second type.

6. The method according to claim 1, wherein the generating a first card set comprises:

receiving a fifth user operation;

in response to the fifth user operation, selecting the first search result and the second search result from the search result set; and

generating the first card set based on the first search result and the second search result.

7. The method according to claim 1, wherein when a similarity between the first content and the first key word is greater than a similarity between the second content and the first key word, the first content is located before the second content; or

when the first search result is located before the second search result, the first content is located before the second content.

8. The method according to any one of claims 1 to 7, wherein after the displaying a second interface, the method further comprises:

displaying a fifth interface, wherein the fifth interface comprises a first control, the fifth interface is a desktop of the electronic device, a leftmost screen, or a favorites page of a first application, and the first control is associated with the first card set;

receiving a sixth user operation performed on the first control; and

displaying a sixth interface, wherein the sixth interface comprises a fifth card in the first card set.

9. The method according to any one of claims 1 to 7, wherein the method further comprises:

receiving a seventh user operation performed on the first content in the second interface; and

displaying the first web page.

10. The method according to any one of claims 1 to 7, wherein the method further comprises:

receiving an eighth user operation performed on the first card in the second interface; and
deleting the first card in response to the eighth user operation; or
receiving a ninth user operation performed on the first content in the second interface; and
deleting the first content in response to the ninth user operation.

11. The method according to any one of claims 1 to 7, wherein the method further comprises:

receiving a tenth user operation performed on the first content in the second interface;
modifying the first content to seventh content in response to the tenth user operation; and
displaying the seventh content in the first card.

12. The method according to any one of claims 1 to 7, wherein the first content in the first card is located before the second content, and the method further comprises:

receiving an eleventh user operation performed on the first content in the second interface;
adjusting display positions of the first content and the second content in the first card in response to the eleventh user operation; and
displaying the adjusted first card, wherein the first content in the adjusted first card is located after the second content.

13. The method according to any one of claims 1 to 7, wherein the first card set further comprises a sixth card; and the method further comprises:

receiving a twelfth user operation performed on the first content in the second interface; and
moving the first content from the first card to the sixth card in response to the twelfth user operation, wherein in response to the twelfth user operation, the first card does not comprise the first content, and the sixth card comprises the first content.

14. The method according to any one of claims 1 to 7, wherein the first card set further comprises a seventh card; and the method further comprises:

receiving a thirteenth user operation performed on the first card in the second interface; and
combining the first card and the seventh card into an eighth card in response to the thirteenth user operation, wherein the eighth card comprises content in the first card and content in the seventh card.

15. The method according to any one of claims 1 to 7, wherein the method further comprises:

receiving a fourteenth user operation;
displaying a seventh interface, wherein the seventh interface comprises content of a card in the first card set;
receiving a fifteenth user operation performed on the seventh interface;
obtaining eighth content comprised in a ninth card in the first card set based on the fifteenth user operation;
receiving a sixteenth user operation;
generating a tenth card in response to the sixteenth user operation, wherein the tenth card is a card in the first card set, and the tenth card comprises the eighth content; and
displaying an eighth interface, wherein the eighth interface comprises the tenth card.

16. A search method, applied to an electronic device, wherein the method comprises:

displaying a first web page;
obtaining first information related to the first web page, wherein the first information is a first key word used for searching for the first web page, or the first information is information obtained based on a selection operation performed by a user on the first web page;
receiving a first user operation;
generating a first card set in response to the first user operation, wherein the first card set comprises a first card, the first card comprises first content and second content, both the first content and the second content are content of the first web page, and both the first content and the second content are associated with the first information; and

displaying a first interface after the first user operation, wherein the first interface comprises the first card.

17. The method according to claim 16, wherein the displaying a first web page comprises:

obtaining the first key word entered by the user;
sending a first search request to a network device, wherein the first search request comprises the first key word;
receiving a search result set that is sent by the network device based on the first search request;
displaying a second interface, wherein the second interface comprises the search result set, the search result set comprises a first search result and a second search result, the first search result is related to the first web page, and the second search result is related to a second web page;
receiving a second user operation performed on the first search result; and
displaying the first web page in response to the second user operation.

18. The method according to claim 16, wherein when the first information is the information obtained based on the selection operation performed by the user on the first web page, the first information comprises at least one of a text, a picture, audio, and a video in the first web page.

19. The method according to claim 18, wherein when the first information comprises the at least one of the text, the picture, the audio, and the video in the first web page, the first card set further comprises a second card, the first card comprises content of a first type, the second card comprises content of a second type, and the first type is different from the second type.

20. The method according to claim 16, wherein when a similarity between the first content and the first information is greater than a similarity between the second content and the first information, the first content in the first card is located before the second content; or
when the first content in the first web page is located before the second content, the first content in the first card is located before the second content.

21. The method according to any one of claims 16 to 20, wherein after the displaying a first interface, the method further comprises:

displaying a third interface, wherein the third interface comprises a first control, the third interface is a desktop of the electronic device, a leftmost screen, or a favorites page of a first application, and the first control is associated with the first card set;
receiving a third user operation performed on the first control; and
displaying a fourth interface, wherein the fourth interface comprises a third card in the first card set.

22. The method according to any one of claims 16 to 20, wherein the method further comprises:

receiving a fourth user operation performed on the first content in the first interface; and
displaying the first web page.

23. The method according to any one of claims 16 to 20, wherein the method further comprises:

receiving a fifth user operation performed on the first card in the first interface; and
deleting the first card in response to the fifth user operation; or
receiving a sixth user operation performed on the first content in the first interface; and
deleting the first content in response to the sixth user operation.

24. The method according to any one of claims 16 to 20, wherein the method further comprises:

receiving a seventh user operation performed on the first content in the first interface;
modifying the first content to third content in response to the seventh user operation; and
displaying the third content in the first card.

25. The method according to any one of claims 16 to 20, wherein the first content in the first card is located before the second content, and the method further comprises:

receiving an eighth user operation performed on the first content in the first interface;
adjusting display positions of the first content and the second content in the first card in response to the eighth user operation; and
displaying the adjusted first card, wherein the first content in the adjusted first card is located after the second content.

26. The method according to any one of claims 16 to 20, wherein the first card set further comprises a fourth card; and the method further comprises:

receiving a ninth user operation performed on the first content in the first interface; and
moving the first content from the first card to the fourth card in response to the ninth user operation, wherein in response to the ninth user operation, the first card does not comprise the first content, and the fourth card comprises the first content.

27. The method according to any one of claims 16 to 20, wherein the first card set further comprises a fifth card; and the method further comprises:

receiving a tenth user operation performed on the first card in the first interface; and
combining the first card and the fifth card into a sixth card in response to the tenth user operation, wherein the sixth card comprises content in the first card and content in the fifth card.

28. The method according to any one of claims 16 to 20, wherein the method further comprises:

receiving an eleventh user operation;
displaying a fifth interface, wherein the fifth interface comprises content of a card in the first card set;
receiving a twelfth user operation performed on the fifth interface;
obtaining fourth content comprised in a seventh card in the first card set based on the twelfth user operation;
receiving a thirteenth user operation;
generating an eighth card in response to the thirteenth user operation, wherein the eighth card is a card in the first card set, and the eighth card comprises the fourth content; and
displaying a sixth interface, wherein the sixth interface comprises the eighth card.

29. An electronic device, comprising a transceiver, a processor, and a memory, wherein the memory is configured to store a computer program, and the processor invokes the computer program to perform the method according to any one of claims 1 to 28.

30. A computer storage medium, wherein the computer storage medium stores a computer program, and when the computer program is executed by a processor, the method according to any one of claims 1 to 28 is implemented.

**Search system 10**

200

100

FIG. 1A

Search system 10

Obtain a search result (a plurality of web pages)

Processing
module 202

Communication
module 201

Network device 200

Search request          Search result

Electronic device 100

Communication
module 103

Processing module 102

Search
key
word

Search result

Search
module

Input
module
101

Search result

Card set
obtaining
request

Extraction
module

Content of
at least one
web page

Semantic
matching
module

Content
related to
the key
word

Card
generation
module

Card set

Output
module
104

Associated content
obtaining module

Selected content and associated content

Selected
content

Receive an
instruction entered
by a user

Card set

1. Output the search result
2. Output the card set

Save the card set

Storage
module 105

Display an entry for
secondary loading of
the card set

Quick entry
106

FIG. 1B

Electronic device 100

FIG. 2A

Electronic device 100

| Application layer | Camera | Calender | Music | Navigation | Messages |
|---|---|---|---|---|---|
| | Search | Gallery | Leftmost screen | Browser | ... |

| Application framework layer | Window manager | Content provider | Phone manager | Resource manager |
|---|---|---|---|---|
| | Notification manager | View system | ... | |

| System library | Surface manager | Three-dimensional graphics processing library | Android runtime |
|---|---|---|---|
| | Two-dimensional graphics engine | Media library | ... |

| Kernel layer | Display driver | Camera driver | |
|---|---|---|---|
| | Audio driver | Sensor driver | ... |

FIG. 2B

FIG. 3

(A)    (B)

410

5G 5G 📶 📶 🛜 ▬ 8:00

411

**Xi'an travel route**

412

**Text card**

Hot travel routes are... —— 4121

Website 111  Source aaa —— 4121A

4122

Travel route: Xicang-Huimin Street...

⬅

Website 333  Source ccc

Scenic spot route 1: Shaanxi
History Museum-Drum Tower
and Bell Tower...

Website 222  Source bbb —— 4123

4123A

Slide
left ➡ ⸮ TO
FIG. 4(B)

4122A

● ○ ○ —— 413

⊕    **Save** —— 414

‹  ⌂  ☆  ▤  ⋮

415

FIG. 4(A)

420

**Xi'an travel route**

421

**Picture card**

Website 111  Source aaa — 4211A

4211

CONT.
FROM
FIG. 4(A)

Website 222
Source bbb — 4212A

4212

○ ● ○ — 422

Save

Slide left

TO FIG. 4(C)

FIG. 4(B)

CONT.
FROM
FIG. 4(B)

430

Xi'an travel route

431

Video card

Website 222  Source bbb

4311A

4311

Website 111  Source aaa

4312A

4312

432

Save

FIG. 4(C)

EP 4 546 169 A1

510

520

5G📶5G📶 📶  ▬ 8:00

🔍 Xi'an travel route    [Search]

Xi'an travel route map
Website 111 Source aaa ☑ ——511A
——511

Xi'an travel route-guide
Website 222  Source bbb ☐ ——512A
——512

Xi'an travel comprehensive guide
Website 333  Source ccc ☑ ——513A
——513

(Select all) (Display in a card) (Exit)

514    515    516

(A)

Tap the control 515 →

5G📶5G📶 📶  ▬ 8:00

⌄

**Xi'an travel route** ——521

**Text card**

Hot travel routes are... ——4121
Website 111  Source aaa ——4121A

Travel route: Xicang-Huimin Street... ——4122
Website 333  Source ccc ——4122A

● ○ ○

⊕   (Save)

< ⌂ ☆ ▤ ⋮

(B)

FIG. 5A

530

531

**Card personalized settings**

5311 — A type of a required card and a quantity of pieces of content included in the card may be set

5312 — Text card ☑ — 5312A

5312B — A maximum of [+] 3 [−] pieces of text content are included

5312C

Picture card ☑

5313 — A maximum of [+] 2 [−] pieces of picture content are included

Video card ☑

5314 — A maximum of [+] 2 [−] pieces of video content are included

5315 — Audio card ☐

5316 — Document card ☐

5317 — [ OK ]          [ Cancel ] — 5318

FIG. 5B

FIG. 6

EP 4 546 169 A1

(A)

FIG. 7A

(B)

**410**

Xi'an travel route

**Text card**

Hot travel routes are...
Website 111  Source aaa

Travel route: Xicang-Huimin
Street...
Website 333  Source ccc

Scenic spot route 1: Shaanxi
History Museum-Drum Tower and
Bell Tower...
Website 222  Source bbb

**412**

**413**

Save

Drag the control
412 from
bottom up

**700**

Xi'an travel route

**Picture card**

Website 111  Source aaa

Website 222  Source bbb

**421**

**701**

Save

EP 4 546 169 A1

FIG. 7B

EP 4 546 169 A1

410

412

Xi'an travel route

**Text card**

Hot travel routes are...
Website 111  Source aaa — 4121

Travel route: Xicang-Huimin Street...
Website 333  Source ccc — 4122

Scenic spot route 1: Shaanxi History Museum-Drum Tower and Bell Tower...
Website 222  Source bbb — 4123

Save

Touch and hold the control 412

800

412

Xi'an travel route

**Text card**

Hot travel routes are... — 810
Website 111  Source aaa — 4121

Travel route: Xicang-Huimin Street...
Website 333  Source ccc — 4122

Scenic spot route 1: Shaanxi History Museum-Drum Tower and Bell Tower...
Website 222  Source bbb — 4123

820 — OK    Cancel — 830

(A)          (B)

FIG. 8

FIG. 9

EP 4 546 169 A1

1000

412

4122

4123

**Xi'an travel route**

**Text card**

Travel route: Xicang-
Huimin Street...
Website 333   Source ccc

Scenic spot route 1: Shaanxi
History Museum-Drum Tower
and Bell Tower...
Website 222   Source bbb

OK   Cancel

(B)

Tap the control
810

800

412

810
4121

4122

4123

**Xi'an travel route**

**Text card**

Hot travel routes are...
Website 111   Source aaa

Travel route: Xicang-
Huimin Street...
Website 333   Source ccc

Scenic spot route 1: Shaanxi
History Museum-Drum Tower
and Bell Tower...
Website 222   Source bbb

OK   Cancel

(A)

FIG. 10

FIG. 11

EP 4 546 169 A1

1210 · 1220

**Xi'an travel route**

**Text card** — 412, 1211

Hot travel routes are...
Website 111 Source aaa — 4121

Travel route: Xicang-Huimin Street...
Website 333 Source ccc

Scenic spot route 1: Shaanxi History Museum-Drum Tower and Bell Tower...
Website 222 Source bbb

OK    Cancel

(A)

Drag the control 4121 to a right edge of a screen

**Xi'an travel route**

**Picture card** — 421

Hot travel routes are... — 4121
Website 111 Source aaa

Website 111 Source aaa — 4211

OK    Cancel

(B)

FIG. 12

410

5G 5G 8:00

∨

**Xi'an travel route**

412

**Text card**

Hot travel routes are...

Website 111  Source aaa

4121

Drag the control 412 to a right edge of the screen

Travel r...ng-Huimin Street...

Website 3...

TO
FIG. 13(B)

4122

Scenic spot route 1: Shaanxi History Museum-Drum Tower and Bell Tower...

Website 222  Source bbb

4123

● ○ ○

⊕  Save

< ⌂ ☆ ▤ ⋮

FIG. 13(A)

1310

5G 5G 🛜                                          ▬▬ 8:00

421

412

CONT.
FROM
FIG. 13(A)

⌄

**Xi'an travel route**

**Picture card**

**Text card**

Hot travel routes are...

Website 111   Source aaa

Travel route: Xicang-Huimin Street...

Website 333   Source ccc

Scenic spot route 1: Shaanxi History
Museum-Drum Tower and F
Tower...
Website 222   Source bbb

○  ●  ○

| OK | Cancel |

< ⌂ ☆ ▤ ⋮

Finger leaves the screen

TO
FIG. 13(C)

FIG. 13(B)

CONT.
FROM
FIG. 13(B)
~

1320

1321

Xi'an travel route

New card

4211

Website 111   Source aaa

TO
FIG. 13(D)    Slide up

Website 222   Source bb

4212

1322

OK          Cancel

FIG. 13(C)

1320

5G 5G 8:00

Xi'an travel route

1321

**New card**

Hot travel routes are...

Website 111  Source aaa

4121

Travel route: Xicang-Huimin Street...

Website 333  Source ccc

4122

CONT.
FROM
FIG. 13(C)

Scenic spot route 1: Shaanxi History
Museum-Drum Tower and Bell Tower...

Website 222  Source bbb

4123

● ○

OK          Cancel

FIG. 13(D)

1400

8:00

**Xi'an travel route**

**Customized card 1**

1410

1410A

Add content

⊕

Save

1420

(B)

Tap the
control 415

412

410

8:00

**Xi'an travel route**

**Text card**

Hot travel routes are...
Website 111   Source aaa

Travel route: Xicang-Huimin
Street...
Website 333   Source ccc

Scenic spot route 1: Shaanxi
History Museum–Drum Tower
and Bell Tower...
Website 222   Source bbb

Save

413

415

⊕

(A)

FIG. 14

1510

1512

1511

Customized card 1

OK

1513 — Text card

1513A

1514 — Picture card

1514A

1515 — Video card

1515A

Tap the control 1512

TO
FIG. 15(B)

FIG. 15(A)

1520

**Xi'an travel route**

1410

**Customized card 1**

Hot travel routes are...

Website 111   Source aaa

Travel route: Xicang-Huimin Street...

Website 333   Source ccc

Scenic spot route 1: Shaanxi History Museum-Drum Tower and Bell Tower...
Website 222   Source bbb

Website 111   Source aaa

Website 222   Source bbb

CONT. FROM FIG. 15(A)

1521A

1521B

1410A

Add content
⊕

Save

FIG. 15(B)

FIG. 16

FIG. 17A

FIG. 17B(A)

1730

421

Xi'an travel route

**Picture card**

4211

Website 111  Source
aaa

1731

CONT.
FROM
FIG. 17B(A)

4212

Website 222
bbb

OK          Cancel

Drag the control
4211 to a right
edge of the screen

TO
FIG. 17B(C)

FIG. 17B(B)

CONT.
FROM
FIG. 17B(B)

1740

**Xi'an travel route**

1410

**Customized card 1**

Hot travel routes are...

Website 111　Source aaa

4121

Website 111　Source aaa

4211

Add content
⊕

1410A

○　○　○　●

OK　　　Cancel

FIG. 17B(C)

FIG. 18

EP 4 546 169 A1

1910

5G 5G 📶 ▬ 8:00

‹ › ↻ sousuo.com

Enter search content    Search

Title 1

Tap the
control 1911 → TO
FIG. 19A(B)

Title 2

1911

‹   ⌂   ☆   ▤   ⋮

FIG. 19A(A)

1920

5G 5G 📶 📶 🛜 ▬ 8:00

1921

< **Favorites folder**

1922

Search

1922A ⊟ Xi'an travel route

🌐 Web page 1

CONT.
FROM
FIG. 19A(A)

🌐 Web page 2

🌐 Web page 3

< ⌂ ☆ ▤ ⋮

Tap the control 1922A

TO
FIG. 19A(C)

FIG. 19A(B)

CONT.
FROM
FIG. 19A(B)
~

410

**Xi'an travel route**

**Text card**

Hot travel routes are...

Website 111   Source aaa

Travel route: Xicang-Huimin Street...

Website 333   Source ccc

Scenic spot route 1: Shaanxi History
Museum-Drum Tower and Bell Tower...

Website 222   Source bbb

● ○ ○

⊕        Save

FIG. 19A(C)

FIG. 19B

2010

5G.ıl 5G.ıl 🛜                    ▨ 8:00

**8:00** Tuesday,
April 26                    ☀ 33°C
                              ⊙ Wuhan

2011A

2011

2011B

2011D

| | Xi'an travel route | Browser |

Text
card

| Hot travel routes are... | Travel route: Xicang-Huimin Street... | Scenic spot route 1: Shaanxi History Museum-Drum Tower and Bell Tower... | ⊙ |

2011C

Gallery            Browser            Music

Jan
15                    ⟨◈⟩

Calender            Navigation

♀  ●  ○

Phone            Messages            Camera

5 seconds
later  ⥂  TO
FIG. 20(B)

Tap the control 2011  ⥥
TO
FIG. 20(C)

FIG. 20(A)

2020

2011

8:00  Tuesday,  April 26

33°C
Wuhan

Xi'an travel route          Browser

2011C

Picture card

CONT.
FROM
FIG. 20(A)

Gallery          Browser          Music

Jan
15
Calender          Navigation

Phone          Messages          Camera

Slide left

TO
FIG. 20(D)

FIG. 20(B)

CONT.
FROM
FIG. 20(A)
~

410

**Xi'an travel route**

**Text card**

Hot travel routes are...

Website 111  Source aaa

Travel route: Xicang-Huimin Street...

Website 333  Source ccc

Scenic spot route 1: Shaanxi History
Museum-Drum Tower and Bell Tower...

Website 222  Source bbb

● ○ ○

Save

FIG. 20(C)

CONT.
FROM
FIG. 20(B)
~

2030

2011

5G .ıll   5G .ıll   📶                    🔋 8:00

**8:00**  Tuesday,          ☀        33°C
          April 26                   ◉ Wuhan

2031A

| ☰ | Wuhan travel route | Browser |

**Text card**

| Wuhan hot travel route:... | Hankou travel route:... | ⊙ |

2031B

Gallery            Browser            Music

Jan 15           Navigation
Calender

          ○    ●    ○

Phone            Messages            Camera

FIG. 20(D)

~2110

5G 5G 📶 📶 🛜                    🔋 8:00

👤    🔍 Search

🔲        🚈         ☑️        🔳

Scan    Passenger   Payment   Health code
         code        code

Application use                          ⦙

1 hour and 28 minutes

■ Browser  ■ Music  ☐ Other

Park
Address
XXX in XX district in
XX city in XX province       ⦙
Parking duration
Approximately 11 hours
and 25 minutes                  📍
Distance
Approximately 0.66 kilometers    **Navigation**

☰   Xi'an travel route          Browser

| **Text card** | Hot travel routes are... | Scenic spot route 1: Shaanxi History Museum-Drum Tower and Bell Tower... | ⊙ |

Tap the
control
2111A          →  TO
               FIG. 21(B)

1121 — 2111

2111A

Tap the control 2111   →   TO
FIG. 21(C)

FIG. 21(A)

2120

5G 5G 8:00

Search

Scan  Passenger code  Payment code  Health code

Application use

1 hour and 28 minutes

Browser  Music  Other

CONT. FROM FIG. 21(A)

Park
Address
XXX in XX district in
XX city in XX province
Parking duration
Approximately 11
hours and 25 minutes
Distance
Approximately 0.66 kilometers

**Navigation**

2111

Xi'an travel route  Browser

**Picture card**

FIG. 21(B)

CONT.
FROM
FIG. 21(A)

410

Xi'an travel route

Text card

Hot travel routes are...

Website 111  Source aaa

Travel route: Xicang-Huimin Street...

Website 333  Source ccc

Scenic spot route 1: Shaanxi History
Museum-Drum Tower and Bell Tower...

Website 222  Source bbb

● ○ ○

Save

FIG. 21(C)

2210

2211

Today

Xi'an travel
route

Yesterday

Tap the
control
2211

TO
FIG. 22(B)

Photos     Album     Moments     Discovery

FIG. 22(A)

2220

2221

Today

2221A        Xi'an travel route

CONT.
FROM
FIG. 22(A)

2221B

2221C

2222

Share    Edit    Delete    Picture    More
                          recognition

Tap the control 2222

TO
FIG. 22(C)

FIG. 22(B)

CONT.
FROM
FIG. 22(B)

410

**Xi'an travel route**

**Text card**

Hot travel routes are...

Website 111  Source aaa

Travel route: Xicang-Huimin Street...

Website 333  Source ccc

Scenic spot route 1: Shaanxi History
Museum-Drum Tower and Bell Tower...

Website 222  Source bbb

● ○ ○

Save

FIG. 22(C)

EP 4 546 169 A1

## (A)

320

5G III 5G III 🛜  ■ 8:00

🔍 Xi'an travel route     [Search]

Xi'an travel route map — 322
Website 111  Source aaa

Xi'an travel route-guide — 323
Website 222  Source bbb

Xi'an travel comprehensive guide — 324
Website 333  Source ccc

< ⌂ ☆ 🗐 ⋮ — 325

## Tap the control 322

## (B)

2300

5G III 5G III 🛜  ■ 8:00

🔍 Website 111 (Source aaa)  ↻

**Xi'an travel route map**

Hot travel routes are...

**Xi'an travel hot scenic spots**

The foregoing picture mainly shows...
You must go to the Mausoleum of the
First Qin Emperor when you go to
Xi'an...a ticket of the Mausoleum of the
First Qin Emperor is 120 yuan...a fare to
the Mausoleum of the First Qin Emperor
is 20 yuan...

< ⌂ ☆ 🗐 ⋮

2310

FIG. 23

2410

5G 📶 5G 📶 📶 🔋 8:00

**Xi'an travel route** ⌄ —— 2411

Xi'an travel route map    Website 111  Source aaa —— 2412

**Text card** —— 2413

Hot travel routes are... —— 2413A

Y~~ou must go to the Mausol~~ ~~he First~~ —— 2413B
Qin Emperor when you go t~~o~~ ~~icket~~
of the Mausoleum of the First ~~r is~~
120 yuan...a fare to the Mausol~~eum~~
First Qin Emperor is 20 yuan...

Slide left    TO
FIG. 24(B)

Xi'an hot scenic spots... —— 2413C

● ○ ○

⊕    Save

< ⌂ ☆ ▤ ⋮

FIG. 24(A)

2420

Xi'an travel route

Xi'an travel route map    Website 111...Source aaa

**Picture card**

2421

CONT.
FROM
FIG. 24(A)

Save

Slide left

TO
FIG. 24(C)

FIG. 24(B)

CONT.
FROM
FIG. 24(B)

2430

Xi'an travel route ⌄

Xi'an travel route map    Website 111  Source aaa

**Video card**

**Save**

FIG. 24(C)

2300

**5G** **5G** 📶 📶 🛜 🔋 8:00

🔍 Website 111 (Source aaa) ↻

### Xi'an travel route map

Hot travel routes are...

### Xi'an travel hot scenic spots

Tap the control
2330A

→ 𝄐 TO
FIG. 25A(B)

The foregoing picture mainly shows...

2330A

| Copy | Search | Save as a card | ▶ |

2330

You must go to the Mausoleum of First Qin Emperor
when you go Xi'an...a ticket of ...oleum of the
First Qin Emperor is 120 yuan...a ...Mausoleum
of the First Qin Emperor is 20 yuan...

2320

< ⌂ ☆

FIG. 25A(A)

2510

**Xi'an travel route** ⌄

2511 —— Xi'an travel route map  Website 111  Source aaa

2512 ——

**Customized card 2**

2512A —— | the Mausoleum of the First Qin Emperor | ☒ —— 2512D

CONT.
FROM  ⟩
FIG. 25A(A)

2512B

| a ticket of the Mausoleum of the First Qin Emperor is 120 yuan | ☒ —— 2512E

2512C —— | a fare to the Mausoleum of the First Qin Emperor is 20 yuan | ☒ —— 2512F

○ ○ ○ ● —— 2513

**OK**      **Cancel** —— 2515

2514

< ⌂ ☆ ▤ ⋮

Tap the control 2512D and
then tap the control 2514

TO
FIG. 25A(C)

FIG. 25A(B)

CONT.
FROM
FIG. 25A(B)
~

2520

5G 5G 📶 8:00

**Xi'an travel route** ⌄

Xi'an travel route map   Website 111  Source aaa

2512 — **Customized card 2**

a ticket of the Mausoleum of the First
Qin Emperor is 120 yuan,

2512G — a fare to the Mausoleum of the First
Qin Emperor is 20 yuan

○ ○ ○ ●

⊕   [ Save ]

< ⌂ ☆ ▤ ⋮

FIG. 25A(C)

2530

5G 5G 🛜 ▬ 8:00

**Xi'an travel route** ⌄

Xi'an travel route map    Website 111  Source aaa

2512

**Customized card 2**

2512B

a ticket of the Mausoleum of the First Qin Emperor is 120 yuan

2512C

a fare to the Mausoleum of the First Qin Emperor is 20 yuan

○  ○  ○  ●

⊕            Save

<  ⌂  ☆  ▤  ⋮

FIG. 25B

2540

5G ᵢₗₗ 5G ᵢₗₗ 🛜 ▬ 8:00

🔍 Website 111 (Source aaa) ↻

2512B

You must go to the Mausoleum of the First Qin
Emperor when you go to Xi'an...a ticket of the
Mausoleum of the First Qin Emperor is 120 yuan
... a fare to the Mausoleum of the First Qin
Emperor is 20 yuan...

2320

**Xi'an travel video**

◁   ⌂   ☆   ▤   ⋮

FIG. 25C

2300

Website 111 (Source aaa)

**Xi'an travel route map**

2340B

Hot travel routes are...

**Xi'an travel hot scenic spots**

Knuckle draws a
circle around the
control 2340A

TO
FIG. 26(B)

2340A

The foregoing picture mainly shows...　　2340C

You must go to the Mausoleum of the First Qin
Emperor when you go to Xi'an...a ticket of the
Mausoleum of the First Qin Emperor is 120 yuan...a
fare to the Mausoleum of the First Qin Emperor is
20 yuan...

FIG. 26(A)

2610

2611

2612

5G|| 5G|| 📶                    ■ 8:00

🔍    Website 111 (Source aaa)    ↻

**Xi'an travel route map**

Hot travel routes are...

**Xi'an travel hot scenic spots**

2612A

CONT.
FROM
FIG. 26(A)

2340A

The foregoing picture mainly shows...
You must go to the Mausoleum of the
First Qin Emperor when you go to
Xi'an...a ticket of the Mausoleum of the
First Qin Emperor is 120 yuan...a fare to
the Mausoleum of the First Qin Emperor
is 20 yuan...

2613C

2613B

2613A

2613

Share    Free graphic    Rectangle    Save as a card

Tap the control 2613C

TO
FIG. 26(C)

FIG. 26(B)

CONT.
FROM
FIG. 26(B)

2620

Xi'an travel route

Xi'an travel route map    Website 111  Source aaa

2512

**Customized card 2**

2512G

a ticket of the Mausoleum of the First
Qin Emperor is 120 yuan
a fare to the Mausoleum of the First Qin
Emperor is 20 yuan

2512H

**Xi'an travel hot
scenic spots**

2340B

2340A

The foregoing picture mainly
shows...

2340C

○  ○  ○  ●

OK          Cancel

FIG. 26(C)

2700

2714A

2717

Save to a card

Text card

Picture card

Video card

Customized card 2

New card

OK    Cancel

(B)

2710
2711
2712
2713
2714
2715
2716

Drag the control 2340A to a position of the control 2310

2300

Website 111 (Source aaa)

Xi'an travel route map

Hot travel routes are...

Xi'an travel hot scenic spots

The foregoing picture main... You must go to the Mausoleum of First Qin Emperor when you go to Xi'an...a ticket of the Mausoleum of the First Qin Emperor is 20 yuan...a fare to the Mausoleum of the First Qin Emperor is 20 yuan...

2340A

2310

(A)

FIG. 27A

**2810**

**2820**

5G 5G  📶  8:00

5G 5G  📶  8:00

Xi'an travel route ⌄

Xi'an travel route ⌄

Xi'an travel route map    Website 111  Source aaa

Xi'an travel route map    Website 111 Source aaa

2811 — **Text card**

2821 — **Picture card**

2512B — a ticket of the Mausoleum of the First Qin Emperor is 120 yuan

2340A —

2512C — a fare to the Mausoleum of the First Qin Emperor is 20 yuan

2340B — Xi'an travel hot scenic spots

2340C — The foregoing picture mainly shows...

● ○

○ ●

OK            Cancel

OK            Cancel

< ⌂ ☆ ☰ ⋮

< ⌂ ☆ ☰ ⋮

(A)

(B)

FIG. 27B

110

| Electronic device | Network device |
|---|---|

S101: Obtain a first search word entered by a user

S102: Send a first search request →

S103: Obtain a first web page set

← S104: Send the first web page set

S105: Display the first web page set

S106: Receive a first user operation

S107: Obtain a first content set from web page content included in the first web page set

S108: Generate a first card set based on the first content set

S109: Display the first card set

S110: Receive a second user operation

S111: Modify the first card set

S112: Save information about the first card set

S113: Display at least one entry control

S114: Receive a third user operation on a first entry control

S115: Display the first card set

FIG. 28

**First key word**

**Second content set**

**Text set**
| Text 1 |
| Text 2 |
| ⋮ |
| Text q |

**Picture set**
| Picture 1 |
| Picture 2 |
| ⋮ |
| Picture m |

**Video set**
| Video 1 |
| Video 2 |
| ⋮ |
| Video n |

→ **Vector model** →

**First feature vector**

$$(g_1, g_2, \ldots, g_{128})_p$$

**Second feature vector set**

**Text vector set**
$$(g_1, g_2, \ldots, g_{128})_{s_1}$$
$$(g_1, g_2, \ldots, g_{128})_{s_2}$$
⋮
$$(g_1, g_2, \ldots, g_{128})_{s_q}$$

**Picture vector set**
$$(g_1, g_2, \ldots, g_{128})_{t_1}$$
$$(g_1, g_2, \ldots, g_{128})_{t_2}$$
⋮
$$(g_1, g_2, \ldots, g_{128})_{t_m}$$

**Video vector set**
$$(g_1, g_2, \ldots, g_{128})_{r_1}$$
$$(g_1, g_2, \ldots, g_{128})_{r_2}$$
⋮
$$(g_1, g_2, \ldots, g_{128})_{r_n}$$

→ **Dot product calculation** → TO FIG. 29B

FIG. 29A

112

CONT.
FROM
FIG. 29A

**Similarity set**

**Text similarity set**

$h_{s_1}$

$h_{s_2}$

⋮

$h_{s_q}$

**Picture similarity set**

$h_{t_1}$

$h_{t_2}$

⋮

$h_{t_m}$

**Video similarity set**

$h_{r_1}$

$h_{r_2}$

⋮

$h_{r_n}$

**Threshold filtering**

**First content set**

**Related text set**

Text 1

Text 3

Text 4

**Related picture set**

Picture 1

Picture 2

**Related video set**

Video 1

Video 3

FIG. 29B

| Electronic device | Network device |
|---|---|

S201: Receive a fourth user operation on a first web page in a first web page set

S202: Request to obtain display data of the first web page

S203: Send first web page data

S204: Display the first web page based on the first web page data

S205: Receive a fifth user operation

S206: Obtain a third content set from content of the first web page

S207: Generate a second card set based on the third content set

S208: Display the second card set

S209: Receive a sixth user operation on first content in the first web page

S210: Obtain, from the content of the first web page, at least one piece of second content associated with the first content

S211: Display the second card set based on the first content and the at least one piece of second content

S212: Save information about the second card set

FIG. 30

# INTERNATIONAL SEARCH REPORT

| | International application No. |
|---|---|
| | **PCT/CN2023/100894** |

| A. | CLASSIFICATION OF SUBJECT MATTER |
|---|---|

G06F16/9538(2019.01)i; G06F16/9535(2019.01)n

According to International Patent Classification (IPC) or to both national classification and IPC

| B. | FIELDS SEARCHED |
|---|---|

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS, CNTXT, VEN, USTXT, CNKI, IEEE: 搜索, 卡片, 文字, 图片, 抽取, 集合, 收藏, 合并, search, card, text, picture, extract, collection, merge

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113536157 A (ALIBABA GROUP HOLDING LTD.) 22 October 2021 (2021-10-22) description, paragraphs 0074-0103, paragraph 0110, and paragraphs 0143-0144 | 1-30 |
| A | CN 104156405 A (BAIDU ONLINE NETWORK TECHNOLOGY (BEIJING) CO., LTD.) 19 November 2014 (2014-11-19) entire document | 1-30 |
| A | CN 105630908 A (BEIJING QIHOO TECHNOLOGY CO., LTD. et al.) 01 June 2016 (2016-06-01) entire document | 1-30 |
| A | US 2012166973 A1 (MICROSOFT CORP.) 28 June 2012 (2012-06-28) entire document | 1-30 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 July 2023** | **24 July 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/100894**

| Patent document cited in search report | | | Publication date (day/month/year) | Patent family member(s) | | | Publication date (day/month/year) |
|---|---|---|---|---|---|---|---|
| CN | 113536157 | A | 22 October 2021 | None | | | |
| CN | 104156405 | A | 19 November 2014 | JP | 2016531341 | A | 06 October 2016 |
| | | | | EP | 3118752 | A1 | 18 January 2017 |
| | | | | BR | 102015000664 | A2 | 21 June 2016 |
| | | | | US | 2015261834 | A1 | 17 September 2015 |
| | | | | WO | 2015135353 | A1 | 17 September 2015 |
| | | | | KR | 20150106320 | A | 21 September 2015 |
| | | | | WO | 2015135354 | A1 | 17 September 2015 |
| | | | | EP | 2919134 | A1 | 16 September 2015 |
| | | | | US | 2016371344 | A1 | 22 December 2016 |
| | | | | CN | 103886044 | A | 25 June 2014 |
| CN | 105630908 | A | 01 June 2016 | None | | | |
| US | 2012166973 | A1 | 28 June 2012 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210724383